# EUROPÄISCHE PATENTANMELDUNG

(11) **EP 4 529 083 A1**
(43) Veröffentlichungstag der Anmeldung: **26.03.2025**
(21) Anmeldenummer: 24201371.2
(22) Anmeldetag: 19.09.2024
(51) Int. Cl.: H04L 9/32, H04L 9/08, H04L 9/06, G06F 7/58, H10F 39/00, H10F 71/00, H10F 30/225

(54) **MOBILE SICHERHEITSVORRICHTUNG**

(30) Priorität: 20.09.2023 DE 102023125543; 26.09.2023 LU 505175; 26.09.2023 DE 102023126115; 26.09.2023 DE 102023126167; 26.09.2023 EP 23199793
(71) Anmelder: Elmos Semiconductor SE, 44227 Dortmund (DE)
(72) Erfinder: ROTTER, Thomas, 91077 Neunkirchen am Brand (DE); KÖLBEL, Julia, 44137 Dortmund (DE)
(74) Vertreter: Gulde & Partner

(57) **Zusammenfassung**

Die vorliegende Erfindung bezieht sich auf das Gebiet der Sicherheit von Computer-Firmware, insbesondere im Bereich des sogenannten Basic Input and Output System ("BIOS") in allgemeinen Computersystemen, wie z. B. Arbeitsplatzcomputern (Personal Computer, "PCs").

Gegenstand der vorliegenden Erfindung ist ein Verschlüsselungs- und Authentifizierungs-Kommunikationsvorrichtung zum Herstellen einer sicheren Kommunikationsverbindung für Daten, die über ein Kommunikationsnetz zwischen einem von mehreren entfernten Rechnersystemen und einem Rechnersystem eines Benutzers ausgetauscht werden, wobei die Vorrichtung umfasst: Computerverarbeitungsmittel, wobei die Computerverarbeitungsmittel den Aufbau der sicheren Kommunikationsverbindung steuern; eine Verschlüsselungseinrichtung, wobei die Verschlüsselungseinrichtung elektrisch mit der Computerverarbeitungseinrichtung verbunden ist, wobei die Verschlüsselungseinrichtung Daten mittels Zufallszahlen eines Quantenzufallsgenerators verschlüsselt, die von dem Computersystem des Benutzers an eines der mehreren entfernten Computersysteme übertragen werden, und Daten entschlüsselt, die von einem der mehreren entfernten Computersysteme durch das Computersystem des Benutzers empfangen werden; Authentifizierungsmittel, wobei die Authentifizierungsmittel elektrisch mit den Computerverarbeitungsmitteln verbunden sind und die Authentifizierungsmittel gegenüber einem der mehreren entfernten Computersysteme bestätigen, dass das Gerät autorisiert ist; Netzwerkschnittstellenmittel, wobei die Netzwerkschnittstellenmittel elektrisch mit den Computerverarbeitungsmitteln verbunden sind, wobei die Netzwerkschnittstellenmittel eine mit dem Kommunikationsnetz kompatible Datenschnittstelle einrichten, um der Vorrichtung zu ermöglichen, Daten über das Kommunikationsnetz zu senden und zu empfangen.

## Beschreibung

### Gegenstand der Erfindung

Die vorliegende Erfindung betrifft eine mobile und vollständige Sicherheitsvorrichtung mit einer Netzkommunikationsschnittstelle, die Verschlüsselungs- und Authentifizierungsfunktionen zum Schutz von Daten und zur Beschränkung des Zugangs auf autorisierte Benutzer bietet. Die Vorrichtung kann vom Benutzer in einer Tasche oder einem Portemonnaie getragen werden.

### Technologischer Hintergrund

Die rasche Zunahme der verteilten Datenverarbeitung hat zu einem enormen Anstieg der Übertragung sensibler und gefährdeter Daten in Computernetzen geführt. Diese Zunahme privater Daten auf den Kommunikationsleitungen hat dazu geführt, dass die Netzinformatik erheblichen Risiken ausgesetzt ist. Zu diesen Risiken gehört die Möglichkeit für Unbefugte, sich Zugang zu Netzen oder Computern zu verschaffen und für Abhörer, geschützte Daten auf der Kommunikationsleitung zu lesen. Gleichzeitig besteht ein erhöhter Bedarf an kompakten und praktischen Kommunikationsgeräten, die mit Laptops, Smartphones und anderen persönlichen Computern verwendet werden können.

"Datenverschlüsselung" wird hier definiert als eine Technik zum Schutz der Vertraulichkeit von Daten, um sicherzustellen, dass sie nicht an Unbefugte weitergegeben oder offengelegt werden. "Geräteauthentifizierung" wird hier definiert als eine Technik zur Identifizierung und Kontrolle des Zugangs zu einem Netz oder System durch ein bestimmtes Gerät oder einen "Token". "Benutzerauthentifizierung" wird hier definiert als eine Technik, die der Geräteauthentifizierung ähnlich ist, mit dem Unterschied, dass der Benutzer anstelle eines Geräts identifiziert wird. "Nachrichtenauthentifizierung" wird hier definiert als eine Technik, die vor der unentdeckten Veränderung von Daten während der Übertragung oder vor der Fälschung von Daten schützt. Jede der vorgenannten Techniken kann entweder auf der Kryptographie mit geheimem Schlüssel (symmetrischer Schlüssel) oder mit öffentlichem Schlüssel beruhen. Die Fähigkeit, Kryptographie durchzuführen, wird hier einfach als "Verschlüsselung" bezeichnet.

Die Datenverschlüsselung wurde in der Vergangenheit bereits verwendet, wie in US 3 962 539 A beschrieben. Die Datenauthentifizierung, die in der Vergangenheit im Bankwesen und anderen Finanzbranchen eingesetzt wurde, ist eine Technik zur Erkennung jeglicher Veränderung der übermittelten Daten.

Die Idee der Authentifizierung des Benutzers durch etwas, das der Benutzer besitzt, wie z. B. eine Chipkarte, oder etwas, das der Benutzer kennt, wie z. B. eine persönliche Identifikationsnummer (PIN) oder ein biologisches Merkmal des Benutzers, wie z. B. ein Fingerabdruck, ist in der Technik bekannt. Diese Methoden bieten jedoch kein vollständiges Sicherheitssystem für die Kommunikation, das vom Benutzer mitgeführt werden kann.

US 4 546 213 A beschreibt ein Sicherheitsgerät, das jedoch weder effiziente Verschlüsselungs- und Authentifizierungsfunktionen bietet noch als "Token" zur Kontrolle des Zugangs zu einem Computernetz verwendet werden kann. Es sind mehrere Methoden zur "Authentifizierung" des Benutzers anhand von "biologischen" Merkmalen bekannt, wie z. B. Fingerabdruckleser oder Netzhaut-(Augen-)Scanner. Zum Beispiel wird in US 5 153 918 A ein Sicherheitssystem für die Datenkommunikation zur Sicherung des Zugangs zu einem Computersystem beschrieben, das die Stimmerkennung als Zugangskontrollmedium verwendet. In ähnlicher Weise beschreibt US 4 805 222 A die Verwendung von Tastendruckdynamik zur Identifizierung des Benutzers. Leider haben sich diese Methoden für den normalen kommerziellen Einsatz als teuer erwiesen und wurden von potenziellen Benutzern als unbequem oder aufdringlich empfunden.

US 4 868 376 A enthält ein Mittel zur Authentifizierung eines Benutzers mit einer persönlichen Identifikationsnummer (PIN). Diese Sicherheitsvorrichtung befindet sich in einem tragbaren Gehäuse, z. B. einer Smartcard, erfordert jedoch den Anschluss an ein nicht tragbares Lesegerät und enthält keine Mittel für eine direkte Verbindung mit einem Kommunikationsnetz. US 5 301 234 A beschreibt eine Funktelefonanlage für den Vorauszahlungsbetrieb mit Sicherheitsschutz unter Verwendung von Verschlüsselung zur Authentifizierung des Geräts, aber es wird lediglich die Verwendung des Geräts in Verbindung mit der Bezahlung von Diensten für Funktelefongeräte offenbart - nicht die digitale Kommunikationssicherheit mit Datenverschlüsselung. US 5 239 294 A beschreibt ein Mittel zur Authentifizierung des Geräts eines Teilnehmers, um den Zugang zu zellularen Telekommunikationsnetzen zu kontrollieren, ist aber speziell auf die Verwendung mit Funktelekommunikationssystemen ausgerichtet.

Die DE 10 2022 125 568 A1 betrifft eine Datenverarbeitungsvorrichtung umfassend eine integrierte Schaltung, die einen Datenprozessor und einen nichtflüchtigen Speicher enthält, der mindestens einen Sicherheitscode speichert. Ein erster Speicher außerhalb der integrierten Schaltung speichert Daten, wobei die Daten in einem ersten Format kryptographisch geschützt sind. Ein zweiter Speicher außerhalb des integrierten Schaltkreises dient zur Speicherung von Daten. Die Vorrichtung ist so eingerichtet, dass sie Daten vom ersten Speicher über die integrierte Schaltung zum zweiten Speicher überträgt, damit der Datenprozessor vom zweiten Speicher aus darauf zugreifen kann. Die integrierte Schaltung ist so angeordnet, dass sie während der Übertragung die aus dem ersten Speicher gelesenen Daten mit Hilfe eines in dem nichtflüchtigen Speicher gespeicherten Sicherheitscodes validiert. Wenn die Daten validiert sind, wird ein kryptografischer Schutz in einem zweiten Format auf die validierten Daten angewendet, wobei ein in dem nichtflüchtigen Speicher gespeicherter Sicherheitscode verwendet wird. Die geschützten Daten werden in dem zweiten Speicher in dem zweiten Format gespeichert. Die Offenbarung richtet sich auf einen Rechner, der zumindest einen quantenprozessbasierenden mikrointegierbaren Generator für echte Zufallszahlen als Zufallszahlengenerator mit hoher Zufallsbitausgangsrate insbesondere für die Verschlüsselung umfasst. Der DE 10 2022 125 569 A1, DE 10 2022 125 570 , DE 10 2022 125 571 A1A1, DE 10 2022 125 572 A1, DE 10 2022 125 573 A1 sowie der unveröffentlichten Anmeldung mit der Anmeldenummer DE 10 2022 125 574.3 können ebenfalls entsprechende Vorrichtungen entnommen werden.

Es ist daher ein Ziel der vorliegenden Erfindung, die mit den Systemen und Vorrichtungen des Standes der Technik verbundenen Mängel zu überwinden. Diese Ziele werden dem Fachmann aus der folgenden Beschreibung bekannt sein.

### Beschreibung der Erfindung

Die vorliegende Erfindung ist eine transportable Verschlüsselungs- und Authentifizierungs-Kommunikationsvorrichtung, die vorzugsweise Verschlüsselungsmittel zum Verschlüsseln und Entschlüsseln von Daten, die von der Vorrichtung empfangen werden, Authentifizierungsmittel zum Authentifizieren der Vorrichtung und der Verwendung der Vorrichtung durch einen Benutzer, Netzwerk-Schnittstellenmittel zum Übertragen der Daten und zum Empfangen der Daten über einen Datenübertragungspfad (z. B. über Kommunikationsnetze wie eine Internetleitung) und Computerverarbeitungsmittel zum Herstellen einer sicheren Kommunikationsverbindung zwischen einem Computersystem eines Benutzers und einem entfernten Computersystem durch Steuern des Betriebs der Verschlüsselungs-, Authentifizierungs- und Netzschnittstellenmittel der vorliegenden Erfindung. Es ist zu beachten, dass die Verschlüsselungseinrichtung, die von der Computerverarbeitungseinrichtung gesteuert wird, im Folgenden abwechselnd als Verschlüsseler bezeichnet werden kann, während die Authentifizierungseinrichtung, die von der Computerverarbeitungseinrichtung gesteuert wird, als Authentifizierer bezeichnet werden kann. In ähnlicher Weise kann das Netzwerkschnittstellenmittel, die von der Computerverarbeitungseinrichtung gesteuert wird, als Netzwerkschnittstelle, Netzwerkschnittstellegerät oder Modem bezeichnet werden. Dementsprechend können der Verschlüsseler, der Authentifikator und die Netzwerkschnittstelle gemeinsam in einem kompakten Gehäuse untergebracht werden, wodurch die Vorrichtung bequem und diskret am Körper des Benutzers transportiert werden kann, beispielsweise in der Tasche oder Handtasche des Benutzers.

Darüber hinaus umfasst das Gerät mindestens einen Anschluss für die Verbindung mit einem Datenübertragungspfad und mindestens einen Anschluss für die Verbindung mit einem Computerkommunikationsanschluss. Es versteht sich von selbst, dass der Computerkommunikationsanschluss eine beliebige Steckernorm sein kann, die mit dem Computersystem des Benutzers kompatibel ist, und in einer besonderen Ausführungsform, die hier beschrieben wird, ein PCMCIA-Anschluss (Personal Computer Memory Card International Association) sein kann. Es kann sich jedoch um jeden hierfür geeigneten Computerkommunikationsanschluss wie USB (Universal Serial Bus), Firewire oder Thunderbold handeln. Auch kann eine entsprechende Schnittstelle kabellos ausgeführt sein, beispielsweise mittels Bluetooth, Wi-Fi Direct, NFC (Near Field Communication), Zigbee, Z-Wave oder UWB (Ultra-Wideband).

Der Authentifikator ist vorzugsweise ein kryptographisches Mittel, das den autorisierten Benutzer durch eine autorisierte Benutzerkennung wie einen Nachrichtenauthentifizierungscode oder eine digitale Signatur identifiziert. Der Verschlüsseler ist vorzugsweise ein Mittel zur Verschlüsselung der vom Benutzer übertragenen oder empfangenen Daten.

Wie später noch erläutert wird, kann die erfindungsgemäße Vorrichtung zum Aufbau einer sicheren Kommunikation über Kommunikationsnetze mit unterschiedlichen Protokollen und Standards verwendet werden. Beispielsweise kann die Netzwerkschnittstelle vorzugsweise eine Datenschnittstelle für die Datenübertragung über ein Weitbereichsnetz wie das Internet bereitstellen. Alternativ dazu kann die Netzwerkschnittstelle eine mit einem lokalen Netzwerk (LAN) kompatible Datenschnittstelle bereitstellen.

Das tragbare Verschlüsselungs- und Authentifizierungs-Kommunikationsgerät verwendet vorzugsweise ein am Gehäuse angebrachtes Tastenfeld zur Eingabe einer persönlichen Identifikationsnummer (PIN). Der Authentifikator kann auch durch Einstecken einer Smartcard bedient werden, die eine PIN oder einen Code zur eindeutigen Identifizierung des Benutzers enthält.

Darüber hinaus kann das tragbare Verschlüsselungs- und Authentifizierungs-Kommunikationsgerät der vorliegenden Erfindung auch ein Display enthalten, das den Benutzer auffordert, eine PIN über die Tastatur einzugeben oder eine Smartcard einzuführen, und das dem Benutzer entsprechende Systemstatusanzeigen anzeigen kann.

Darüber hinaus kann die erfindungsgemäße Vorrichtung erste und zweite Anzeigen, vorzugsweise in Form von Leuchtdioden, enthalten, die dem Benutzer der Vorrichtung den Systemzustand anzeigen.

Vorzugsweise enthält das kompakte Verschlüsselungs- und Authentifizierungs-Kommunikationsgerät Mittel zur Erkennung der Veränderung von gesendeten oder empfangenen Nachrichten durch Nachrichten-Authentifizierungscodes oder digitale Signaturen.

Außerdem können die für die Verschlüsselung und die für die Authentifizierung verwendeten Schlüssel vorzugsweise von einem entfernten Schlüsselverwaltungszentrum oder von einem anderen autorisierten Verschlüsselungsgerät geändert werden.

Durch die vorliegende Erfindung wird ein komplettes Sicherheitskommunikationsgerät bereitgestellt, das als Token zur elektronischen Identifizierung eines Benutzers dient, insbesondere in Verbindung mit der Verwendung einer PIN (vorzugsweise über eine Tastatur oder eine Smartcard eingegeben), um die Nutzung durch andere zu verhindern.

Bei der vorliegenden Erfindung handelt es sich um ein Gerät, das die Verwendung von Verschlüsselungs- und Authentifizierungstechniken eindeutig mit einem Kommunikationsschnittstellengerät, wie z. B. einer Netzwerkkarte oder einem GSM-Modul, verbindet. Das Gerät ist tragbar und kann ein Zugangsmittel (z. B. ein Token) ersetzen, um den Benutzer zu identifizieren und die Kommunikation vor unerwünschtem Abhören zu schützen.

Durch die vorliegende Erfindung wurde eine Architektur geschaffen, die den Stand der Technik durch die Integration von Sicherheits- und Schnittstellenfunktionen in einem einzigen tragbaren Gerät, das als Zugangskontrollmittel für einen anderen Computer oder ein Netzwerk verwendet werden kann, erheblich verbessert.

Diese Vorteile wurden dadurch erreicht, dass ein hochsicherer Nachrichtenverschlüsseler und ein Authentifikator in einem tragbaren Gehäuse untergebracht sind. Dieses Gerät dient als Zugangsberechtigung, die einer Person zugewiesen und von dieser leicht in einer Tasche oder einem Portemonnaie transportiert werden kann und diese Person gegenüber einem anderen kryptografischen Gerät eindeutig identifiziert.

Durch die vorliegende Erfindung entfallen separate physische Komponenten sowie Verkabelung und andere Hardware, die mit kryptographischen Kommunikationsgeräten verbunden sind. Folglich kann der vollständige Schutz der Kommunikationssicherheit für tragbare Computer wie Laptops und Notebooks bereitgestellt werden.

Darüber hinaus wird durch die vorliegende Erfindung der Betrieb und die Einrichtung ansonsten komplexer und anspruchsvoller Geräte erheblich vereinfacht. Dies wurde durch die Eliminierung von Konfigurations- und Verkabelungsanforderungen und Anpassungen erreicht, die normalerweise mit diskreten Netzwerk-, Verschlüsselungs- und Authentifizierungskomponenten verbunden sind.

Darüber hinaus muss die Kommunikation aufgrund der hier vorgestellten Architektur den entsprechenden kryptografischen Schutz durchlaufen, um dem Benutzer Zugang zu gewähren. Darüber hinaus kann der Schutz weder durch versehentliches Umgehen von Verbindungen zum Verschlüsselungsgerät noch durch bloße Nachlässigkeit umgangen werden. Darüber hinaus kann die kompakte Verschlüsselungs- und Authentifizierungsvorrichtung der vorliegenden Erfindung mit Computersystemen eingesetzt werden, ohne dass bestehende Softwareanwendungen, die auf den Computersystemen laufen, geändert werden müssen.

Andere und weitere Objekte und Vorteile der vorliegenden Erfindung werden von den Fachleuten auf dem Gebiet der Betrachtung der folgenden Beschreibung zusammen mit den Zeichnungen erkannt werden, und der Umfang der Erfindung wird in den beigefügten Ansprüchen dargelegt werden.

Insbesondere betrifft die vorliegenden Erfindung eine Verschlüsselungs- und Authentifizierungs-Kommunikationsvorrichtung zum Herstellen einer sicheren Kommunikationsverbindung für Daten, die über ein Kommunikationsnetz zwischen einem von mehreren entfernten Rechnersystemen und einem Rechnersystem eines Benutzers ausgetauscht werden, wobei die Vorrichtung umfasst: Computerverarbeitungsmittel (beispielsweise einen Prozessor zur Verarbeitung von Instruktionen und mindestens einen Speicher zum Vorhalten dieser Instruktionen sowie zum Speichern von Informationen), wobei die Computerverarbeitungsmittel den Aufbau der sicheren Kommunikationsverbindung steuern; eine Verschlüsselungseinrichtung, wobei die Verschlüsselungseinrichtung elektrisch mit der Computerverarbeitungseinrichtung verbunden ist, wobei die Verschlüsselungseinrichtung Daten mittels Zufallszahlen eines Quantenzufallsgenerators verschlüsselt, die von dem Computersystem des Benutzers an eines der mehreren entfernten Computersysteme übertragen werden, und Daten entschlüsselt, die von einem der mehreren entfernten Computersysteme durch das Computersystem des Benutzers empfangen werden; Authentifizierungsmittel, wobei die Authentifizierungsmittel elektrisch mit den Computerverarbeitungsmitteln verbunden sind und die Authentifizierungsmittel gegenüber einem der mehreren entfernten Computersysteme bestätigen, dass das Gerät autorisiert ist; Netzwerkschnittstellenmittel (beispielsweise einen zur Datenübertragung in einem Netzwerk eingerichteten Prozessor zur Verarbeitung von Instruktionen und mindestens einen Speicher zum Vorhalten dieser Instruktionen sowie zum Speichern von Informationen), wobei die Netzwerkschnittstellenmittel elektrisch mit den Computerverarbeitungsmitteln verbunden sind, wobei die Netzwerkschnittstellenmittel eine mit dem Kommunikationsnetz kompatible Datenschnittstelle einrichten, um der Vorrichtung zu ermöglichen, Daten über das Kommunikationsnetz zu senden und zu empfangen. Der Quantenzufallsgenerator kann dabei zur Schlüsselerzeugung benötigte Zufallszahlen bereitstellen, insbesondere kann der Quantenzufallsgenerator als Teil eines Schlüsselgenerators (Schlüsselquelle) ausgebildet sein.

Vorzugsweise umfassen die Authentifizierungsmittel ferner Mittel zur Authentifizierung des Benutzers gegenüber einem der mehreren entfernten Computersysteme.

Vorzugsweise umfasst die Vorrichtung ferner Dateneingabemittel, wobei die Dateneingabemittel elektrisch mit den Computerverarbeitungsmitteln verbunden sind, wobei die Dateneingabemittel es dem Benutzer ermöglichen, einen Identifikationsindikator in die Vorrichtung einzugeben, wobei die Benutzerauthentifizierungsmittel elektrisch mit dem Identifikationsindikator verbunden sind und den Benutzer damit entsprechend zu einem der entfernten Computersysteme autorisieren.

Vorzugsweise umfasst das Dateneingabemittel ein Tastenfeld, über das der Benutzer den Identifikationsindikator manuell eingibt, wobei das Tastenfeld bevorzugt in das kompakte Gehäuse der Vorrichtung integriert ist.

Vorzugsweise umfasst das Dateneingabemittel eine Smartcard und eine Smartcard-Schnittstelle und das Gehäuse der Vorrichtung enthält eine Smartcard-Aufnahme, wobei der Benutzer die Smartcard in die Smartcard-Aufnahme einführt und der Identifikationsindikator automatisch von der Smartcard gelesen und der Vorrichtung über die Smartcard-Schnittstelle, die operativ mit den Computerverarbeitungsmitteln verbunden ist, präsentiert wird.

Vorzugsweise umfasst die Vorrichtung ferner eine Anzeigeeinrichtung, wobei die Anzeigeeinrichtung betriebsmäßig mit der Computerverarbeitungseinrichtung gekoppelt ist und die Anzeigeeinrichtung den Benutzer auffordert, den Identifikationsindikator über die Dateneingabeeinrichtung einzugeben.

Vorzugsweise umfasst die Anzeigeeinrichtung eine Flüssigkristallmatrixanzeige, wobei die Flüssigkristallmatrixanzeige bevorzugt integral an dem kompakten Gehäuse der Vorrichtung angebracht ist.

Vorzugsweise umfassen die Authentifizierungsmittel ferner Mittel zur Authentifizierung bzw. Verifizierung der Integrität der über das Kommunikationsnetz übertragenen und empfangenen Daten.

Vorzugsweise das Kommunikationsnetz ein Datenprotokoll nach IEEE 802 Standard für die Datenkommunikation von über das Kommunikationsnetz gesendete und empfangene Daten einrichtet, wobei das Kommunikationsnetz vorzugsweise ein lokales Netz (LAN) ist und die Netzschnittstelle eine LAN-kompatible Datenschnittstelle für von über das Kommunikationsnetz übertragene und empfangene Daten einrichtet.

Vorzugswiese umfassen die Verschlüsselungseinrichtung und die Authentifizierungseinrichtung ferner eine Smartcard und eine Smartcard-Schnittstelle und das Gehäuse der Vorrichtung eine Smartcard-Aufnahme enthält, wobei die Smartcard-Schnittstelle elektrisch mit der Computerverarbeitungseinrichtung verbunden ist und die Smartcard in die Smartcard-Aufnahme eingeführt wird, wobei die Smartcard einen von mehreren Verschlüsselungs- und Authentifizierungsalgorithmen enthält und die Verschlüsselungs- und Authentifizierungsfunktionen in operativer Zusammenarbeit mit der Computerverarbeitungseinrichtung ausführt.

Vorzugsweise umfasst die Smartcard den Quantenzufallsgenerator.

Vorzugsweise umfassen die Netzwerkschnittstellenmittel mindestens einen ersten und einen zweiten Anschluss, wobei der erste Anschluss elektrisch mit dem Kommunikationsnetz und der zweite Anschluss elektrisch mit dem Computersystem des Benutzers verbunden ist.

Vorzugsweise umfasst die Vorrichtung ferner mindestens einen ersten und einen zweiten Anzeiger, wobei der erste und der zweite Anzeiger elektrisch mit den Computerverarbeitungsmitteln verbunden sind und den Betriebszustand der Vorrichtung anzeigen.

Vorzugsweise umfassen die Netzwerkschnittstellenmittel mindestens einen Verbinder, der über ein Kabel mit der Vorrichtung verbunden ist, und das Gehäuse ferner einen Schlitz umfasst, der in mindestens einer Seite des Gehäuses ausgebildet ist, wobei der Schlitz so ausgebildet ist, dass er gegenüberliegende Seiten umfasst, wobei mindestens eine der gegenüberliegenden Seiten eine Vielzahl von Vorsprüngen umfasst, wobei das Kabel in den Schlitz gefaltet ist und durch die Vielzahl von Vorsprüngen in dem Schlitz gehalten wird, wenn die Vorrichtung nicht in Gebrauch ist.

Vorzugsweise ermöglichen die Computerverarbeitungsmittel selektiv den Betrieb der Vorrichtung in einem Online-Modus oder einem Offline-Modus ermöglicht, wobei der Online-Modus es ermöglicht, dass die Daten von dem Computersystem des Benutzers, sobald sie über das Verschlüsselungsmittel verschlüsselt sind, zu dem Netzwerkschnittstellenmittel zur Übertragung auf dem Kommunikationsnetzwerk übertragen werden, und wobei der Online-Modus es auch ermöglicht, dass die Daten von einem der mehreren entfernten Computersysteme, sobald sie über das Verschlüsselungsmittel entschlüsselt sind, zu dem Computersystem des Benutzers übertragen werden, zu dem Computersystem des Benutzers übertragen werden, wobei die Offline-Betriebsart ermöglicht, dass die Daten von dem Computersystem des Benutzers, nachdem sie über die Verschlüsselungsmittel verschlüsselt wurden, zu dem Computersystem des Benutzers zur Speicherung und anschließenden Übertragung über das Kommunikationsnetz zurückgeführt werden, und wobei die Offline-Betriebsart auch ermöglicht, dass die Daten von einem der mehreren entfernten Computersysteme direkt zu dem Computersystem des Benutzers zur Speicherung und anschließenden Entschlüsselung über die Verschlüsselungsmittel übertragen werden.

Ein noch weiter Aspekt der vorliegenden Erfindung betrifft eine Verschlüsselungs- und Authentifizierungs-Kommunikationsvorrichtung zum Herstellen einer sicheren Verbindung für Daten, die über ein Kommunikationsnetz zwischen einem von mehreren entfernten Rechnersystemen und einem Rechnersystem eines Benutzers ausgetauscht werden, wobei die Vorrichtung umfassen kann: ein Computerverarbeitungsmittel, wobei das Computerverarbeitungsmittel den Aufbau der sicheren Kommunikationsverbindung steuert; eine Verschlüsselungseinrichtung, wobei die Verschlüsselungseinrichtung elektrisch mit der Computerverarbeitungseinrichtung verbunden ist, wobei die Verschlüsselungseinrichtung Daten mittels Zufallszahlen eines Quantenzufallsgenerators verschlüsselt, die von dem Computersystem des Benutzers an eines der mehreren entfernten Computersysteme übertragen werden, und Daten entschlüsselt, die von einem der mehreren entfernten Computersysteme durch das Computersystem des Benutzers empfangen werden; ein Authentifizierungsmittel, wobei das Authentifizierungsmittel elektrisch mit den Computerverarbeitungsmittel verbunden ist und das Authentifizierungsmittel gegenüber einem der mehreren entfernten Computersysteme bestätigen kann, dass das Gerät autorisiert ist; ein Netzwerkschnittstellenmittel, wobei das Netzwerkschnittstellenmittel elektrisch mit dem Computerverarbeitungsmittel verbunden ist, wobei das Netzwerkschnittstellenmittel eine mit dem Kommunikationsnetzwerk kompatible Datenschnittstelle einrichtet, um der Vorrichtung zu ermöglichen, Daten über das Kommunikationsnetzwerk zu senden und zu empfangen. Der Quantenzufallsgenerator kann dabei zur Schlüsselerzeugung benötigte Zufallszahlen bereitstellen, insbesondere kann der Quantenzufallsgenerator als Teil eines Schlüsselgenerators (Schlüsselquelle) ausgebildet sein.

Vorzugsweise kann das Authentifizierungsmittel ferner ein Mittel zur Authentifizierung des Benutzers gegenüber einem der mehreren entfernten Computersysteme umfassen.

Vorzugsweise kann die Vorrichtung ferner ein Dateneingabemittel umfassen, wobei das Dateneingabemittel elektrisch mit den Computerverarbeitungsmitteln verbunden ist, wobei das Dateneingabemittel es dem Benutzer ermöglichen kann, einen Identifikationsindikator (z. B. einen Identifikationscode) in die Vorrichtung einzugeben, wobei das Benutzerauthentifizierungsmittel elektrisch mit dem Identifikationsindikator verbunden ist und den Benutzer damit entsprechend gegenüber einem entfernten Computersystem autorisieren kann.

Vorzugsweise umfasst das Dateneingabemittel ein Tastenfeld, über das der Benutzer den Identifikationsindikator manuell eingeben kann. Vorzugsweise ist das Tastenfeld in ein kompaktes Gehäuse der Vorrichtung integriert.

Vorzugsweise kann das Dateneingabemittel eine Smartcard und eine Smartcard-Schnittstelle umfassen und das Gehäuse der Vorrichtung eine Smartcard-Aufnahme enthalten, wobei der Benutzer die Smartcard in die Smartcard-Aufnahme einführen und dadurch der Identifikationsindikator automatisch von der Smartcard gelesen und der Vorrichtung über eine Smartcard-Schnittstelle, die operativ mit dem Computerverarbeitungsmittel verbunden ist, präsentiert werden kann.

Vorzugsweise umfasst das Dateneingabemittel ferner eine Anzeigeeinrichtung, wobei die Anzeigeeinrichtung betriebsmäßig mit der Computerverarbeitungseinrichtung gekoppelt ist und die Anzeigeeinrichtung den Benutzer auffordert, den Benutzeridentifikationsindikator über die Dateneingabeeinrichtung einzugeben. Vorzugsweise umfasst die Anzeigeeinrichtung eine Flüssigkristallmatrixanzeige. Vorzugsweise ist die Flüssigkristallmatrixanzeige integral an dem kompakten Gehäuse der Vorrichtung angebracht. Vorzugsweise umfassen die Authentifizierungsmittel ferner Mittel zur Authentifizierung bzw. Verifizierung der Integrität der über das Kommunikationsnetz übertragenen und empfangenen Daten.

Vorzugsweise richtet das Netzwerkschnittstellenmittel ein Datenprotokoll nach IEEE 802 Standard für die Datenkommunikation über das Kommunikationsnetz gesendete und empfangene Daten ein. Vorzugsweise ist das Kommunikationsnetz ein lokales Netz (LAN) und das Netzwerkschnittstellenmittel kann eine LAN-kompatible Datenschnittstelle für über das Kommunikationsnetz übertragene und empfangene Daten einrichten.

Vorzugsweise umfasst die Verschlüsselungseinrichtung und die Authentifizierungseinrichtung ferner eine Smartcard und eine Smartcard-Schnittstelle und das Gehäuse der Vorrichtung kann eine Smartcard-Aufnahme enthalten, wobei die Smartcard-Schnittstelle elektrisch mit der Computerverarbeitungseinrichtung verbunden ist und die Smartcard in die Smartcard-Aufnahme eingeführt werden kann, wobei die Smartcard mindestens einen Verschlüsselungs- und Authentifizierungsalgorithmus enthält und die Verschlüsselungs- und Authentifizierungsfunktionen in operativer Zusammenarbeit mit der Computerverarbeitungseinrichtung ausführt. Vorzugsweise umfasst die Smartcard den Quantenzufallszahlengenerator.

Vorzugsweise umfasst das Netzwerkschnittstellenmittel mindestens einen ersten und einen zweiten Anschluss, wobei der erste Anschluss elektrisch mit dem Kommunikationsnetz und der zweite Anschluss elektrisch mit dem Computersystem des Benutzers verbunden ist.

Vorzugsweise umfasst die Vorrichtung ferner mindestens einen erstes und ein zweites Anzeigeelement, wobei das erste und der zweite Anzeigeelement elektrisch mit dem Computerverarbeitungsmitteln verbunden ist und den Betriebszustand der Vorrichtung anzeigen kann.

Vorzugsweise umfasst das Netzwerkschnittstellenmittel mindestens einen hängenden Verbinder, der über ein Kabel mit der Vorrichtung verbunden ist, und das Gehäuse ferner einen Schlitz umfasst, der in mindestens einer Seite des Gehäuses ausgebildet ist, wobei der Schlitz so ausgebildet ist, dass er gegenüberliegende Seiten umfasst, wobei mindestens eine der gegenüberliegenden Seiten eine Vielzahl von Vorsprüngen umfasst, wobei das Kabel in den Schlitz gefaltet ist und durch die Vielzahl von Vorsprüngen in dem Schlitz gehalten wird, wenn die Vorrichtung nicht in Gebrauch ist.

Vorzugsweise ermöglicht das Computerverarbeitungsmittel selektiv den Betrieb der Vorrichtung in einem Online-Modus oder einem Offline-Modus, wobei der Online-Modus es ermöglicht, dass die Daten von dem Computersystem des Benutzers, sobald sie über das Verschlüsselungsmittel verschlüsselt sind, zu dem Netzwerkschnittstellenmittel zur Übertragung auf dem Kommunikationsnetzwerk übertragen werden, und wobei der Online-Modus es auch ermöglicht, dass die Daten von einem der mehreren entfernten Computersysteme, sobald sie über das Verschlüsselungsmittel entschlüsselt sind, zu dem Computersystem des Benutzers übertragen werden, zu dem Computersystem des Benutzers übertragen werden, wobei die Offline-Betriebsart ermöglicht, dass die Daten von dem Computersystem des Benutzers, nachdem sie über die Verschlüsselungsmittel verschlüsselt wurden, zu dem Computersystem des Benutzers zur Speicherung und anschließenden Übertragung über das Kommunikationsnetz zurückgeführt werden, und wobei die Offline-Betriebsart auch ermöglicht, dass die Daten von einem der mehreren entfernten Computersysteme direkt zu dem Computersystem des Benutzers zur Speicherung und anschließenden Entschlüsselung über die Verschlüsselungsmittel übertragen werden.

Ein noch weiter Aspekt der vorliegenden Erfindung betrifft eine Verschlüsselungs- und Authentifizierungs-Kommunikationsvorrichtung zum Herstellen einer sicheren Kommunikationsverbindung für Daten, die über ein Kommunikationsnetz zwischen einem von mehreren entfernten Rechnersystemen und einem Rechnersystem eines Benutzers ausgetauscht werden, wobei die Vorrichtung umfassen kann: eine Chipkartenaufnahme zur Aufnahme einer Chipkarte; ein kryptografisches Modul, wobei das kryptografische Modul mindestens eine Verschlüsselungs- und Authentifizierungsfunktion durchführt und einen Mikroprozessor, einen Systemspeicher, eine Eingabe-/Ausgabesteuerung, eine Krypto-Engine, einen Quantenzufallsgenerator und eine Kommunikationssteuerung umfasst, die alle über einen Mikroprozessorbus elektrisch miteinander verbunden sind; und ein Schnittstellenmodul, wobei das Schnittstellenmodul Systemschnittstellenfunktionen durchführt und eine Netzwerkschnittstelle, eine Chipkartenschnittstelle und eine Kommunikationsportschnittstelle enthält, wobei die Netzwerkschnittstelle elektrisch mit dem ersten Verbinder und dem Kommunikationscontroller verbunden ist, wobei die Chipkartenschnittstelle elektrisch mit der Chipkartenaufnahme und mit dem Eingabe-/Ausgabesteuergerät verbunden ist und die Kommunikationsportschnittstelle elektrisch mit dem zweiten Verbinder und dem Kommunikationscontroller verbunden ist. Die Vorrichtung kann dazu eingerichtet sein, Übertragungsdaten vom Computersystem des Benutzers, die über den zweiten Anschluss in die Vorrichtung gelangen und gepuffert und von der Kommunikationsportschnittstelle an den Kommunikationscontroller übertragen werden, bereitzustellen, wobei der Kommunikations-controller die Übertragungsdaten formatiert und auf dem Mikroprozessorbus platziert, wobei der Mikroprozessor in Verbindung mit dem Systemspeicher und als Reaktion darauf, dass die Übertragungsdaten auf dem Mikroprozessorbus platziert werden, veranlasst, dass die Übertragungsdaten an die Kryptomaschine übertragen werden, die Krypto-Engine mindestens eines von Verschlüsselung und Authentifizierung der Sendedaten mittels Zufallszahlen des Quantenzufallsgenerators durchführt, die Chipkarte einen Benutzeridentifikationscode über die Chipkartenschnittstelle und den Eingabe/Ausgabe-Controller zur Durchführung der Authentifizierungsfunktion an die Krypto-Engine sendet, der Mikroprozessor dann die Sendedaten zurück an den Kommunikations-Controller überträgt, der Kommunikations-Controller die Sendedaten neu formatiert und an die Netzwerkschnittstelle sendet, die Netzwerkschnittstelle die Sendedaten zur Übertragung in das Kommunikationsnetzwerk über den ersten Anschluss moduliert. Die Vorrichtung kann dazu eingerichtet sein, Empfangsdaten, die von einem der mehreren entfernten Computersysteme über das Kommunikationsnetz empfangen wurden und über den ersten Anschluss in die Vorrichtung gelangen, anzunehmen, wobei die Netzwerkschnittstelle die Empfangsdaten zur Bearbeitung durch die Vorrichtung als Reaktion auf den Eingang der Empfangsdaten demoduliert, wobei die Netzwerkschnittstelle die Empfangsdaten an den Kommunikationscontroller überträgt, wobei der Kommunikations-controller die Empfangsdaten formatiert und die Empfangsdaten auf den Mikroprozessorbus legt, wobei der Mikroprozessor, in Verbindung mit dem Systemspeicher und als Reaktion darauf, dass die Empfangsdaten auf dem Mikroprozessorbus platziert werden, veranlasst, dass die Empfangsdaten an die Verschlüsselungsmaschine übertragen werden, wobei die Verschlüsselungsmaschine mindestens eines von Entschlüsselung und Validierung der Empfangsdaten durchführt, wobei der Mikroprozessor dann die Empfangsdaten zurück an den Kommunikationscontroller überträgt, wobei der Kommunikationscontroller die Empfangsdaten neu formatiert und sie der Kommunikationsportschnittstelle bereitstellt, wobei die Kommunikationsportschnittstelle die Sendedaten zur Übertragung an das Computersystem des Benutzers über den zweiten Anschluss umwandelt; wobei ein erstes und die zweites Anzeigeelement über die Eingabe-/Ausgabesteuerung elektrisch mit dem Mikroprozessor verbunden sein können und dem Benutzer Angaben zum Gerätestatus liefern können. Der Quantenzufallsgenerator kann dabei zur Schlüsselerzeugung benötigte Zufallszahlen bereitstellen, insbesondere kann der Quantenzufallsgenerator als Teil eines Schlüsselgenerators (Schlüsselquelle) ausgebildet sein.

Ein Quantenzufallsgenerator kann eine Entropiequelle umfassen. Es ist bevorzugt, dass die Entropiequelle monolithisch in einem Halbleitersubstrat mit einer Oberfläche ausgeführt ist. Die Entropiequelle kann eine Photonenquelle umfassen, die dazu eingerichtet ist, bei einer entsprechenden Bestromung Photonen (bevorzugt Einzelphotonen) auszusenden. Weiterhin kann die Entropiequelle einen Einzelphotonendetektor umfassen, der dazu eingerichtet ist, die Photonen der Photonenquelle zu detektieren und ein Entropiequellenausgangssignal zu erzeugen. Vorzugsweise ist die Photonenquelle zwischen der Oberfläche eines Halbleitersubstrats in dem die Photonenquelle ausgebildet ist (es kann sich um das gleiche Halbleitersubstrat handeln, in dem die Entropiequelle monolithisch ausgebildet ist) und dem Einzelphotonendetektor angeordnet. Alternativ kann auch der Einzelphotonendetektor zwischen der Oberfläche eines Halbleitersubstrats in dem die Photonenquelle ausgebildet ist (es kann sich um das gleiche Halbleitersubstrat handeln, in dem die Entropiequelle monolithisch ausgebildet ist) und der Einzelphotonenquelle angeordnet sein.

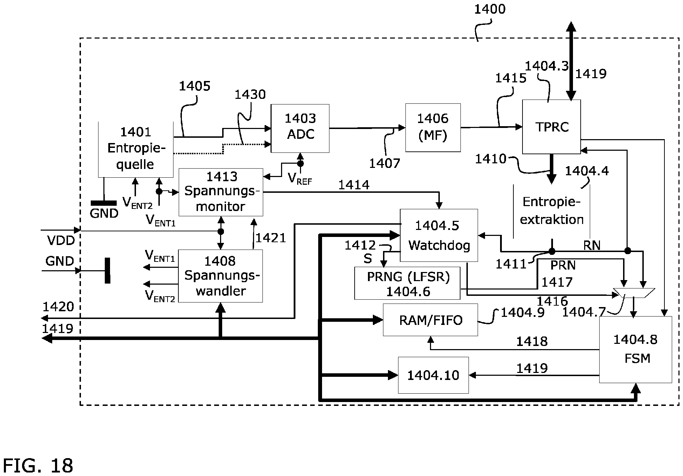

Besonders bevorzugt ist, dass die Photonenquelle und der Einzelphotonendetektor vertikal übereinander angeordnet sind, d. h. beispielsweise wenn diese als hybride Strukturen mit jeweils eigenen Substraten miteinander kombiniert werden oder bei einer monolithisch in einem Halbleitersubstrat integrierten Entropiequelle eine vertikale Stapelstruktur ausbilden. Der Quantenzufallsgenerator kann ein Mittel zur Erzeugung einer oder mehrerer Quantenzufallszahlen in Abhängigkeit von dem Entropiequellenausgangssignal aufweisen. Eine Quantenzufallszahl kann beispielsweise ein einzelnes Quantenzufallsbit oder ein Quantenzufallsdatenwort aus mehreren Quantenzufallsbits umfassen. Insbesondere kann es sich bei dem Quantenzufallsgenerator um einen beispielhaft in FIG. 18 beschriebenen Quantenzufallsgenerator handeln, wobei die Entropiequelle vorzugsweise wie obenstehend beschrieben ausgebildet ist.

Insbesondere kann der Quantenzufallsgenerator als Entropiequelle daher bevorzugt einen integrierten Quanten-Zufallszahlengenerator (engl. "integrated Quantum Random Number Generator, iQRNG"), insbesondere einen monolithisch in einem gemeinsamen Halbleitersubstrat im gleichen Materialsystem skalierbar und vollständig integriert aufgebauten photonischen QRNG bestehend aus einer Photonenquelle und einen unmittelbar an die Quelle gekoppelten Detektor für einzelne Photonen in einer besonders kompakten und angriffssicheren Ausführung auf einer für vielfältige Anwendungen offenen Technologieplattform zur Halbleiterstrukturierung umfassen.

Hierbei gilt es zu beachten, dass in vielen Bereichen von Wissenschaft und Technik zufällige Ereignisse und die Bestimmung von Wahrscheinlichkeiten eine besonders herausragende Rolle spielen. Beispielsweise basieren Monte-Carlo-Simulationen und sichere Verschlüsselungsverfahren in hohem Maße auf der Bereitstellung von Zufallszahlen. Man unterscheidet dabei im Allgemeinen zwischen den sogenannten Pseudo-Zufallszahlen und echten Zufallszahlen. Während erstere mittels deterministischer Formeln durch Pseudo-Zufallszahlengeneratoren (engl. "Pseudo Random Number Generators, PRNGs") erzeugt werden, also nicht absolut zufällig sind, basieren nicht-deterministische Zufallszahlengeneratoren zur Bereitstellung echter Zufallszahlen (engl. "True Random Number Generators, TRNGs") im Allgemeinen auf real unvorhersehbaren Prozessen wie einem thermischen oder atmosphärischen Rauschen und nicht auf künstlich generierten Mustern deterministischer Algorithmen. Allerdings können auch die Ergebnisse von solchen auf äußeren Parametern basierenden nicht-deterministischen Zufallszahlengeneratoren abhängig vom zugrundeliegenden Zufallselement aufgrund von schwachen Korrelationen beispielsweise noch immer geringfügig zu höheren oder zu geraden Zahlen tendieren und somit zumindest eine teilweise Vorhersagbarkeit der so generierten Zufallszahlen ermöglichen.

Die sogenannten Quanten-Zufallszahlengeneratoren (engl. "Quantum Random Number Generators, QRNGs") als spezielle Untergruppe der TRNGs hingegen basieren auf fundamentalen Quantenprozessen zur Zufallszahlenerzeugung und sind daher zumindest theoretisch nicht an andere die Statistik beeinflussende äußere Faktoren und Effekte gekoppelt. Quanten-Zufallszahlengeneratoren stellen somit die z. Z. beste verfügbare Quelle für echte Zufallszahlen dar. Aktuelle digitale QNRGs können dabei Entropieraten (d. h. eine Folge von Bitwerten mit maximaler Zufälligkeit bzw. Entropie) von bis zu einigen hundert Mbps liefern. Die erzeugten Zufallszahlen werden sowohl bei klassischen Verschlüsselungsverfahren als auch bei einer Vielzahl von Verfahren der Quanteninformatik und Quantenkryptografie zur Gewährleistung eines sicheren Schlüsselaustauschs benötigt (engl. "Secure/Quantum Key Distribution, SKD/QKD"). Zur Generierung sicherer Schlüssel in der Kryptographie sind daher nicht-manipulierbare und schnelle QRNGs unbedingt erforderlich.

Eine Vielzahl von QRNGs wird aufgrund von deren besonders einfacher Realisierbarkeit mit Hilfe zufälliger Eigenschaften von Photonen als photonische QRNGs realisiert. Ein einfaches Konzept für die Erzeugung von Zufallszahlen ist dabei das Verhalten eines Photons, dass an einen semitransparenten Strahlteiler unabhängig von anderen Photonen entweder reflektiert oder transmittiert wird. Ein anderer Ansatz ist die Nutzung der zufälligen Ankunftszeiten von Photonen auf einem Einzelphotonendetektor. Dieser auf einer intrinsischen, prinzipiell nicht deterministisch berechenbaren Photonenstatistik der Photonen einer zugehörigen Photonenquelle basierende Verteilungseffekt kann ebenfalls zur Bereitstellung echter Zufallszahlen mit hoher Entropie genutzt werden. Die Ankunftszeiten von Photonen auf einem Einzelphotonendetektor weisen im Allgemeinen eine Exponential-Verteilung auf.

Typischerweise wird in einem Einzelphotonendetektor (engl. "Single Photon Detector, SPD") zunächst durch ein einzelnes einfallendes Photon ein Detektorimpuls erzeugt, welcher in einem Zeit-zu-Digital-Wandler (engl. "Time-to-Digital Converter, TDC") in eine mit einem Zeitstempel versehende digitale Repräsentation des Detektionsereignisses umgewandelt und entsprechend weiterverarbeitet werden kann. Als Photonen- bzw. Entropiequelle in QRNGs werden dabei zumeist stark auf das Einzelphotonenniveau abgeschwächte Laserdioden (engl. "Laser Diodes, LD") oder einfache lichtemittierende Dioden (engl. "Light Emitting Diodes, LEDs") genutzt, deren emittierte Photonen anschließend über einen oder mehrere besonders empfindliche Einzelphotonen-Lawinendioden (engl. "Single Photon Avalanche Diodes, SPADs") als SPD zeitlich aufgelöst erfasst werden können. Solche zeitgleich nur einzelne oder nur einige wenige Photonen bereitstellende Photonenquellen werden im Rahmen dieser Anmeldung auch als Einzelphotonenquellen (engl. "Single Photon Source, SPS") bezeichnet. Es muss sich dabei jedoch nicht um echte Einzelphotonenemitter, beispielsweise auf Basis eines einzelnen isolierten Zweiniveausystems, handeln.

Bei SPADs handelt es sich um eine Art Photodetektor ähnlich den Photodioden (engl. "Photo Diodes, PDs") und Avalanche-Photodioden (engl. "Avalanche Photo Diodes, APDs"), jedoch mit einer demgegenüber deutlich erhöhten Sensitivität. Die SPADs können digital - auch innerhalb einer gemeinsamen integrierten Schaltung - ausgelesen und ausgewertet werden. Wird eine solche integrierte Detektorschaltung durch einzelne Photonen angeregt, so wird in dem sensorisch aktiven Bereich (Absorptionsgebiet) pro anregendem Photon primär jeweils nur ein Elektron-Loch-Paar generiert, wobei die angeregten Elektronen durch elektrische Felder zur Kathode und die angeregten Löcher zur Anode abgezogen werden. Dabei driften die Ladungsträger bei einer SPAD durch ein sogenanntes Lawinengebiet, innerhalb dessen durch eine verstärkte Stoßionisation eine Ladungslawine erzeugt wird. Es handelt sich somit um hochgradig sensitive Photonen-Empfänger-Elemente, welche bei Aktivierung eine hohe Ladungsmenge (ca. 10⁵ - 10⁶ Elektronen) mit hoher zeitlicher Auflösung bereitstellen können.

Eine SPAD wird typischerweise im Geiger-Modus oberhalb seiner Durchbruchspannung betrieben, wobei ein einzelnes Photon über die erzeugte Ladungslawine detektiert und anschließend als Einzelereignis registriert wird. Zur Verringerung der während der Registrierung auftretenden Totzeit kann unmittelbar nach dem Einsetzen der Lawinenausbildung eine aktive oder passive Unterdrückung bzw. Quenching der weiteren Ladungsträgerverstärkung erfolgen. Die integrierte Schaltung kann neben der SPAD auch ein sogenanntes Einzelphotonenzählwerk bzw. einen Einzelphotonenzähler (engl. "Single-Photon Counter, SPC") umfassen, hierbei erfolgt im Allgemeinen anstatt einer direkten Ausgabe eines einzelnen Detektorimpulses eine unmittelbare statistische Auswertung der zeitlichen Verteilung der einzelnen detektierten Einzelphotonenereignisse.

Der Begriff Quanten-Zufallszahlengenerator (QRNG) ist im Rahmen dieser Anmeldung vor allem als abstrakte Definition im Sinne einer Anordnung zur Bereitstellung von zahlenmäßig erfassbaren quantisierten Zufallsereignissen zu verstehen. Ein Quanten-Zufallszahlengenerator umfasst dabei stets eine sogenannte Entropiequelle, also ein diese Zufallsereignisse tatsächlich bereitstellendes Element (z. B. eine SPS alleine oder in Kombination mit einem SPD). Der Begriff Quanten-Zufallszahlengenerator ist jedoch nicht auf die Entropiequelle beschränkt, sondern kann beispielsweise auch die Umgebung und die strukturelle Anordnung der Entropiequelle in einer Vorrichtung oder einem Substrat umfassen. Im Allgemeinen werden unter diesem Begriff jedoch auch entsprechende Ansteuerungs- und Auswerteschaltungen bzw. ganze Schaltungslayouts oder Logikbausteine zur tatsächlichen Ausgabe von Zufallsereignisse als direkt verarbeitbare Zufallszahlen mit verstanden. Die Zufallszahlen können sich dabei unmittelbar aus der Statistik der Entropiequelle oder beispielsweise durch eine Umwandlung als davon durch zusätzliche Maßnahmen abgeleitete Zufallswerte ergeben. Zur besseren Unterscheidung der abstrakten Definition von einer realen Schaltung wird letztere im Folgenden der Einfachheit halber als Quantenzufallsgenerator bezeichnet. Dies soll jedoch keine Einschränkung bezüglich der beiden genannten Begrifflichkeiten darstellen, sondern lediglich unterschiedliche Aspekte hervorheben. Insofern können die Begriffe Quanten-Zufallszahlengenerator und Quantenzufallsgenerator auch durchaus ein und dieselben Vorrichtung repräsentieren, wobei dann beide Vorrichtungen mindestens eine Entropiequelle einschließen. In einem schaltungstechnischen Blockschaltbild (d. h. auf Schaltungsebene) wird ein erfindungsgemäßer Quanten-Zufallszahlengenerator daher auch kurz als Entropiequelle bezeichnet, während die jeweils durch das Blockschaltbild repräsentierte Schaltung zur Ausgabe direkt verarbeitbarer Zufallszahlen für eine bessere Unterscheidbarkeit als Quantenzufallsgenerator bezeichnet wird.

Insbesondere braucht das Substrat eines Quanten-Zufallszahlengenerators keine weiteren Komponenten zur Ausbildung eines Quantenzufallsgenerators umfassen, sondern, das Substrat kann beispielsweise auch nur ein einzelner Halbleiterkristall sein, der lediglich eine oder mehrere Entropiequellen umfasst. Die weiteren Komponenten eines Quantenzufallsgenerators können in diesem Fall auch extern, beispielsweise auf einem anderen Substrat bereitgestellt werden.

Eine parallel zur Zufallszahlenerzeugung erfolgende statistische Auswertung kann beispielsweise zur weiteren Absicherung der Erzeugung gegenüber möglichen Angriffen auf den Prozess der Zufallszahlenerzeugung genutzt werden. Insbesondere bei aus Einzelkomponenten aufgebauten nicht-integrierten photonischen QRNGs bieten die erforderlichen Übertragungsstrecken innerhalb des Systems dazu vielfältige Angriffsmöglichkeiten. Daher werden solche Systeme zur Erhöhung der Sicherheit möglichst kompakt und isoliert von ihrer äußeren Umgebung realisiert. Neben der Vermeidung von potentiellen Angriffsszenarien ist ein weiterer Vorteil solcher kompakten QRNGs, dass die Zufallszahlenerzeugung eventuell von außerhalb des Systems beeinträchtigende natürliche Einflüsse ebenfalls weitestgehend minimiert werden können. Entsprechend kompakte, auf dem Photonenrauschen basierende QRNGs werden daher bisher üblicherweise als hybridisch integrierte Systeme bereitgestellt.

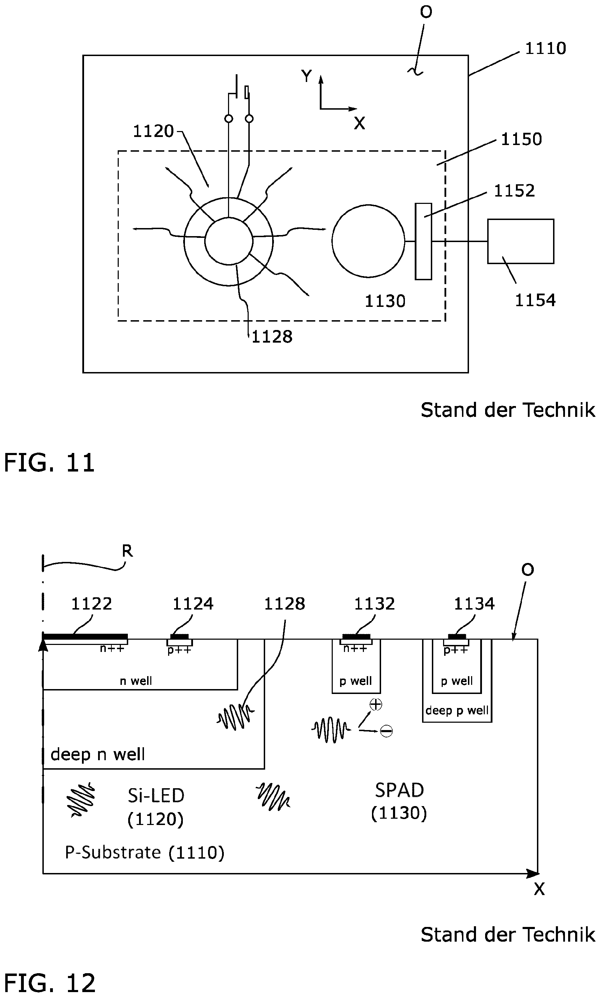

Aus der EP 3 529 694 B1 ist auch ein integrierter Quanten-Zufallszahlengenerator (engl. "integrated Quantum Random Number Generator, iQRNG") mit einer SPS und einer oder mehreren SPDs bekannt, bei dem die SPS und der oder die SPDs vollständig in CMOS-Technologie integriert in einem einzigen Halbleitersubstrat derart angeordnet sind, dass sie unmittelbar nebeneinanderliegen (siehe FIG. 11 mit zugehöriger Figurenbeschreibung). Die SPS wird dabei durch einen zweckmäßig dotierten p-n-Übergang bereitgestellt, so dass sie einen zu detektierenden Photonenstrom erzeugt, wenn die Photonenquelle in geeigneter Weise in Vorwärts- oder Rückwärtsrichtung vorgespannt ist. Bei den SPDs soll es sich insbesondere um SPADs handeln, welche bevorzugt durch gemeinsame Herstellungsprozesse mit den SPSs erzeugt werden und die gleiche chemische Struktur aufweisen.

Die gemeinsame Integration bewirkt, dass der von der SPS erzeugte Photonenstrom durch optisches Übersprechen innerhalb ein und desselben Halbleitermaterials unmittelbar zu einer daneben angeordneten SPAD fließen kann und nicht wie bei anderen aus dem Stand der Technik bekannten hybridisch integrierten QRNGs zunächst einen eventuell leeren, die beiden Komponenten physikalisch voneinander trennenden Kopplungszwischenraum überwinden bzw. durchtunneln muss. Die integrierte "side-by-side"-Konfiguration macht den in der Druckschrift vorgestellten QRNG kompakter und strukturell weniger komplex als hybride QRNGs des gleichen funktionalen Typs. Darüber hinaus ist der Zufallszahlengenerator dank der Integration aller Komponenten deutlich robuster und immuner gegen externe Umwelteinflüsse sowie gegen Manipulationsversuche durch äußere Angreifer.

Allerdings besteht unter deutlich erhöhtem Aufwand hierbei prinzipiell auch weiterhin die Möglichkeit, während des laufenden Betriebs des QRNGs in den Erzeugungsprozess der Zufallszahlen störend, beeinflussend und/oder beobachtend einzugreifen. Da der in der Druckschrift offenbarte iQRNG im Wesentlichen eine planare Struktur aufweist, könnten einzelne Photonen nämlich durchaus von ober- oder unterhalb der Ebene des Substrats abgegriffen oder zusätzlich eingebracht werden.

Die horizontale Nebeneinanderanordnung der Strukturen ist zudem nicht ideal hinsichtlich der Effizienz und des benötigten Flächenverbrauchs. Die Effizienz wird dabei insbesondere durch den erforderlichen seitlichen Abstand zwischen der SPS und der SPAD und eine damit verbundene hohe Absorption der Photonen im Halbleitermaterial beschränkt. Die von der SPS emittierten Photonen werden ohne besondere Vorkehrungen zudem weitgehend ungerichtet in das die SPS umgebende Material ausgesendet, so dass auch dadurch nur ein Teil der erzeugten Photonen von einer zugehörigen SPAD detektiert werden kann. Zwar können mehrere SPADs um eine einzelne SPS herum angeordnet werden, so dass die Effizienz und somit die digitale Entropierate durch gemeinsame Auswertung der so verbundenen SPADs erhöht werden kann, dadurch nimmt jedoch der Flächenverbrauch eines solchen iQRNGs erheblich zu. Anderseits muss auch bei einem einzelnen Emitter-Detektor-Paar sichergestellt werden, dass die nicht detektierten Photonen sich nicht unkontrolliert innerhalb des Substrats ausbreiten und an anderer Stelle im Substrat zu Störungen führen können. Die damit verbundenen seitlichen Sperrbereiche führen daher ebenfalls zu einer Erhöhung des effektiven Flächenverbrauchs des iQRNGs.

Ein ebenfalls in CMOS-Technologie (HV-CMOS) realisierter iQRNG mit einer entsprechenden Anordnung einer Photonenquelle und eines Einzelphotonendetektors nebeneinander ist auch aus Khanmohammadi et al. (Khanmohammadi, Abbas, et al. "A monolithic silicon quantum random number generator based on measurement of photon detection time." IEEE Photonics Journal 7.5 (2015): 1-13) bekannt. Eine in einer kreisförmig oberflächennahen n-Wanne zwischen einem zentralen n⁺⁺-Gebiet als Kathode und mehreren ringförmig darum angeordneten p⁺⁺-Gebieten als Anode ausgebildete Si-LED als Photonenquelle wird dabei kreisringförmig von einer SPAD als Einzelphotonendetektor umschlossen (siehe FIG. 125 mit zugehöriger Figurenbeschreibung). Die von der SPS emittierten Photonen werden dadurch allseitig in der Ebene detektiert, wodurch gegenüber dem aus der EP 3 52 694 B1 bekannten iQRNG bei verringerten Flächenverbrauch die Effizienz erhöht werden kann. Die SPS wird somit unmittelbar in die SPAD integriert. Einzelne Photonen können jedoch auch hierbei ins Substrat emittiert oder an dessen Oberfläche extrahiert werden. Ebenfalls möglich ist auf diesen Wegen auch die Injektion von entsprechenden Photonen eines Angreifers zur Beeinflussung der Statistik.

Von daher besteht zur weiteren Erhöhung der Sicherheit und zur Reduzierung des Flächenverbrauchs Bedarf für eine weitere Miniaturisierung von integrierten QRNGs gegenüber dem Stand der Technik. Der iQRNG sollte weitgehend gegenüber äußeren Angriffen geschützt sein und dabei eine möglichst hohe Effizienz und möglichst geringe Substratverluste aufweisen. Um dabei nicht durch herstellungstechnologische Beschränkungen beim Design von SoCs (engl. "System on Chip, SoC") limitiert zu sein, sollte dabei das zugrundeliegende Herstellungsverfahren möglichst technologieoffen ausgestaltet sein bzw. auf einer möglichst breit anwendbaren Technologieplattform zur Halbleiterstrukturierung basieren.

Ein integrierter Quanten-Zufallszahlengenerator, iQRNG, kann eine Photonenquelle und einen Einzelphotonendetektor, wobei die Photonenquelle und der Einzelphotonendetektor in vertikaler Richtung übereinander in einem gemeinsamen Substrat aus einem Halbleitermaterial angeordnet sind, umfassen. In vertikaler Richtung übereinander bedeutet dabei, dass die Photonenquelle und der Einzelphotonendetektor, bezogen auf eine Oberfläche des Substrats, in unterschiedlichen Tiefen gestapelt zueinander angeordnet sind (eine Nebeneinanderanordnung würde dann beispielsweise in horizontaler Richtung erfolgen). Dabei bedeutet vertikal übereinander bevorzugt, dass die Ausbreitungsrichtung der zwischen der Photonenquelle und dem Einzelphotonendetektor übertragenen Photonen zumindest eine Komponente in besagter vertikaler Richtung aufweist. Die Photonenquelle und der Einzelphotonendetektor können daher durchaus auch einen gegenseitigen seitlichen Versatz oder eine Verkippung der aktiven Bereiche in Bezug auf die Oberfläche des Substrats aufweisen, solange von der Photonenquelle ausgesandte Photonen vom Einzelphotonendetektor mit zumindest einer Komponente der Ausbreitung in besagter vertikaler Richtung detektieren werden können. Besonders bevorzugt ist, wenn die Ausbreitung der Photonen im Wesentlichen (d. h. in strahlenoptischer Näherung ohne Beugungseffekte) nur eine Komponente in besagter vertikaler Richtung (d. h. keine horizontale Komponente) aufweist. Ein beschriebener iQRNG kann auch mehrere an einen einzelnen Einzelphotonendetektor gekoppelte Photonenquellen (z. B. zur Erhöhung der Photonenrate oder der Ausfallsicherheit) oder mehrere an eine einzelne Photonenquelle gekoppelte Einzelphotonendetektoren (z. B. für Überwachungszwecke) umfassen. Ebenfalls möglich ist die Kombination von mehreren Photonenquellen und Einzelphotonendetektoren zu einem einzelnen iQRNG.

Im Gegensatz zum Stand der Technik findet somit keine Nebeneinanderanordnung der einzelnen optoelektronischen Komponenten statt. Vielmehr soll eine kompakte Anordnung einer Photonenquelle und eines Einzelphotonendetektors übereinander in einem gemeinsamen Substrat aus einem Halbleitermaterial erfolgen. Es handelt sich somit hierbei um eine besonders kompakte monolithische 3D-Integration mit minimalem Flächenverbrauch für den iQRNG, wobei die Ausbildung der Strukturen bevorzugt einstückig erfolgen kann. Insbesondere ist hierbei eine Anordnung bevorzugt, bei der der Einzelphotonendetektor zur verbesserten Abschirmung gegenüber äußeren Einflüssen tieferliegend als die Photonenquelle im Halbleitermaterial (d. h. Photonenquelle oben, Einzelphotonendetektor unten) angeordnet ist. In einer alternativen Ausführungsform kann der Einzelphotonendetektor jedoch auch höherliegend als die Photonenquelle im Halbleitermaterial angeordnet sein (d. h. Photonenquelle unten, Einzelphotonendetektor oben). Beispielsweise kann neben einer Inversion des grundsätzlichen Strukturaufbaus bei einer Prozessierung von der Oberfläche des Substrats aus auch eine inverse Anordnung der Elemente durch eine entsprechende Strukturierung von der Rückseite des Substrats aus erfolgen. Insbesondere kann eine Strukturierung beidseitig sowohl von der Vorderseite als auch von der Rückseite des Substrats aus erfolgen.

Vorzugsweise handelt es sich bei der Photonenquelle um eine Einzelphotonenquelle (engl. "Single Photon Source, SPS"), dazu eingerichtet, zeitgleich nur einzelne oder einige wenige Photonen bereitzustellen. Solche zeitgleich nur einzelne oder nur einige wenige Photonen bereitstellende Photonenquellen werden im Rahmen dieser Anmeldung auch als Einzelphotonenquellen bezeichnet. Es muss sich dabei jedoch nicht um echte Einzelphotonenemitter, beispielsweise auf Basis eines einzelnen isolierten Zweiniveausystems, handeln, vielmehr können durch eine entsprechend hohe Abschwächung der Emission bzw. des zugeführten Stroms auch herkömmliche Lichtquellen als SPS ausgebildet werden.

Unter einem Substrat wird im Rahmen der vorliegenden Offenbarung der gesamte Halbleiter-Chip als Körper verstanden, in den beispielsweise mittels CMOS- oder anderer Technologien eine bestimmte Elementstruktur beispielsweise durch Ausbildung von unterschiedlich dotierten Wannen oder Gebieten in das Halbleitermaterial hineinstrukturiert wird. Die Strukturausbildung kann jedoch auch additiv durch Aufbringen von weiteren Schichten und Strukturen bzw. durch eine Abfolge von Ätz- und Aufbringschritten für solche weiteren Schichten und Strukturen erfolgen. Ein entsprechendes Substrat kann daher neben einem sogenannten Träger- oder Grundsubstrat (z. B. ein unstrukturiertes einkristallines Halbleitersubstrat als Basis für das epitaktischen Aufwachsen von weiteren Halbleiterschichten) auch eine Vielzahl solcher epitaktisch aufgewachsen Schichten sowie andere Beschichtungen umfassen. Das Substrat wird in dieser Anmeldung daher als materieller Träger für die Halbleiterstrukturen eines beschriebenen iQRNG und nicht im Sinne eines einfachen Träger- oder Grundsubstrats zum Aufbringen dieser Strukturen verstanden. Insofern stellt vor allem die einstückige Ausbildung eines beschriebenen iQRNG übereinander in einem gemeinsamen Substrat aus einem Halbleitermaterial eine Abgrenzung insbesondere gegenüber mit herkömmlichen Methoden hybridisch integrierten Kombinationen (z. B. mittels Flip-Chip-Montage) aus mindestens einer Photonenquelle und mindestens einem Einzelphotonendetektor etwa auf einem gemeinsamen Submount als Trägerstruktur dar.

Vorzugsweise handelt es sich bei der Photonenquelle um eine an einem Arbeitspunkt unterhalb oder nahe der Durchbruchspannung betriebene lichtemittierende Avalanche Zener-Diode (Zener-avLED). Bevorzugt weist die Zener-avLED eine Durchbruchspannung von < 10 V auf, bevorzugter eine Durchbruchspannung von < 8 V und noch bevorzugter eine Durchbruchspannung von < 7 V. Die Vorteile der Verwendung einer Zener-avLED als Einzelphotonenquelle werden nachfolgend näher erläutert. Diese neue Art von Einzelphotonenquellen erlauben eine hohe Einzelphotonenrate bei relativ geringer Betriebsspannung auch unterhalb und im Bereich der Zener-Durchbruchspannung und zeigen bei entsprechend gewünschter Konstruktion eine bevorzugt gerichtete Abstrahlung der erzeugten Photonen ins Substratinnere und damit in Richtung des Einzelphotonendetektors. Dadurch sind Zener-avLEDs für eine Anwendung als Einzelphotonenquelle in einem iQRNG besonders geeignet.

Vorzugsweise handelt es sich bei dem Einzelphotonendetektor um einen Einzelphotonen-Lawinendioden (engl. "Single Photon Avalanche Diodes, SPADs"). Darunter werden Detektoren verstanden, die aufgrund ihrer besonders hohen Empfindlichkeit bei hoher Verstärkung und geringem (Dunkel)Rauschen prinzipiell dazu in der Lage sind, einzelne Photonen detektieren und nachweisen zu können.

Eine Hauptidee der vorliegenden Erfindung liegt somit darin, durch eine Anordnung einer Zener-avLED und einer SPAD übereinander in einem gemeinsamen Halbleitersubstrat einen besonders kompakten und sicheren integrierten QRNG zur Verfügung zu stellen.

Ein Ansatz zur aufgabengemäßen Verbesserung der aus dem Stand der Technik bekannten iQRNG besteht dabei in der Auswahl einer entsprechend breiten Technologieplattform. Für SoC-Designs mit einem möglichst breiten Spektrum an möglichen Anwendungen bieten integrierte Schaltungen in der Bipolar-CMOS-DMOS-Technologie (BCD-Technologie) auf Silizium ein großes Potential. In BCD-Technologie konnten auch bereits erfolgreich hocheffiziente SPADs demonstriert und realisiert werden. Dabei erlaubt die BCD-Technologie eine besonders effektive und optimierte Integration dieser SPADs mit einer Vielzahl von weiteren funktionalen Gruppen wie etwa digitalen und analogen Schaltungskomponenten, besonders energieeffizienten digitalen Speicher- und Schaltelementen, allgemeiner Leistungs- und Treiberelektronik sowie von Detektor- und Sensorbauteilen.

Die im Stand der Technik bekannten Silizium-basierten SPS können im Prinzip durchaus auch in BCD-Technologien implementiert werden. Aufgrund der ungerichteten Abstrahlung der Photonen sowie einer üblicherweise direkt oberflächennah erfolgenden Implementierung sind solche Si-LEDs jedoch zur Realisierung besonders effizienter und vor Angriffen geschützter iQRNGs nicht optimal. Die oberflächennahe Implementierung bedingt auch zumeist eine Degradation für den Fall einer im Avalanche-Betrieb genutzten Si-LED. Da Silizium als indirekter Halbleiter nur schlecht zur Erzeugung von Photonen geeignet ist und diese im Allgemeinen nur durch weitere Prozesse über eine zusätzliche Wechselwirkung mit dem Kristallgitter generiert werden können, ist die Auswahl an möglichen alternativen Photonenquellen auf Basis von Silizium allerdings stark eingeschränkt.

Bei der Untersuchung von in einer BCD-Technologie in unterschiedlichen Schichten durch entsprechende p-n-Übergänge bereitgestellten Zener-Dioden, welche für einen dauerhaften Arbeitspunkt selbst im Durchbruchbereich optimiert sind, wobei eine oberflächennahe Zener-Diode als Emitter und eine darunter liegende einfache p-n-Diode ohne Vorspannung (engl. "zero bias") als Detektor betrieben wurde, konnte durch die Erfinder gezeigt werden, dass in dieser Konfiguration entgegen der allgemeinen Erwartung des Fachmanns an der Zener-Diode im Avalanche-Betrieb bei der Durchbruchspannung starke Elektrolumineszenz mit einer Effektivität von mindestens 0,03 % beobachtet werden kann. Entsprechende Zener-Dioden sind im Stand der Technik üblicherweise nicht für den Betrieb als optoelektronisches Bauelement (LED) vorgesehen.

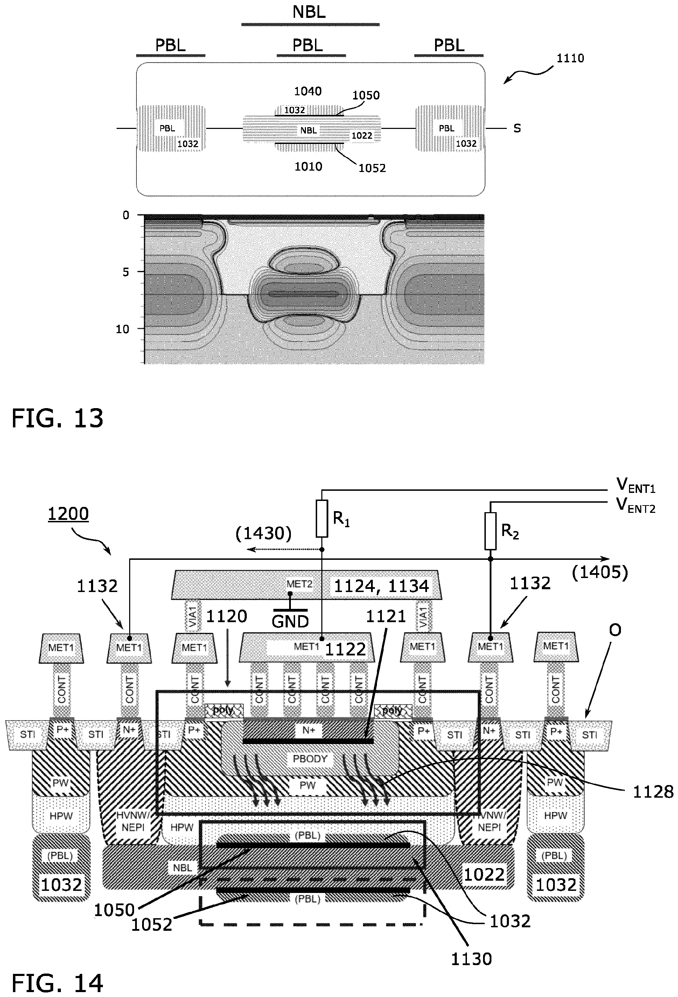

Insbesondere werden die erzeugten Photonen bevorzugt in Richtung der unteren p-n-Diode hin emittiert, welche somit nahezu alle emittierten Photonen detektieren kann, was über einen Photostrom auch in der erfinderischen Struktur nachgewiesen werden kann (vgl. FIGs. 14 bis 17 mit zugehöriger Figurenbeschreibung). Es zeigte sich somit, dass die untersuchte Zener-Diode im Bereich der Durchbruch-/Zener-Spannung eine zwar geringe, aber doch durchaus signifikante Effizienz (ca. ein detektiertes Photon pro 3000 Elektronen des Zener-Diodenstroms) aufweist und daher als Einzelphotonenquellen für die Realisierung von QRNGs in auf Silizium basierenden BCD-Technologie hervorragend geeignet erscheinen. Vor allem die bevorzugte Abstrahlung in Richtung des Detektors bietet gegenüber der isotropen Abstrahlung herkömmlicher in iQRNGs verwendeter Photonenquellen deutliche Vorteile. Dabei ist das in der CMOS-Technologie übliche Silizid zur Darstellung von verringerten Kontaktwiderständen zwischen den Metall-Kontakten und dem Halbleiter Silizid einerseits lichtdicht und andererseits spiegelnd glatt, so dass auch ursprünglich nach oben ausgesandte Photonen am Silizid-Spiegel zurück ins Innere des Substrats reflektiert werden können. Entsprechend ausgebildete und als SPS betriebene Zener-Dioden im Avalanche-Betrieb werden daher im Folgenden im Gegensatz zu den aus dem Stand der Technik bekannten Si-LEDs auch als lichtemittierende Avalanche Zener-Diode (engl.: "Avalanche Light Emitting Zener-Diode, Zener-avLED") bezeichnet.

Die in der verwendeten BCD-Technologie bereitgestellten Zener-avLED emittieren Photonen mit Wellenlängen aus dem sichtbaren Spektralbereich und weisen dabei eine relative geringe Zener-Betriebsspannung von zumeist kleiner als 8 V auf. Da die Abstrahlung einer Zener-avLED zudem typischerweise derart gerichtet ist, dass die Photonen bevorzugt in vertikaler Richtung, d. h. von der Oberfläche weg ins Substrat hinein emittiert werden, kann zudem bei einer Anwendung in einem iQRNG eine wesentlich stärke Isolation der SPS sowie der erzeugten Photonen gegenüber der Umgebung des Halbleitermaterials erreicht werden und ein Abgreifen oder Injizieren von Photonen an der Detektoroberfläche wird deutlich erschwert. Bei geeigneter Ausbildung der zu einem iQRNG gehörenden SPAD kann zudem die Effizienz der Zufallszahlenerzeugung deutlich erhöht und eine unkontrollierte Photonenausbreitung im Halbleitermaterial weitgehend unterbunden werden.

Die zweite wesentliche Komponente zum Aufbau eines kompakten QRNG ist daher die Auswahl eines entsprechend angepassten SPAD-Designs. Typischerweise werden diese in BCD-Technologien ebenfalls oberflächennah durch entsprechende Ausbildung von p- oder n-Wannen realisiert. Solche oberflächennahen SPADs sind mit den in CMOS-Technologie realisierten SPADs im Stand der Technik durchaus vergleichbar. Im Prinzip wäre somit der aus der EP 3 529 694 B1 bekannte iQRNG mit den obenstehend beschriebenen Zener-avLEDs auch in BCD-Technologien realisierbar. Jedoch emittieren die Zener-avLEDs wie obenstehend bereits beschrieben die Photonen mit Vorteil vorzugsweise in Richtung in das Substrat hinein. Eine aus dem Stand der Technik bekannte Nebeneinanderanordnung von einer Zener-avLED als SPS und einer oberflächennahen SPAD ließe sich zwar grundsätzlich, aber nicht unbedingt effektiv umsetzen. Bei der Verwendung von Zener-avLEDs ist es zweckmäßig die zugehörige SPAD daher unterhalb der Zener-avLED anzuordnen.

Die BCD Technologie ermöglicht neben der Implementierung von konventionellen n-SPADs und p-SPADs auch die Umsetzung völlig neuartiger SPAD-Konzepte, u. a. durch die Nutzung tiefliegender n- oder p-dotierten Schichten in einem BCD-Substrat.

Dabei konnte durch ein erst kürzlich ebenfalls von den Erfindern entwickeltes Verfahren zur Erzeugung tiefliegender p-n-Übergänge in einem BCD-Prozess zur Bereitstellung eines entsprechenden BCD-Substrats mit tiefliegenden p-n-Übergängen eine darauf basierende, besonders effiziente, tiefliegende Einzelphotonen-Lawinendiode ("deepSPAD") realisiert werden, welche auf einfache Weise unmittelbar unterhalb einer zur Bereitstellung von Einzelphotonen eingerichteten Zener-avLED angeordnet werden kann. Die Kombination aus einer Zener-avLED in Kombination mit einer tiefliegenden SPAD stellt somit im Gegensatz zu einer auf CMOS-Technologie basierenden horizontalen Integration eines QNRG gemäß Stand der Technik die wesentlichen Komponenten eines vollständig in BCD-Technologie vertikal integrierten QRNG bereit.

Durch die vertikale Anordnung einer Zener-avLED als Emitter und einer mittels extrem tiefliegender p-n-Übergänge realisierten deepSPAD als Empfänger kann in BCD-Technologien ein miniaturisierter, auf einem monolithischen Silizium-Die basierender Quanten-Zufallszahlgenerator mit hocheffizienter optischer Kopplung, hoher Angriffssicherheit sowie geringer Betriebsspannung realisiert werden. Damit stellt das hier vorgestellte iQRNG-Design auf BCD-Basis eine optimale Lösung zur Bereitstellung eines beschriebenen iQRNG dar. Insbesondere kann durch die vertikale 3D-Integration die Kompaktheit eines iQRNG weiter erhöht und der Flächenverbrauch gegenüber herkömmlichen lateralen 2D-Designs bei gleichzeitiger Steigerung der Effizienz reduziert werden.

Vorzugsweise ist ein beschriebener iQRNG daher in einem BCD-Substrat in BCD-Technologie ausgebildet.

Vorzugsweise umfasst das BCD-Substrat dabei ein Trägersubstrat; und eine auf dem Trägersubstrat aufgewachsene epitaktische Schicht, wobei zwischen dem Trägersubstrat und der epitaktischen Schicht durch eine Diffusion von in eine Oberfläche des Trägersubstrats unterhalb der epitaktischen Schicht eingebrachten Dotierstoffen ein in der epitaktischen Schicht liegender tiefliegender p-n-Übergang erzeugt wurde.

Bei dem Trägersubstrat kann es sich bevorzugt um ein p-Substrat handeln. Es können jedoch auch n-Substrate oder intrinsische Substrate verwendet werden. Bei dem Substratmaterial kann es sich insbesondere um Silizium handeln. Die Verfahren sind jedoch prinzipiell auch für andere Halbleitermaterialien adaptierbar. Ein typischer Dotierstoff zur Ausbildung eines p-Gebiets ist Bor. Zur Ausbildung eines n-Gebiets kann Phosphor (P), Arsen (As) oder Antimon (Sb) verwendet werden. Dabei diffundiert beispielsweise in Silizium Bor als Dotierstoff deutlich weiter aus als die schweren Donatoren (P, As oder Sb). Zudem kann festgestellt werden, dass dabei die erzeugten n-Gebiete aufgrund der höheren verwendeten Dosen weitgehend dominant sind, d. h. ein bereits mit Phosphor dotiertes n-Gebiet kann auch nach einem zusätzlichen Einbringen von Bor seinen vorhandenen Leitungstyp beibehalten. Für die Bereitstellung der tiefliegenden p-n-Übergänge kann mitunter auf zusätzliche Masken-, Lithographie- und Epitaxie-Schritte im üblichen BCD-Prozess verzichtet werden.

Vorzugsweise weisen der erste und der zweite Dotierstoff unterschiedliche Diffusionseigenschaften im Trägersubstrat und/oder in der epitaktischen Schicht auf. Bevorzugt weist der zweite Dotierstoff eine höhere Beweglichkeit im Trägersubstrat und/oder in der epitaktischen Schicht auf als der erste Dotierstoff. Vorzugsweise erfolgt das Einbringen des ersten Dotierstoffs und/oder des zweiten Dotierstoffs maskenlos oder über ein Maskenverfahren. Zum maskenlosen Einbringen kann beispielsweise ein direktes lonenstrahlschreibverfahren verwendet werden. Bei einem Maskenverfahren erfolgt das Einbringen mit Hilfe einer zuvor bereitgestellten Maske, wobei das Einbringen beispielsweise über ein chemisches oder physikalisches Abscheideverfahren oder ebenfalls mittels eines lonenstrahlschreibverfahrens erfolgt. Vorzugsweise überlagert unmittelbar nach dem Einbringen des zweiten Dotierstoffs in einer Aufsicht auf die Oberfläche des Trägersubstrats das erste Gebiet oder das zweite Gebiet vollständig das jeweils anderen Gebiet. Vorzugsweise handelt es sich bei dem ersten Bereich um eine tiefliegende n-Schicht (NBL-Schicht) und bei dem zweiten Gebiet um eine tiefliegende p-Schicht (PBL-Schicht).

Vorzugsweise bildet der Einzelphotonendetektor in einem Bereich um den tiefliegenden p-n-Übergang ein Lawinengebiet aus und umfasst ein Absorptionsgebiet zur Umwandlung von Photonen in Elektronen-Lochpaare, wobei sich das Absorptionsgebiet unmittelbar an den tiefliegenden p-n-Übergang anschließt.

Bevorzugt ist, dass der tiefliegende p-n-Übergang zumindest teilweise zwischen einer tiefliegenden n-Schicht als Kathode und einer sich unmittelbar an die tiefliegende n-Schicht anschließenden tiefliegenden p-Schicht ausgebildet ist. Ebenfalls bevorzugt ist, dass das Absorptionsgebiet sich unmittelbar an die tiefliegende p-Schicht anschließt und im Wesentlichen als p-Gebiet ausgebildet ist. Im Wesentlichen bedeutet dabei, dass das Absorptionsgebiet teilweise auch als intrinsisches Gebiet ausgebildet sein kann. Weiterhin bevorzugt ist, dass eine als p⁺-Gebiet ausgebildete Anode sich unmittelbar an das Absorptionsgebiet anschließt.

Vorzugsweise wird ein unterhalb des in der epitaktischen Schicht liegenden tiefliegenden p-n-Übergangs des Einzelphotonendetektors ausgebildeter zweiter tiefliegender p-n-Übergang (z. B. in dem Trägersubstrat) als zusätzlicher Photodetektor zur Überwachung auf äußere Angriffe genutzt. Durch das besagte Verfahren zur Erzeugung tiefliegender p-n-Übergänge in einem BCD-Prozess ergibt sich nämlich bei einigen Ausführungsformen unterhalb des ersten p-n-Übergangs ein darunterliegender zweiter p-n-Übergang (siehe FIG. 13 mit zugehöriger Figurenbeschreibung). Dieser kann aufgrund seiner weitgehend identischen elektronischen Eigenschaften ebenfalls als Photodetektor bzw. Einzelphotonen-Lawinendiode konfiguriert werden. Da dieser zusätzliche Photodetektor somit unterhalb der eigentlichen QRNG-Anordnung tief vergraben im Halbleitermaterierial angeordnet ist, kann dieser eine Schutzfunktion gegenüber von der Rückseite des Substrats injizierten Photonen bereitstellen. Diese können in unmittelbarer Nähe zum QRNG in einem breiten Winkelbereich detektiert werden. Dadurch lassen sich äußere Angriffe mit hoher Wahrscheinlichkeit erkennen.

Des Weiteren kann der zusätzliche Photodetektor dazu eingerichtet sein, über eine zusätzliche Auswerteelektronik eine Überwachung der Photonenzählrate zu ermöglichen. Unter ansonsten gleichbleibenden Betriebsbedingungen sollten die Photonenquelle und der zugehörige Einzelphotonendetektor abseits der zufälligen statistischen Schwankungen bei den detektieren Photonenereignissen eine in etwa konstante Photonenzählrate aufweisen. Da jedoch eventuell nicht alle von der Photonenquelle emittierten Photonen auch vom zugehörige Einzelphotonendetektor erfasst werden und auch externe natürliche Einflüsse (z. B. kosmische Strahlen) und künstliche Einstrahlungen (z. B. Funkquellen) auch vereinzelte Detektionsereignisse am zusätzlichen Photodetektor verursachen können, wird mit einer gewissen Wahrscheinlichkeit auch der zweite Photodetektor eine in etwa konstante Hintergrundzählrate aufweisen. Abweichungen von diesem langfristigen statistischen Mittelwert können daher auf einen möglichen Fehler innerhalb des iQRNG oder eine externe Störung, etwa durch einen Angreifer, hinweisen. Durch eine erfasste Veränderung der Hintergrundzählrate am zweiten Photodetektor können dabei sowohl aktive Eingriffe eines Angreifers (z. B. Einstrahlung zusätzlicher Photonen zur Änderung bzw. Beeinflussung der Photonenstatistik) als auch passive Angriffe, etwa durch das gezielte Abdünnen einer Abschirmung zur Erhöhung der Transmission von einzelne Photonen nach Außen (was u. U. jedoch auch eine zusätzliche Einstrahlung von Umgebungslicht aus dieser Richtung verursachen kann).

Da es sich auch bei den Hintergrundzählraten um statistische Größen handelt, bietet sich für die Auswertung im Hinblick auf mögliche Abweichungen von zu erwartenden Normalwerten eine Analyse auf der Grundlage von Methoden des maschinellen Lernens an. Insbesondere kann zur Auswertung auf Methoden der künstlichen Intelligenz zurückgegriffen werden. Insbesondere ist die Verwendung mindestens eines entsprechend trainierten künstlichen neuronalen Netzwerks (KNN) zur Feststellung eines Angriffs und/oder zur Identifizierung möglicher Fehlerquellen und Ereignisse bevorzugt. In der Literatur finden sich eine Vielzahl von unterschiedlichen Arten von KNN, eine Auswahl geeigneter Methoden kann der Fachmann anhand der jeweiligen Erfordernisse treffen.

In einigen Ausführungsformen kann das mindestens eine KNN ein stochastisches neuronales Netz (SNN) umfassen, welches für die gleichen Photonenzählraten variable Ausgaben liefern kann. Hiermit lassen sich Fehler des Netzes beruhend auf den vorhandenen Daten oder einem nicht hinreichenden Training des Netzwerkes untersuchen. Beispielsweise können so auch Abweichungen identifiziert werden, welche nicht vom Abweichungsraum eines Trainingsdatensatzes abgebildet werden (Out-of-Distribution).

Eine weitere mögliche Anwendung des tiefliegenden zweiten p-n-Übergangs als zusätzlicher Photodetektor kann in der Bereitstellung von unabhängigen Zufallszahlen auf der Basis einer weiteren, noch unterhalb des tiefliegenden zweiten p-n-Übergangs bzw. auf oder nahe der Rückseite des Substrats angeordneten unabhängigen Photonenquelle liegen. Vorzugsweise ist hierzu der tiefliegende zweite p-n-Übergang analog zum darüber angeordneten tiefliegenden ersten p-n-Übergang ebenfalls als Einzelphotonendetektor bzw. SPAD eingerichtet. Da auch die Absorption von Photonen im Bereich des ersten Einzelphotonendetektors einer Wahrscheinlichkeitsverteilung unterliegen kann und abhängig von der konkreten Realisierung der Anordnung der einzelnen Elemente durchaus auch einzelne Photonen der eigentlichen Photonenquelle des erfindungsgemäßen iQRNG bis in den Bereich des tiefliegenden zweiten p-n-Übergangs gelangen können, ist es auch möglich, dass diese ebenfalls als Grundlage für eine Bereitstellung von Quantenzufallszahlen, beispielsweise als zusätzlicher unabhängiger iQRNG, genutzt werden können.

Unabhängig von der Nutzung eines tiefliegenden zweiten p-n-Übergangs als zusätzlicher Photodetektor kann ein erfindungsgemäßer iQRNG (bzw. ein entsprechender Quantenzufallsgenerator) jedoch auch einen von den beschriebenen tiefliegenden p-n-Übergängen unabhängigen weiteren Photodetektor umfassen. Vorzugsweise handelt es sich bei dem weiteren Photodetektor um einen ebenfalls in den erfindungsgemäßen iQRNG integrierten Photodetektor, dieser kann jedoch auch hybrid mit dem erfindungsgemäßen iQRNG verbunden sein. Besonders bevorzugt handelt es sich bei dem weiteren Photodetektor ebenfalls um einen Einzelphotonendetektor, z. B. eine SPAD. Der zusätzlicher Photodetektor kann analog zur oben beschriebenen Verwendung des tiefliegenden zweiten p-n-Übergangs ebenfalls zur Überwachung der Funktionsfähigkeit und der Sicherheit eines erfindungsgemäßen iQRNG verwendet werden.

Vorzugsweise sind der tiefliegende erste p-n-Übergang und der tiefliegende zweite p-n-Übergang über ein gemeinsames inneres Terminal, beispielsweise einer gemeinsamen Anode oder Kathode, miteinander verbunden. Typischerweise werden zum Betrieb als Einzelphotonendetektor eingerichtete p-n-Übergang an einer Seite des p-n-Übergangs unmittelbar über das Substrat angeschlossen. Aufgrund einer insbesondere bei BCD-Technologien jedoch üblichen Abschirmung bzw. Isolation der Strukturen und Schaltungen vom Substrat, werden häufig entsprechende Terminals zur Kontaktierung an die Substartoberfläche gelegt. Bei einer erfindungsgemäßen Ausbildung einer p-n-Übergangs-Doppelstruktur ergibt sich jedoch unmittelbar ein gemeinsamer Terminalbereich (Anode oder Kathode), der eine gemeinsame Ansteuerung über eine einzelne Kontaktierung, z. B. an der Substartoberfläche, ermöglicht.

Vorzugsweise ist die Ober- und/oder Unterseite des Substrats im Bereich des iQRNG an einer Oberfläche verspiegelt oder diese umfasst eine lichtblockierende Schicht. Eine Verspiegelung der Oberflächen eines Substrats (z. B. mittels Metallisierung oder dem Aufbringen dichroitischer Schichten) sowie das Aufbringen einer lichtblockierenden Schicht sind im Stand der Technik bekannt und wurden obenstehend bereits diskutiert. Auch bei einem beschriebenen iQRNG können diese Ansätze zu einer Abschirmung gegenüber äußeren Photonen ("Abschattung") sowie zur Erhöhung der Effizienz durch Rückreflektion der von der zugehörigen Photonenquelle erzeugten Photonen genutzt werden. Alternativ oder zusätzlich kann zudem eine entsprechende Verkapselung im Bereich des iQRNG oder das Umgeben dieses Bereichs mit einer Metallbox erfolgen.

Vorzugsweise ist die Oberfläche des Substrats im Bereich des iQRNG mit einer Silizid-Schicht und oberhalb mit einer Metallisierung bedeckt. Bevorzugt ist die Metallisierung im Bereich des iQRNG geschlossen. Die Metallisierung kann als Verspiegelung für den Innenbereich und/oder als wellenlängenunabhängige Abschattung für äußeren Photonen wirken. In gleicher Weise gilt das für eine ausgebildete Silizid-Schicht.

Vorzugsweise wird ein Austreten von durch die Photonen- bzw. Einzelphotonenquelle bereitgestellten Photonen an der Oberfläche des Substrats und/oder der Rückseite des Substrats durch eine Kombination von jeweils mindestens einem Element aus Metallabdeckungen, Seitenwandkontakten und Vias verhindert. Durch die genannten Elemente kann eine weitgehend vollständige Abschirmung bzw. Verkapselung des iQRNG erreicht werden, wodurch neben einer Abschirmung nach außen auch eine hohe Immunität gegenüber äußeren Störungen gewährleistet werden kann.

Im Hinblick auf mögliche Angriffsszenarien sind jedoch neben einer rein optischen Einflussnahme bzw. einem Auslesen von emittierten Photonen noch weitere Zugriffswege von außen denkbar. Ein weiterer Aspekt der vorliegenden Erfindung besteht daher darin, einen erfindungsgemäßen iQRNG, welcher aufgrund seiner spezifischen Anordnung der umfassten Photonenquelle und des zugehörigen Einzelphotonendetektors bereits eine gegenüber dem Stand der Technik deutlich erhöhte Sicherheit bietet, noch weiter gegen unberechtigte Zugriffe und eine Einflussnahme von außen, beispielsweise durch Beobachter bzw. Angreifer, zu härten. Auf eine mögliche optische Abschirmung wurde obenstehend bereits eingegangen, weitere Angriffe könnten beispielsweise auf der Basis einer gezielten Auswertung oder Beeinflussung chemischen oder elektronischer Eigenschaften der erfindungsgemäßen iQRNG erfolgen.

Wie eingangs bereits ausgeführt, nutzen Quanten-Zufallszahlengeneratoren die Prinzipien der Quantenmechanik, um echte Zufallszahlen zu erzeugen, die in der Kryptografie und anderen sicherheitskritischen Anwendungen verwendet werden können. Diese Zufallszahlen sind von entscheidender Bedeutung, da sie die Grundlage für sichere Verschlüsselungsschlüssel und andere kryptografische Prozesse bilden. Trotz ihrer theoretischen Sicherheit können QRNGs jedoch anfällig für verschiedene Arten von Seitenkanalangriffen sein, die die Integrität und Vertraulichkeit der generierten Zufallszahlen gefährden können.

Ein möglicher Angriffsvektor ist die elektromagnetische Abstrahlung. QRNGs können elektromagnetische Signale aussenden, die von einem Angreifer abgefangen und analysiert werden können. QRNGs können elektromagnetische Signale aussenden, die von einem Angreifer abgefangen und analysiert werden können. Diese Signale könnten Informationen über die internen Zustände des QRNGs preisgeben, was es einem Angreifer ermöglichen könnte, die generierten Zufallszahlen zu rekonstruieren oder vorherzusagen. Um solche Angriffe zu verhindern, sollten QRNGs gut abgeschirmt und gegen elektromagnetische Abstrahlung geschützt werden.

Ein weiterer Angriffsvektor ist der Stromverbrauch. Der Stromverbrauch eines QRNGs kann variieren, je nachdem, welche Zufallszahlen generiert werden. Ein Angreifer könnte diese Schwankungen messen und daraus Rückschlüsse auf die erzeugten Zufallszahlen ziehen. Dies könnte durch den Einsatz von hochsensiblen Strommessgeräten geschehen, die in der Lage sind, kleinste Veränderungen im Stromverbrauch zu detektieren. Um solche Angriffe zu verhindern, sollten QRNGs so gestaltet werden, dass ihr Stromverbrauch unabhängig von den generierten Zufallszahlen konstant bleibt.

Auch die Temperaturabhängigkeit kann eine Rolle spielen. Die Leistung von QRNGs kann temperaturabhängig sein, was bedeutet, dass Änderungen der Umgebungstemperatur die Zufallszahlengenerierung beeinflussen könnten. Ein Angreifer könnte die Temperatur des Geräts manipulieren, um die Zufallszahlen zu beeinflussen oder vorherzusagen. Um solche Angriffe zu verhindern, können QRNGs in temperaturkontrollierten Umgebungen betrieben werden und über Mechanismen verfügen, die ihre Leistung unabhängig von Temperaturschwankungen stabil halten.

Bei optischen QRNGs wie einem erfindungsgemäßen iQRNG, könnte ein Angreifer auch versuchen, die Lichtquelle zu beeinflussen oder die Detektoren zu überwachen, um die generierten Zufallszahlen zu manipulieren. Dies könnte durch das Einbringen von zusätzlichem Licht oder durch das Blockieren von Licht geschehen. Um solche Angriffe zu verhindern, sollten optische QRNGs gut abgeschirmt und gegen äußere Einflüsse geschützt werden.

Weiterhin gibt es sogenannte Timing-Angriffe. Durch die Messung der Zeit, die ein QRNG für die Generierung von Zufallszahlen benötigt, könnte ein Angreifer Muster erkennen und die Zufallszahlen vorhersagen. Dies könnte durch den Einsatz von hochpräzisen Zeitmessgeräten geschehen, die in der Lage sind, kleinste Unterschiede in der Generierungszeit zu detektieren. Um solche Angriffe zu verhindern, sollten QRNGs so gestaltet werden, dass ihre Generierungszeit unabhängig von den erzeugten Zufallszahlen konstant bleibt.

Chemische Angriffe auf halbleiterintegrierte QRNGs sind ein bisher weniger erforschtes, aber potenziell durchaus ernstzunehmendes Risiko. Diese Angriffe könnten beispielsweise darauf abzielen, die physikalischen Eigenschaften der Halbleiterkomponenten zu verändern, um die Zufallszahlengenerierung zu beeinflussen oder zu stören.

Ein möglicher Ansatz für chemische Angriffe besteht darin, die Halbleitermaterialien durch chemische Reaktionen zu verändern. Dies könnte durch die Einwirkung von korrosiven Substanzen geschehen, die die Integrität der Halbleiterstrukturen beeinträchtigen. Solche Angriffe könnten die Leistung der QRNGs beeinträchtigen, indem sie die Effizienz der Lichtquellen oder Detektoren verringern oder die elektrischen Eigenschaften der Schaltkreise verändern.

Ein weiterer potenzieller chemischer Angriff könnte die gezielte Dotierung der Halbleitermaterialien umfassen. Durch das Einbringen von Fremdatomen in die Halbleiterschicht könnte ein Angreifer die elektronischen Eigenschaften des Materials verändern und somit die Zufallszahlengenerierung beeinflussen. Dies könnte zu einer Vorhersagbarkeit der generierten Zufallszahlen führen, was die Sicherheit der QRNGs erheblich beeinträchtigen würde.

Obwohl chemische Angriffe auf QRNGs derzeit eher theoretischer Natur sind und in der Praxis noch nicht weit verbreitet sind, sollten diese potenziellen Bedrohungen mit berücksichtigt werden und es sollten Maßnahmen ergreifen werden, um die chemische Stabilität und Integrität der QRNGs zu gewährleisten. Dies kann beispielsweise durch den Einsatz von Schutzbeschichtungen, die Auswahl chemisch resistenter Materialien und die Implementierung von Überwachungsmechanismen zur Erkennung von chemischen Veränderungen geschehen.

Diese potentiellen Angriffsszenarien zeigen, dass selbst hochmoderne QRNGs nicht vollständig vor Seitenkanalangriffen geschützt sind. Es ist daher wichtig, zusätzliche Sicherheitsmaßnahmen zu implementieren, um die Integrität und Vertraulichkeit der generierten Zufallszahlen zu gewährleisten. Dazu gehören unter anderem die physische Abschirmung der Geräte, die Implementierung von Mechanismen zur Stabilisierung des Stromverbrauchs und der Generierungszeit sowie der Betrieb in kontrollierten Umgebungen.

Bei einem erfindungsgemäßen iQRNG können die besagten Abschirmungen unmittelbar über das realisierte Struktursystem selbst bzw. die vergrabene Anordnung der Entropiequelle im Inneren eines Substrats erreicht werden. Eine Abschirmung sowohl gegen elektromagnetische als auch optische Ab- bzw. Einstrahlung kann beispielsweise durch eine gemeinsame und durchgehende Metallisierung der Oberfläche des Substrats oberhalb des gesamten Bauraums des iQRNGs (bzw. der zugehörigen Entropiequelle) erreicht werden. An der entsprechenden Stelle an der Unterseite des Substrats kann ebenfalls eine Metallisierung zur Abschirmung des unteren Bauraums vorgenommen werden. Diese einzelnen Metallisierungen können dabei neben Ihrer Schirmungsfunktion auch gleichzeitig eine elektrische Kontaktierung einzelner Bereiche des iQRNG ermöglichen. Vorzugsweise können dabei zur Erhöhung der Schichtdicke mehrere Metallisierungsebenen übereinander angeordnet werden (z. B. 12-15 Lagen).

Metallische Mehrschichtlagen bietet in der Regel eine bessere Abschirmwirkung als eine einfache Metalllage. Dies liegt daran, dass mehrere Schichten aus unterschiedlichen oder gleichen Metallen kombiniert werden können, um die Abschirmwirkung zu maximieren. Ein Grund dafür ist, dass jede Metallschicht elektromagnetische Wellen reflektieren und absorbieren kann. Durch die Kombination mehrerer Schichten wird die Wahrscheinlichkeit erhöht, dass die Wellen mehrfach reflektiert und absorbiert werden, was die Gesamtabschirmung verbessert. Unterschiedliche Metalle haben unterschiedliche Abschirmungseigenschaften. Durch die Kombination von Metallen mit komplementären Eigenschaften kann eine effektivere Abschirmung erreicht werden. Zum Beispiel könnte eine Schicht aus einem hochleitfähigen Metall wie Kupfer mit einer Schicht aus einem ferromagnetischen Material wie Nickel kombiniert werden. Mehrere Schichten können auch helfen, die Durchdringungseffekte zu dämpfen, die bei einer einzelnen Schicht auftreten könnten. Dies ist besonders wichtig bei hochfrequenten elektromagnetischen Wellen, die dazu neigen, dünne Metallschichten zu durchdringen. Mehrschichtige Abschirmungen bieten zudem eine zusätzliche Sicherheitsebene. Wenn eine Schicht beschädigt oder korrodiert wird, können die anderen Schichten weiterhin eine effektive Abschirmung bieten.

Anstatt einer oder mehrerer Metallschichten kann zur Abschirmung gegenüber elektromagnetischer Strahlung (inklusive Photonen) auch eine Schicht aus Polysilizium auf die Oberfläche des Substrats im Bereich des iQRNG aufgebracht werden. Polysilizium wird häufig in der Halbleiterindustrie verwendet, insbesondere bei der Herstellung von Transistoren und Solarzellen. Es hat zwar nicht die gleichen Abschirmungseigenschaften wie Metalle und ist zudem für Photonen bei gleicher Dicke zumeist optisch transparenter, es handelt sich aber um ein prozesstechnologisch günstigeres Verfahren, welches deutlich einfacher umzusetzen ist.

Des Weiteren kann eine Abdeckung eines den erfindungsgemäßen iQRNG umfassenden Schaltkreises bzw. ICs (oder eines Bereichs bzw. Teils davon), zusätzlich zu den oben genannten Schichten zur Abschirmung oder als Einzelelement, bevorzugt mit einer Schicht aus Silizium-Nitrid (SiN) erfolgen. Durch eine solche Schicht kann ein bestimmter zuvor eingestellter Wasserstoffgehalt (H₂) in einem IC möglichst konstant gehalten werden, da SiN-Schichten nur eine geringe Permeabilität hierfür aufweisen. Ein konstanter Wasserstoffgehalt ist bei der Herstellung und dem Betrieb von ICs aus mehreren Gründen wichtig. Zunächst hilft Wasserstoff, Defekte in Halbleitermaterialien wie Silizium zu vermeiden. Diese Defekte können die elektrischen Eigenschaften der Halbleiterbauelemente beeinträchtigen und zu Fehlfunktionen führen. Ein konstanter Wasserstoffgehalt minimiert solche Defekte und gewährleistet die Zuverlässigkeit der ICs. Darüber hinaus wird Wasserstoff oft verwendet, um die Oberflächen von Halbleitermaterialien zu passivieren. Dies bedeutet, dass Wasserstoff an die Oberflächenatome bindet und so die Anzahl der freien Elektronen reduziert, die unerwünschte chemische Reaktionen verursachen könnten. Eine konstante Wasserstoffkonzentration stellt sicher, dass die Passivierung effektiv bleibt. Wasserstoff kann auch dazu beitragen, die Oxidation von Metallverbindungen in den ICs zu reduzieren. Oxidation kann die Leitfähigkeit von Metallverbindungen verringern und somit die Leistung der ICs beeinträchtigen. Ein konstanter Wasserstoffgehalt hilft, die Oxidation zu kontrollieren und die Leitfähigkeit der Metallverbindungen zu erhalten. Schließlich tragen Schwankungen im Wasserstoffgehalt zu Veränderungen der elektrischen Eigenschaften der Halbleitermaterialien bei. Dies kann die Leistung und Zuverlässigkeit der ICs beeinträchtigen und zudem einen chemischen Angriffsvektor öffnen. Ein konstanter Wasserstoffgehalt hilft dabei, die elektrischen Eigenschaften stabil zu halten und eine gleichbleibende Leistung zu gewährleisten.

Der seitliche Bereich um den iQRNG bzw. die umfasste Entropiequelle herum kann durch eine entsprechende Tiefendotierung des Substrats bzw. dessen Ausgestaltung als leitfähiger Bereich erfolgen. Eine solche Anordnung kann analog zu einer Metallisierung der Oberflächen des Substrats gleichzeitig zur Tiefenkontaktierung von innerhalb des Substrats liegenden Bereichen, wie beispielsweise zur Kontaktierung von vergrabenen Schichten, genutzt werden. Zur Vermeidung zusätzlicher elektromagnetischer Abstrahlungen aus diesen Strukturen heraus werden diese jedoch vorzugsweise nicht zur Übertragung von modulierten Signalen genutzt. In den in den Figuren gezeigten beispielhaften Ausführungsformen erfindungsgemäßer iQRNG ist dieser Schirmungsbereich jeweils als isolierte äußere, sich in vertikaler Richtung von der Oberfläche ausgehend in das Substrat erstreckende Tiefenstrukturen zu erkennen. In einer bevorzugten Ausführungsform eines erfindungsgemäßen iQRNG wird die "Detektorfläche" des Einzelphotonendetektors als kreisrunde Struktur ausgebildet, so dass die seitliche Abschirmung dann vorzugsweise eine geschlossene kreisringförmige Zylinderstruktur ausbildet (die Abschirmung kann jedoch beliebige, vorzugsweise seitlich geschlossene, Formen aufweisen). Eine solche Anordnung einer seitlichen Abschirmung gegenüber elektromagnetischer Strahlung wird auch als sogenannter Seal-Ring (iQRNG-Seal-Ring) bezeichnet.

Ebenfalls zur Abschirmung können die in BCD-Technologien typischerweise ausgebildeten isolierenden Wannenbereiche, hier insbesondere um die Photonenquelle und den Einzelphotonendetektor herum, eingesetzt werden. Diese werden üblicherweise zur elektrischen Isolation verschiedener Gebiete in einem Substrat genutzt, so dass beispielsweise auch unterschiedlich Bezugspotentiale (GND) in diesen Gebieten bereitgestellt werden können. Eine solche lokale Isolation wirkt jedoch auch stromsperrend für Signalübertragungen und kann bei geeigneter Ausbildung der einzelnen Wannengebiete auch eine elektromagnetische Kopplung der isolierten Gebiete untereinander effektiv unterdrücken.

Als weiteres Abschirmelement kann eine übliche Verkapselung eines erfindungsgemäßen iQRNG (bzw. eines einen oder mehrere erfindungsgemäße iQRNG umfassenden ICs) mit einem fachüblichen Vergussmaterial wir Kunststoff erfolgen. Bei dem Kunststoff kann es sich insbesondere um Duroplast handeln. Dem Duroplast kann dabei Siliziumoxid (z. B. SiO₂) zur Anpassung des thermischen Ausdehnungskoeffizienten der miteinander verbundenen Materialien hinzugegeben werden.

Vorzugsweise sind mehrere beschriebene iQRNG bzw. ein vielkanaliges QRNG-System umfassend eine Vielzahl beschriebener iQRNG auf dem gleichen Substrat realisiert. Zusammen mit einer kompakten Abschirmung der einzelnen iQRNG lassen sich dabei sehr hohe Integrationsdichten mit einer hohen Anzahl an dicht gepackten, voneinander entkoppelter iQRNG und damit insgesamt hohe effektive Zufallszahlenraten erreichen. Bei iQRNG im Stand der Technik ist die Integrationsdichte vor allem durch die strukturelle Nebeneinanderanordnung der einzelnen Komponenten beschränkt.

Vorzugsweise umfasst ein beschriebener QRNG eine elektronische Schaltung zur Generierung und Ausgabe einer digitalen Zufallszahlenfolge basierend auf der statistischen Auswertung der zeitlichen Abfolge von Signalen des Einzelphotonendetektors.

Ein weiterer Aspekt betrifft eine integrierte elektronische Schaltung (engl. "Integrated Circuit, IC"), umfassend mindestens einen beschriebenen iQRNG. Insbesondere kann es sich dabei um ICs für Anwendungen auf der Basis von sicherheitsrelevanten Chip-basierten Systemen (engl. "System on Chip, SoC") handeln.

Vorzugsweise wird ein beschriebener iQRNG dabei in einen Pad-Rahmen (auch als Pad-Rand bezeichnet) der integrierten elektronischen Schaltung platziert. Bei nicht Pad-bestimmten integrierten elektronischen Schaltungen befinden sich typischerweise im Pad-Rahmen eine Vielzahl an freien Flächen, die jedoch typischerweise nicht für digitale Schaltungen oder größere analoge Schaltungsblöcke genutzt werden können. Da ein beschriebener iQRNG aufgrund seines äußerst kompakten Aufbaus jedoch entsprechend kleinbauend ist und auch die nachfolgende Schaltungstechnik üblicherweise nur eine geringe Anzahl an Gattern umfasst, kann diese Art von QRNG dennoch in einen üblichen Pad-Rahmen integriert werden. Durch den äußerst kompakten Aufbau der beschriebenen iQRNG können dieser auch platzsparend und ohne größeren Aufwand in bereits bestehende Designs für integrierte elektronische Schaltungen implementiert werden. Dadurch wird gegenüber herkömmlichen Ansätzen zur Integration von QRNGs eine signifikante Reduzierung des Flächenverbrauchs erreicht. Die Vorteile eines beschriebenen iQRNG können dabei voll ausgeschöpft werden.

Die Vorteile eines beschriebenen iQRNG gegenüber den bekannten Implementierungen im Stand der Technik basieren vor allem auf der weiteren Miniaturisierung des gesamten Zufallszahlengeneratoraufbaus und die dadurch erreichte hochgradige Integration bzw. Miniaturisierung der erzeugten Strukturen. Aufgrund der vollständigen Isolation der SPS und der zugehörigen SPAD gegenüber der Umgebung kann die Sicherheit der Zufallszahlenerzeugung deutlich erhöht werden. Die gerichtete vertikale Abstrahlung aus der als SPS verwendeten Zener-avLED trägt ebenfalls zur Erhöhung der Sicherheit sowie zu einer wesentlichen Steigerung der Effizienz der Zufallszahlenerzeugung bei.

Eine Kointegration einer geeigneten Photonenquelle und eines Einzelphotonendetektors auf dem gleichen vertikalen Layout-Querschnitt eines gemeinsamen Substrats zu realisieren, insbesondere bei Verwendung einer üblicherweise verwendeten kostengünstigen Planartechnologie (d. h. unter Prozessierung nur von einer Substratseite aus und ohne eine Verwendung von anderen aufwändigen Ansätzen, wie etwa Hybrid-Integration, z. B. via eines Chiplet-Ansatzes) ist bisher im Stand der Technik derart nicht möglich gewesen.

Ein mittels einer neuartigen BCD-Technologie bereitgestellter, unterhalb des p-n-Übergangs der SPAD ausgebildeter zweiter tiefliegender p-n-Übergang kann als zusätzlicher Photodetektor zur Überwachung von Angriffen insbesondere von der Rückseite des Substrats ausgehend genutzt werden. Dabei können die Effizienz der optischen Einkopplung in die zugehörigen SPADs sowie die Isolation und die Sicherheit durch die Nutzung von internen Metall- und Silizid-Spiegeln weiter gesteigert werden. Für die verwendeten Zener-avLED als Photonenquelle ist im Vergleich zum Stand der Technik nur eine relativ geringe Betriebsspannung von < 8 V erforderlich. Da zudem die Absorptionslänge des emittierten sichtbaren Lichts im Silizium gering (d. h. der zugehörige Absorptionskoeffizient hoch) ist, kann auch eine sehr gute optische Isolation zwischen benachbarten Elementen erzielt werden. Dies ermöglicht die Anordnung in einem Array mit hoher Zellendichte und einer daraus folgenden entsprechend hohen Erzeugungs- bzw. Entropierate.

Weitere Aspekte der vorliegenden Erfindung sind in den abhängigen Ansprüchen oder in der folgenden Beschreibung der Zeichnungen offenbart.

### Kurze Beschreibung der Figuren

Die Erfindung wird nachfolgend in Ausführungsbeispielen anhand der zugehörigen Zeichnungen erläutert. Es zeigen:
- Figuren 1: beispielhafte perspektivische Ansichten verschiedene Ausführungsformen einer erfindungsgemäßen Verschlüsselungs-/Authentifizierungs-Kommunikationsvorrichtung;
- Figur 2: ein Blockdiagramm einer Ausführungsform der vorliegenden Erfindung, in dem das betriebliche Zusammenwirken von Funktionskomponenten dargestellt ist;
- Figur 3: ein Blockdiagramm, das den Anschluss und die Verwendung der vorliegenden Erfindung in einem Computernetzwerk zeigt;
- Figur 4: ein Diagramm des Datenflusses innerhalb einer erfindungsgemäßen Verschlüsselungs- und Authentifizierungsvorrichtung, das die Verarbeitungssequenz für den Online- und Offline-Modus der Verschlüsselung und Authentifizierung zeigt;
- Figur 5: Blockdiagramme, die sowohl die Geräte- als auch die Benutzerauthentifizierung gemäß der Standard-Nachrichtenauthentifizierung sowie in Verbindung mit digitalen Signaturen darstellen;
- Figur 6: ein Blockdiagramm, das die erfindungsgemäße Ver- und Entschlüsselung von Daten darstellt;
- Figur 7: ein Blockdiagramm, das die Authentifizierung und Verifizierung gemäß der vorliegenden Erfindung darstellt;
- Figur 8: ein Flussdiagramm, das den Prozess eines beispielhaften erfindungsgemäßen Verbindungsaufbaus zeigt;
- Figur 9: ein Flussdiagramm, das das ein beispielhaftes erfindungsgemäßes Protokoll für die Verarbeitung einer eingehenden Anfrage darstellt;
- Figur 10: ein Flussdiagramm, das ein beispielhaftes erfindungsgemäßes Protokoll für die Verarbeitung einer ausgehenden Aufgabe darstellt;
- Figur 11: eine schematische Darstellung einer ersten Ausführungsform eines iQRNG gemäß Stand der Technik in der Aufsicht;
- Figur 12: eine schematische Darstellung einer zweiten Ausführungsform eines iQRNG gemäß Stand der Technik in einer Seitenansicht;
- Figur 13: eine schematische Darstellung eines mit einem Verfahren zur Bereitstellung tiefliegender p-n-Übergänge in einem BCD-Prozess bereitgestellten BCD-Substrats und eine TCAD-Darstellung der resultierenden Dotierstoffverteilung;
- Figur 14: eine schematische Darstellung einer beispielhaften ersten Ausführungsform eines beschriebenen iQRNG;
- Figur 15: eine schematische Darstellung einer beispielhaften zweiten Ausführungsform eines beschriebenen iQRNG;
- Figur 16: eine schematische Darstellung einer beispielhaften dritten Ausführungsform eines beschriebenen iQRNG;
- Figur 17: graphische Darstellung der Abhängigkeit des a) SPAD-Stroms und b) des Verhältnisses zwischen SPAD-Strom und Zener-Strom in Abhängigkeit von der Zener-Sperrspannung bei verschiedenen SPAD-Sperrspannungen (kleiner, gleich, größer der Durchbruchspannung) innerhalb eines beschriebenen iQRNGs;
- Figur 18: eine schematische Darstellung einer beispielhaften elektronischen Schaltung eines Quantenzufallsgenerators zur Generierung und Ausgabe einer digitalen Zufallszahlenfolge; und
- Figur 19: eine schematische Darstellung eines beispielhaften Layouts einer integrierten elektronischen Schaltung mit einem beschriebenen iQRNG im Pad-Rahmen in der Aufsicht.

### Detaillierte Beschreibung der Figuren

Es werden nun detaillierte Ausführungsformen beschrieben, die beispielhaft in den beigefügten Zeichnungen dargestellt sind. Die Wirkungen und Merkmale dieser Ausführungsformen werden unter Bezugnahme auf die beigefügten Zeichnungen beschrieben. In den Zeichnungen bezeichnen gleiche Bezugsziffern, gleiche Elemente und auf redundante Beschreibungen wird verzichtet. Die vorliegende Offenbarung kann in verschiedenen Formen verwirklicht werden und ist nicht so zu verstehen, dass sie nur auf die hier dargestellten Ausführungsformen beschränkt ist. Vielmehr sind diese Ausführungsformen Beispiele, damit diese Offenbarung gründlich und vollständig ist und dem Fachmann die Aspekte und Merkmale der vorliegenden Offenbarung vollständig vermittelt.

Verfahren, Elemente und Techniken, die für den Fachmann zum vollständigen Verständnis der Aspekte und Merkmale der vorliegenden Offenbarung nicht notwendig sind, werden daher gegebenenfalls nicht beschrieben. In den Zeichnungen können die relativen Größen von Elementen, Schichten und Bereichen zur Verdeutlichung übertrieben dargestellt sein.

Wie hierin verwendet, schließt der Begriff "und/oder" alle Kombinationen von einem oder mehreren der aufgeführten Elemente ein. Ferner bezieht sich die Verwendung von "kann" bei der Beschreibung von Ausführungsformen der vorliegenden Offenbarung auf "eine oder mehrere Ausführungsformen der vorliegenden Offenbarung". In der folgenden Beschreibung von Ausführungsformen können die Begriffe in der Einzahl auch die Mehrzahl umfassen, sofern aus dem Kontext nicht eindeutig etwas Anderes hervorgeht.

Obwohl die Begriffe "erste" und "zweite" zur Beschreibung verschiedener Elemente verwendet werden, sollten diese Elemente nicht durch diese Begriffe eingeschränkt werden. Diese Begriffe werden nur verwendet, um ein Element von einem anderen Element zu unterscheiden. So kann beispielsweise ein erstes Element als zweites Element bezeichnet werden, und ebenso kann ein zweites Element als erstes Element bezeichnet werden, ohne dass dies vom Anwendungsbereich der vorliegenden Offenbarung abweicht. Ausdrücke wie "mindestens eines von", wenn sie einer Liste von Elementen vorangestellt werden, modifizieren die gesamte Liste und nicht nur die einzelnen Elemente der Liste.

Begriffe wie "im Wesentlichen", "ungefähr" und ähnliche werden als Annäherungsbegriffe und nicht als Gradangaben verwendet und sollen die inhärenten Abweichungen bei gemessenen oder berechneten Werten berücksichtigen, die von Fachleuten erkannt werden. Wenn der Begriff "im Wesentlichen" in Verbindung mit einem Merkmal verwendet wird, das durch einen numerischen Wert ausgedrückt werden kann, bezeichnet der Begriff "im Wesentlichen" einen Bereich von zumindest +/- 5 % des Wertes, der auf den Wert zentriert ist.

Bei der vorliegenden Erfindung handelt es sich um ein tragbares Gerät, das als Identifizierungstoken, als Kommunikationsnetzschnittstelle, als Datenverschlüsseler und als Benutzer-, Geräte- und/oder Nachrichtenauthentifikator verwendet werden kann. Sie stellt ein elektronisches Token zur Verfügung, das vom Benutzer mitgeführt werden kann, um ihn gegenüber einem Netz, einem Computersystem oder einem Anwendungsprogramm eindeutig zu identifizieren. Das Gerät enthält eine Netzwerkschnittstelle, welche die Daten so moduliert, dass es direkt an einen Datenübertragungsweg, z. B. das Internet, angeschlossen werden kann. Das Gerät lässt die Kommunikation erst dann zu, wenn das Gerät und gegebenenfalls der Benutzer durch den Authentifikator identifiziert worden sind. Das Gerät enthält auch die gesamte Kryptographie, die zum Schutz der Daten durch Datenverschlüsselung, Nachrichtenauthentifizierung oder digitale Signaturen oder eine beliebige Kombination davon erforderlich ist. Somit stellt die vorliegende Erfindung dem Benutzer die gesamte Kommunikations- und Sicherheitsausrüstung zur Verfügung, die für die Verwendung mit Personalcomputern und elektronischen Notebooks erforderlich ist, und macht jede weitere Sicherheitsvorrichtung überflüssig. Die Vorrichtung ist eine vollständige Dienstschnittstelle/Sicherheitsvorrichtung, die eine vollständige Kommunikationssicherheit bei der Verwendung mit tragbaren Computergeräten praktisch macht.

Obwohl die folgende Beschreibung viele Besonderheiten enthält, sollten diese nicht als Einschränkung des Umfangs der Erfindung verstanden werden, sondern veranschaulichen lediglich einige der vielen möglichen Varianten und/oder Ausführungsformen der vorliegenden Erfindung. Beispielsweise kann das Modem (d. h. die Netzwerkschnittstelle oder der Adapter) anstelle eines Telefonsystems an ein Local Area Network (LAN) angeschlossen werden. Darüber hinaus können in der vorliegenden Erfindung verschiedene Modulationstechniken verwendet werden, z. B. solche, die mit einer asymmetrischen digitalen Teilnehmerleitung (ADSL) oder einem Glasfasernetz verbunden sind, so dass das Gerät mit Systemen verwendet werden kann, die solche Kommunikations- und/oder Datenübertragungsstandards verwenden. Darüber hinaus ist zu berücksichtigen, dass die Daten, die über das Gerät übertragen werden, verschiedene Nachrichtenformen umfassen können, wie z. B. Text, Videobilder und/oder digitalisiertes Audio.

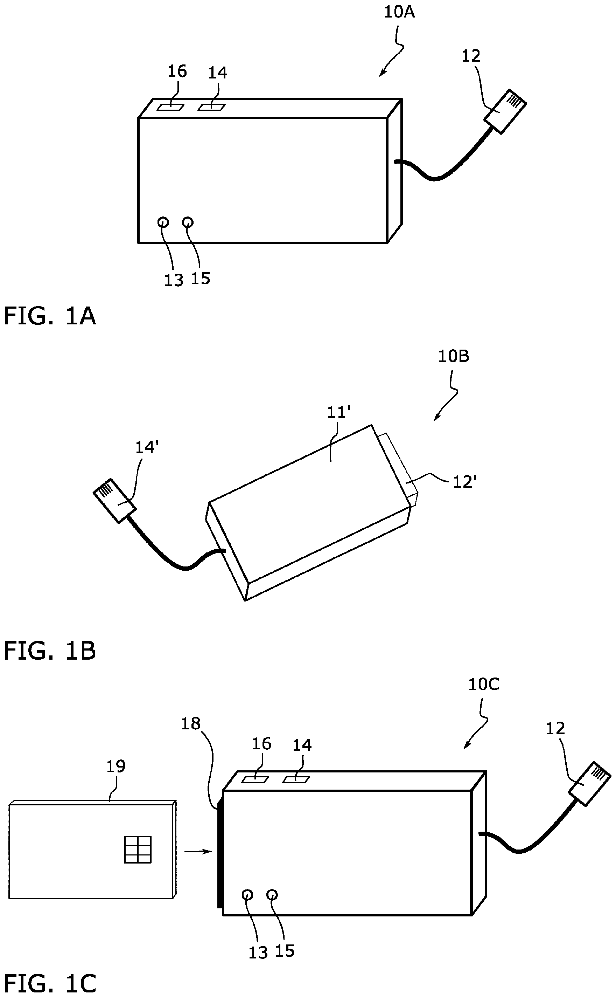

In Figur 1A ist die Verschlüsselungs-/Authentifizierungs-Kommunikationsvorrichtung 10A in einem einzigen Gehäuse 11 von geeigneter Größe dargestellt. Es versteht sich, dass alle Funktionen der Verschlüsselung, Authentifizierung und Netzanbindung durch die Vorrichtung der vorliegenden Erfindung mittels der darin enthaltenen oder damit verbundenen Komponenten ausgeführt werden. Darüber hinaus kann die vorliegende Erfindung physisch gegen unbefugte Manipulationen geschützt werden. So ist es beispielsweise möglich, eine Vergussmasse zu verwenden, die Lösungsmittel enthält, welche die elektronischen Bauteile beschädigen und somit die Vorrichtung bei einem Versuch der unbefugten Manipulation unbrauchbar machen.

Die Vorrichtung 10A umfasst vorzugsweise einen Anschlussport 12, einen Anschlussport 14, einen Anschlussport 16, eine erste Anzeige 13 und eine zweite Anzeige 15, die am Gehäuse 11 angebracht sind. Der Anschlussport 12 umfasst einen Stecker und ein Kabel zum direkten Anschluss an einen Computerport eines Personalcomputers oder Terminals. Außerdem ist der Anschluss 14 eine modulare Buchse, die direkt an einen Datenübertragungsweg, z. B. ein LAN oder Glasfasernetz, angeschlossen werden kann. Selbstverständlich kann ein Anschluss an einen Datenübertragungsweg in sämtlichen Ausführungsformen dieser Erfindung auch kabellos bzw. funkbasiert über alle dem Fachmann bekannte Methoden (GSM, UMTS, WLAN etc.) erfolgen. In diesen Fällen kann es sich bei dem Anschlussport 12 beispielsweise um einen Antennenanschluss und bei dem Anschluss 14 beispielsweise um eine zugehörige Antenne handeln.

Die Auswahl einer Stromquelle für die Stromversorgung der vorliegenden Erfindung hängt von der Art der Umgebung des Benutzers ab. Es ist offensichtlich, dass die Energie für den Betrieb der Vorrichtung von einer beliebigen von mehreren Quellen geliefert werden kann. Als Beispiel, aber nicht als Einschränkung zu verstehen, können die Methoden zur Stromversorgung der Vorrichtung 10A beispielsweise Folgendes umfassen: eine Batterie, ein externes Stromversorgungsmodul, eine Verbindung mit der Tastatur des Computers des Benutzers, eine Verbindung mit anderen Anschlüssen des Computers des Benutzers oder eine Stromversorgung über die Kommunikationsschaltungen. Wenn die vorliegende Erfindung über bestimmte externe Quellen mit Strom versorgt wird, kann der dritte Anschluss 16 vorzugsweise am Gehäuse vorgesehen sein, um eine elektrische Verbindung zwischen der Vorrichtung 10 und der jeweiligen externen Stromquelle zu ermöglichen.

Darüber hinaus umfasst die Vorrichtung 10A eine erste und eine zweite Anzeige, 13 und 15, die am Gehäuse 11 angebracht sind. Erste und zweite Anzeigen, 13 und 15, können vorzugsweise Leuchtdioden (LEDs) sein, die dem Benutzer den Betriebszustand der vorliegenden Erfindung anzeigen. Zum Beispiel kann die erste Anzeige 13 vorzugsweise eine rote LED sein, die aufleuchtet, wenn die Vorrichtung 10A Daten in einem nicht sicheren (d. h. nicht verschlüsselten) Modus überträgt, während die zweite Anzeige 15 vorzugsweise eine grüne LED sein kann, die aufleuchtet, wenn die Vorrichtung Daten in einem sicheren (d. h. verschlüsselten) Modus überträgt.

Es versteht sich von selbst, dass die vorliegende Erfindung zwar eindeutig als Verschlüsselungs-, Authentifizierungs- und Netzwerkschnittstelle fungiert (Funktionen, die später ausführlicher beschrieben werden), die physische Ausgestaltung der vorliegenden Erfindung jedoch variieren kann, um den Anforderungen der jeweiligen Anwendung gerecht zu werden, in der das Gerät eingesetzt wird. Dementsprechend sollte man sich darüber im Klaren sein, dass es zwar verschiedene alternative und beispielhafte physische Ausführungsformen gibt, die hier beschrieben werden, dass aber jedes Gerät in der Lage ist, die hier ebenfalls beschriebenen Verschlüsselungs-, Authentifizierungs- und Netzwerkschnittstellenfunktionen unabhängig von seiner physischen Ausprägung auf einzigartige Weise auszuführen. Dementsprechend sollte man sich beispielsweise bewusst sein, dass die Form des Anschlusses 14 von der in FIG. 1A dargestellten Form abweichen oder gänzlich durch alternative äquivalente Anschlussverfahren (kabellos) ersetzt kann, je nach der jeweiligen Kommunikationsschnittstelle, an die die vorliegende Erfindung angeschlossen wird. Ebenso kann der Anschluss 12, wie weiter unten zu sehen sein wird, je nach Art des Computers oder Terminals, an den die vorliegende Erfindung angeschlossen ist, variieren.

In FIG. 1B ist eine alternative Ausführungsform der erfindungsgemäßen Vorrichtung, die als Vorrichtung 103B bezeichnet wird, dargestellt. In dieser besonderen Ausführungsform der vorliegenden Erfindung umfasst die physische Manifestation ein kartengroßes Gehäuse 11', ähnlich in Länge und Breite einer Kreditkarte. Die Vorrichtung 10B umfasst vorzugsweise die Anschlussbuchsen 12' und 14'. Bei dem Anschluss 12' handelt es sich um eine Standardbuchse, die in der Technik als PCMCIA-Anschluss bekannt ist und direkt an jeden Computer mit einem entsprechenden PCMCIA-Gegenstecker angeschlossen werden kann. Es sollte klar sein, dass PCMCIA ein elektronisches Industriestandard-Verbindungsprotokoll ist und daher wird ein solches Protokoll hier nicht beschrieben. Darüber hinaus umfasst der Anschlussport 14' eine modulare Buchse und ein Kabel für den direkten Anschluss an ein Datenübertragungsmedium, ähnlich dem in FIG. 1A dargestellten Anschluss 14. Die Vorrichtung 101B kann über den Anschluss 12' an ein Computersystem (z. B. einen Laptop oder ein Notebook) oder ein Terminal angeschlossen werden, indem das Gehäuse 11' direkt in den entsprechenden PCMCIA-Steckplatz am Computer oder Terminal eingeführt wird. Wie bereits erwähnt, ist ein solches Einführungs-/Anschlussverfahren mit PCMCIA-Steckern in der Technik bekannt.

Figur 1C zeigt eine weitere Ausführungsform der vorliegenden Erfindung. Insbesondere umfasst eine Vorrichtung 10C einen Anschlussport 12, einen Anschlussport 14, einen Anschlussport 16 und erste und zweite Anzeigen 13 und 15, ähnlich den Komponenten, die in Bezug auf die in FIG. 1A dargestellte Vorrichtung 10A beschrieben sind. Die Vorrichtung 10C enthält jedoch auch eine Schnittstelle für eine Chipkarte. Es ist zu verstehen, dass eine "Smartcard" ein elektronischer Industriestandardbegriff für eine Karte mit integriertem Schaltkreis ist, die die Form und allgemeine Größe einer Kreditkarte hat, die sowohl Speicherals auch Verarbeitungsschaltkreise enthalten kann, die in der Lage sind, verschiedene Funktionen auszuführen, je nach der Anwendung, für die sie entworfen wurde und in der sie eingesetzt wird. Da die meisten Industriestandard-Chipkarten mit der vorliegenden Erfindung verwendet werden können, um die hierin zu beschreibende Funktionalität bereitzustellen, ist das besondere Design der Chipkarte, die gemäß der vorliegenden Erfindung verwendet wird, nicht entscheidend. Daher kann eine Smartcard 19 mit dem Gerät 10C verbunden werden, wenn sie in die Aufnahme 18 eingeführt wird. Wie weiter unten im Zusammenhang mit der Funktionsweise der vorliegenden Erfindung ausführlich beschrieben wird, arbeitet die Smartcard 19 mit der Vorrichtung 10C zusammen, um die neuartigen Verschlüsselungs-/Authentifizierungsfunktionen der vorliegenden Erfindung bereitzustellen. Zum Beispiel kann die Smartcard verwendet werden, um: die persönliche Identifikationsnummer (PIN) des Benutzers einzugeben; einen Benutzer zu authentifizieren; Verschlüsselungsalgorithmen zu ändern, die von dem Gerät verwendet werden, und/oder allgemein das Gerät zu konfigurieren.

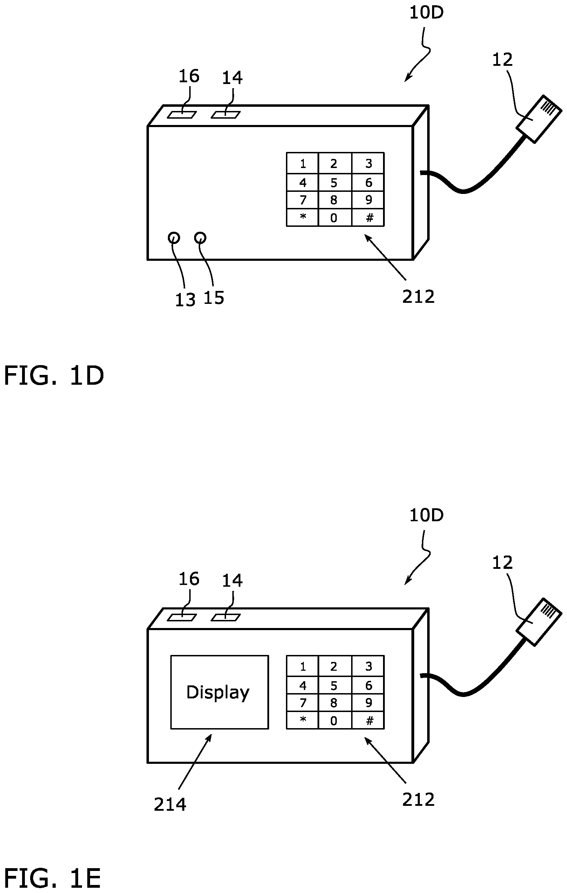

In FIG. 1D ist eine weitere Ausführungsform der vorliegenden Erfindung als Vorrichtung 10D dargestellt. Es ist zu beachten, dass die Vorrichtung 10D zwar ähnliche Verbindungen und Komponenten wie die in Bezug auf die Vorrichtung 10A (FIG. 1 A) oder die Vorrichtung 10C (FIG. 1C) beschriebenen enthalten kann, die Vorrichtung 10D aber zusätzlich eine Tastatur 212 aufweist. Die Tastatur 212 ist mit den anderen Komponenten der vorliegenden Erfindung, wie später im Detail beschrieben wird, so verbunden, dass der Benutzer während der Authentifizierungs- und/oder Verschlüsselungsvorgänge eine PIN oder andere numerische Daten eingeben kann. Wenn eine Smartcard-Schnittstelle vorhanden ist, kann der Benutzer eine PIN entweder über die Tastatur 212 oder durch Einstecken der Smartcard eingeben. Auch wenn die Tatstatur 212 in FIG. 1D mit numerisch beschrifteten Tasten dargestellt ist, ist im Rahmen der vorliegenden Erfindung auch die Verwendung von alphanumerisch beschrifteten Tasten denkbar.

Figur 1E zeigt noch eine weitere Ausführungsform der vorliegenden Erfindung, in der eine Vorrichtung 10E dargestellt ist. Es ist zu verstehen, dass die Vorrichtung 10E ähnlich aufgebaut sein kann wie die Vorrichtung 10D (FIG. 1D); die Vorrichtung 10E umfasst jedoch zusätzlich ein Display 214. Das Display 214 kann vorzugsweise eine Flüssigkristallanzeigematrix sein und kann mit den anderen Komponenten der vorliegenden Erfindung, wie später im Detail beschrieben wird, in einer Weise zusammenwirken, dass dem Benutzer eine visuelle Aufforderung zur Eingabe seiner oder ihrer PIN oder einer anderen anwendbaren Codenummer über die Verwendung der Tastatur 212 oder einer Smartcard gegeben wird. Um den Datenschutz zu gewährleisten, wird die vom Benutzer eingegebene PIN oder Codenummer vorzugsweise nicht auf dem Display 214 angezeigt. Darüber hinaus kann das Display 214 Informationen über den Gerätestatus liefern, z. B. ähnliche Statusanzeigen wie die ersten und zweiten Anzeigen 13 und 15 (FIG. 1A), wenn solche Anzeigen nicht optional als Teil der Gerätekonfiguration enthalten sind. Es ist zu beachten, dass das Tastenfeld 212 und die Anzeige 214 zwar als integraler Bestandteil des Gerätegehäuses dargestellt sind, dass aber eine solche Tastatur 212 und ein solches Display 214 über integrierte Anschlüsse (nicht dargestellt) auch lediglich mit dem Gerät elektrisch verbunden sein können, ähnlich wie der Anschlussport 12, und dass sie sich dennoch physisch außerhalb des Geräts befinden können.

Dementsprechend kann der Benutzer die Peripheriegeräte selektiv an das Gerät anschließen, wenn dies für eine bestimmte Anwendung erforderlich ist.

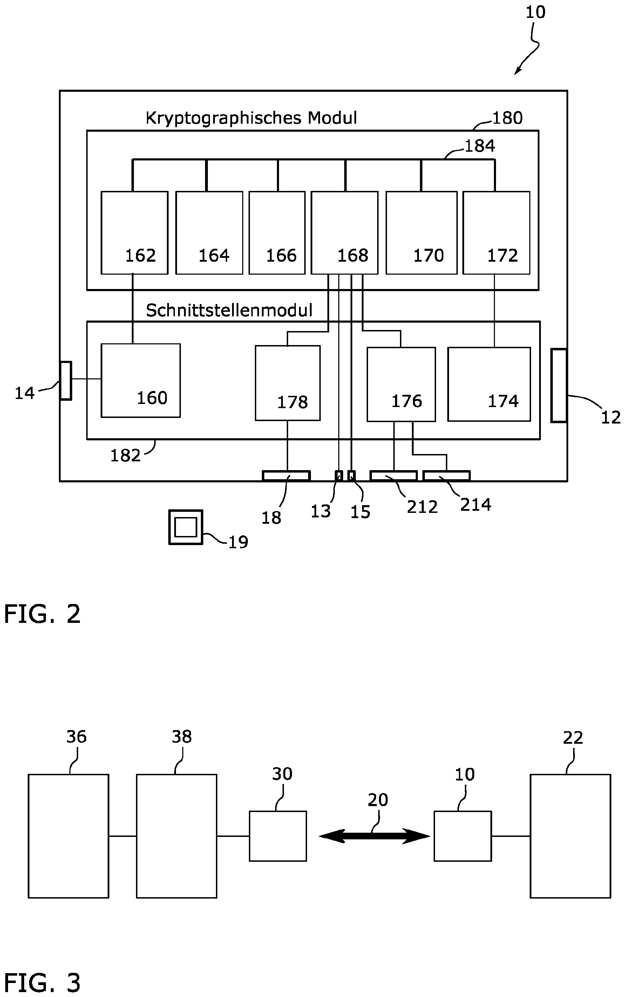

In FIG. 2 ist ein Funktionsblockdiagramm der vorliegenden Erfindung dargestellt. Insbesondere ist zu beachten, dass das in FIG. 2 dargestellte Funktionsblockdiagramm die wichtigsten Funktionskomponenten zeigt, die zusammenwirken können, um die vorliegende Erfindung zu bilden. Es sollte auch beachtet werden, dass, während die tatsächlichen physischen Ausführungsformen der vorliegenden Erfindung, wie sie in den Figuren 1A bis 1E dargestellt sind, verschiedene Kombinationen der in FIG. 2 dargestellten funktionalen Komponenten umfassen können, wobei bestimmte Komponenten je nach den besonderen Konstruktionskriterien oder der Anwendung selektiv einbezogen oder ausgeschlossen werden können, FIG. 2 die wichtigsten funktionalen Komponenten insgesamt darstellt, um die Diskussion ihrer kooperativen Interaktion miteinander zu vereinfachen. Es ist daher zu verstehen, dass eine gemäß der vorliegenden Erfindung gebildete Vorrichtung vorzugsweise alle in FIG. 2 dargestellten funktionellen Komponenten umfassen kann, und daher wird eine solche Vorrichtung im Folgenden einfach als Vorrichtung 10 bezeichnet.

Darüber hinaus ist das in FIG. 2 dargestellte Blockdiagramm nicht unbedingt beschreibend für die physikalischen Schaltungskomponenten der vorliegenden Erfindung, da viele der Funktionen in gängige physikalische Gehäuse integriert werden können. So kann beispielsweise die Schnittstelle für den Kommunikationsanschluss 174 und/oder der Kommunikationscontroller 172 ein integraler Bestandteil des Mikroprozessors 164 sein. In ähnlicher Weise kann die Funktion der Krypto-Engine 170 von der Firmware des Mikroprozessors 164 und dem zugehörigen Systemspeicher (d. h. ROM/RAM 166), beispielsweise für Programme und Daten sowie zum Ablegen kryptographischer Informationen, ausgeführt werden und ist daher nicht als separater integrierter Schaltkreis-Chip implementiert. Es liegt jedoch im Rahmen der vorliegenden Erfindung, beispielsweise eine Vorrichtung 10 vorzusehen, die vorzugsweise so gestaltet ist, dass sie zwei diskrete Schaltungskarten aufweist, wobei die erste Schaltungskarte die Funktionen eines kryptografischen Moduls 180 und die zweite Schaltungskarte die Funktionen eines Schnittstellenmoduls 182 bereitstellt. Es sollte gewürdigt werden, dass das kryptographische Modul 180 und die zugehörigen Komponenten die Funktionen des Verschlüsselers und des Authentifikators der vorliegenden Erfindung bereitstellen, während Teile des Schnittstellenmoduls 182, insbesondere die Netzwerkschnittstelle 160, die Funktionen der Kommunikationsnetzwerkschnittstelle (z. B. Netzwerkanschluss) der vorliegenden Erfindung bereitstellen.

Dementsprechend umfasst das mobile Verschlüsselungs- und Authentifizierungs-Kommunikationsgerät 10 der vorliegenden Erfindung vorzugsweise das kryptografische Modul 180 und das Schnittstellenmodul 182. Das kryptografische Modul 180 umfasst vorzugsweise einen Kommunikationscontroller 162, einen Mikroprozessor 164, einen Systemspeicher 166 in Form eines ROM/RAM-Moduls, ein Eingabe-/Ausgabemodul 168, eine Krypto-Engine 170 und einen Kommunikationscontroller 172. Der Quantenzufallsgenerator (z. B. entsprechend einem in FIG. 18 gezeigten Blockschaltbild einer integrierten Schaltung bzw. zumindest dessen Entropiequelle bzw. ein beschreibungsgemäßer iQRNG) kann dabei in der Krypto-Engine 170 integriert sein oder diese ausbilden. Der Quantenzufallsgenerator kann jedoch auch als ein weiterer Komponentenblock des kryptografischen Moduls 180 zusätzlich zur Krypto-Engine 170 implementiert sein. Es ist jedoch für den Fachmann ohne Weiteres erkennbar, dass es sich hierbei lediglich um ein strukturelles Blockdiagramm handelt und der Quantenzufallsgenerator auch alle oder einige der gezeigten Funktionalitäten mit integrieren oder integriert haben kann. Darüber hinaus sind die oben genannten Komponenten des kryptografischen Moduls 180 über einen Mikroprozessorbus 184 operativ gekoppelt. Es versteht sich, dass der Mikroprozessorbus 184 einem Standard-Mikroprozessorbus mit Daten-, Adress- und Steuersignalen zur Durchführung des Datentransfers zwischen den Funktionskomponenten des kryptografischen Moduls 180 ähnlich sein kann (der Datenbus 184 kann beispielsweise dem internen Datenbus 1419 in FIG. 18 entsprechen oder mit diesem verbunden sein). Daher wird in den folgenden Funktionsbeschreibungen der Gesamtdatenfluss und nicht die einzelnen Bussignale beschrieben, deren Erzeugung, Status und Manipulation von einem Fachmann leicht erkannt werden kann.

Das Schnittstellenmodul 182 umfasst vorzugsweise ein Modem- oder Netzwerkschnittstellenmodul 160, eine Chipkartenschnittstelle 178, eine Tastatur-/Anzeigesteuerung 176 und eine Kommunikationsportschnittstelle 174. Im Blockdiagramm von Fig. 2 sind außerdem der Anschluss 12, der Anschluss 14, die Smartcard-Aufnahme 18, die ersten und zweiten Anzeigen 13 und 15, das Tastenfeld 212 und das Display 214 dargestellt. Insbesondere ist der Anschlussport 14 operativ mit der Netzwerkschnittstelle 160 gekoppelt, die ihrerseits operativ mit dem Kommunikationscontroller 162 gekoppelt ist. Ebenfalls operativ mit dem Eingabe-/Ausgabemodul 168 gekoppelt sind die Smartcard-Schnittstelle 178, die ersten und zweiten Anzeigen 13 und 15 sowie die Tastatur-/Anzeigesteuerung 176. Die Chipkartenschnittstelle 178 ist operativ mit der Aufnahme 18 für die Chipkarte gekoppelt, während die Tastatur-/Anzeigesteuerung 176 operativ mit der Tastatur 212 bzw. dem Display 214 gekoppelt ist. Ferner ist die Schnittstelle für den Kommunikationsanschluss 174 mit dem Anschluss 12 und dem Kommunikationscontroller 172 verbunden. Der Anschluss 16 (d. h. die Verbindung zur Stromquelle) ist in FIG. 2 nicht dargestellt; es versteht sich jedoch von selbst, dass die durch eine solche Verbindung bereitgestellte Energie je nach Bedarf zu den physikalischen Komponenten der vorliegenden Erfindung geleitet werden kann.

Es versteht sich, dass der Mikroprozessor 164 in Verbindung mit dem Systemspeicher (ROM/RAM) 166 das spezielle Computeranwendungsprogramm (d. h. die Systemsoftware) ausführt, das die Verschlüsselungs-, Authentifizierungs- und Netzwerkschnittstellenfunktionen der vorliegenden Erfindung steuert. Ein Fachmann wäre in der Lage, eine Vielzahl von Anwendungsprogrammen zu realisieren, die die Verschlüsselung, die Authentifizierung und die Netzwerkschnittstelle einbeziehen, angesichts der neuartigen operativen Zusammenarbeit und Funktionalität, die mit der vorliegenden Erfindung verbunden sind. Dementsprechend wird hier kein spezifisches Softwareprogramm offengelegt; vielmehr werden mehrere Beispiele für den Datenfluss beschrieben, um die Zusammenarbeit der Komponenten der Vorrichtung 10 zu veranschaulichen. Es sollte auch gewürdigt werden, dass die Krypto-Engine 170, die vom Mikroprozessor 164 gesteuert wird, die hier beschriebenen Verschlüsselungs- und Authentifizierungsfunktionen (d. h. Algorithmen) ausführen kann und in Form von Hardware (d. h. einer Reihe von handelsüblichen Verschlüsselungschips), Software oder einer Kombination davon vorliegen kann.

Beispielsweise kann ein Benutzer das Gerät 11 über den Anschluss 12 mit einem Computersystem oder Terminal und über den Anschluss 14 mit einem Netzwerk verbinden. Dementsprechend werden die am Computer eingegebenen Daten über den Anschluss 12 an die Schnittstelle des Kommunikationsanschlusses 174 weitergeleitet. Die Schnittstelle für den Kommunikationsanschluss 174 puffert die Daten, bevor sie an den Kommunikationscontroller 172 weitergeleitet werden. Bei dem Kommunikationscontroller 172 handelt es sich vorzugsweise um einen seriellen Kommunikationscontroller (SCC), der dazu dient, die seriellen Daten in eine parallele Form umzuwandeln, so dass sie auf den Mikroprozessorbus 184 übertragen werden können. Wenn in einer alternativen Ausführungsform die an der Anschlussbuchse 12 empfangenen Daten bereits in einem parallelen Format vorliegen, würde der Kommunikations-controller 172 immer noch die Funktion erfüllen, die richtigen Zeit- und Steuersignale bereitzustellen, die erforderlich sind, um die Daten auf den Mikroprozessorbus 184 zu legen.

Der Mikroprozessor 164 empfängt in Verbindung mit dem Systemspeicher 166 die Daten und überträgt sie, sofern sie verschlüsselt werden sollen, an die Krypto-Engine 170. Das Verschlüsselungsmodul 170 verschlüsselt seinerseits die Daten und führt bei Bedarf Funktionen zur Nachrichten-, Benutzer- und/oder Geräteauthentifizierung aus. Als nächstes empfängt der Mikroprozessor 164 in Verbindung mit dem Systemspeicher 166 die verschlüsselten Daten zurück und überträgt sie dann an den Kommunikationscontroller 162. Der Kommunikationscontroller 162 kann vorzugsweise auch ein serieller Kommunikations-controller sein und kann Teil desselben Controllerchips wie der Kommunikationscontroller 172 sein. Somit dient der Kommunikationscontroller 162 dazu, verschlüsselte Daten von der parallelen in die serielle Form umzuformatieren und diese Daten dann an das Modem oder die Netzwerkschnittstelle 160 zu übertragen, die dazu dient, die Daten weiter in die Form zu formatieren, die für die Kommunikation über das jeweilige Netzwerk (z. B. DSL, Kabel, Glasfaser) erforderlich ist, an das die vorliegende Erfindung angeschlossen ist. Der Datenfluss in umgekehrter Richtung, d. h. vom Netz durch das Gerät 10 und zum Computer, ist im Wesentlichen ähnlich wie der oben beschriebene Datenfluss, nur in umgekehrter Reihenfolge. Die verschlüsselten Daten werden jedoch der Krypto-Engine 170 zur Entschlüsselung vorgelegt, falls gewünscht, bevor sie an den Computer weitergeleitet werden, an den das Gerät 10 angeschlossen ist.

Darüber hinaus kann die Smartcard 19, wie bereits erwähnt, in die Smartcard-Aufnahme 18 eingeführt werden und zur Eingabe der PIN des Gerätebenutzers verwendet werden oder selbst einen Verschlüsselungsalgorithmus enthalten, um alternativ die kryptografischen Funktionen zu übernehmen, die ansonsten von der Krypto-Engine 170 ausgeführt werden. Bei Verwendung kommuniziert die Smartcard mit dem Gerät über die Smartcard-Schnittstelle 178, die Daten puffert und an den Eingabe-/Ausgabe-Controller 168 überträgt. Die Eingabe-/Ausgabesteuerung 168 formatiert die von der Chipkarte 19 empfangenen Daten in das richtige Format, um sie auf den Mikroprozessorbus 184 zu übertragen. Andererseits werden die Daten, die der Chipkarte 19 vom Gerät zugeführt werden sollen, von der Eingabe-/Ausgabesteuerung 168 formatiert und über die Chipkartenschnittstelle 178 an die Chipkarte 19 weitergeleitet.

Die vom Benutzer über die Tastatur 212 eingegebenen Daten (z. B. PIN oder ein anderer Code) werden zwischengespeichert und über die Tastatur-/Anzeigesteuerung 176 an die Eingabe-/Ausgabesteuerung 168 übertragen, wo sie dann zur Systemverarbeitung auf den Mikroprozessorbus 184 gelegt werden. Ebenso werden Systemmeldungen (z. B. Status) und/oder Benutzeraufforderungen über die Eingabe-/Ausgabesteuerung 168 an die Tastatur-/Anzeigesteuerung 176 und dann an das Display 214 zur Anzeige für den Benutzer übertragen. Darüber hinaus steuert die Eingabe-/Ausgabesteuerung 168 auch den Betrieb der ersten und zweiten Anzeige 13 und 15, die, wie bereits erwähnt, dem Benutzer anzeigen, ob die über das Gerät 10 übertragenen Daten verschlüsselt werden oder nicht. Eine entsprechende Anweisung wird über den Mikroprozessorbus 184 an die Eingabe-/Ausgabesteuerung 168 weitergeleitet, die die Steuerung 168 anweist, die erste Anzeige 13, vorzugsweise eine rote LED, einzuschalten, wenn Daten in einem nicht sicheren (d. h. nicht verschlüsselten) Modus übertragen werden, oder die zweite Anzeige 15, vorzugsweise eine grüne LED, einzuschalten, wenn Daten in einem sicheren (d. h. verschlüsselten) Modus übertragen werden.

Das gezeigte Beispiel dient lediglich dem Verständnis der funktionalen Zusammenhänge und stellt keine strukturelle Gliederung im Sinne einzelner separierter Hardwarekomponenten dar. Insofern können die einzelne Blöcke vorzugsweise als reine Funktionsblöcke angesehen werden. Entsprechend kann eine solche Vorrichtung auch ganz oder teilweise mittels computer- und/oder maschinenimplementierter Verfahren implementiert werden (ausgenommen die Entropiequelle). Weiterhin kann die Vorrichtung auch komplett als festverdrahtete Logik realisiert werden.

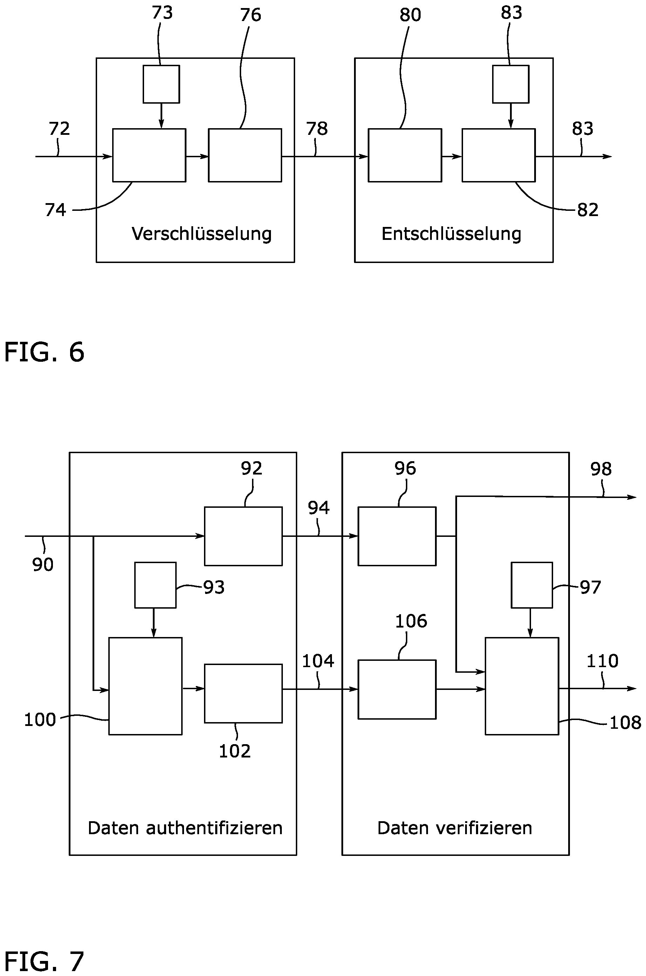

Die Funktionsweise des Geräts in Bezug auf Datenverschlüsselung, Geräteauthentifizierung, Benutzerauthentifizierung und Nachrichtenauthentifizierung wird nun beschrieben. Figur 6 zeigt insbesondere die Ver- und Entschlüsselung von Kommunikationsdaten. Sowohl die Verschlüsselungs- als auch die Entschlüsselungsfunktion werden eingesetzt, damit Nachrichten sowohl gesendet als auch empfangen werden können. Es ist zu verstehen, dass die Ver- und Entschlüsselungsfunktionen unter der Kontrolle des Mikroprozessors 164 (FIG. 2) von der Krypto-Engine 170 und/oder der Smartcard 19 in einer Ausführungsform, die eine Smartcard-Schnittstelle implementiert, durchgeführt werden können. Nichtsdestotrotz werden die Klartextdaten 72 (d. h. nicht verschlüsselte Daten) verschlüsselt (Block 74), wobei einer oder mehrere aus einer Vielzahl von Verschlüsselungsalgorithmen verwendet werden. Die kryptographischen Algorithmen, die zur Ausführung dieser Funktionen verwendet werden, können aus einer Vielzahl von Standardalgorithmen ausgewählt werden, die in der Regel mit Industrie- oder nationalen Normen übereinstimmen und hier nicht näher beschrieben werden müssen. Die Wahl des Algorithmus ist für die vorliegende Erfindung unerheblich. Die Ver- und Entschlüsselung kann beispielsweise nach dem American National Standard (ANS) X3.92, Data Encryption Standard, oder nach dem sogenannten Federal Information Processing Standard 185, Escrow Encryption Standard, erfolgen. Die verschlüsselten Daten werden unverständlich gemacht und sind daher vertraulich, wenn sie auf der Kommunikationsleitung 78 erscheinen. Es versteht sich, dass eine Kommunikationsleitung, wie die in FIG. 6 dargestellte Leitung 78, an den Anschluss 14 der vorliegenden Erfindung angeschlossen werden kann. Die Daten werden empfangen (Block 80), vorzugsweise von einer anderen erfindungsgemäßen Vorrichtung, und an eine Entschlüsselungsfunktion gesendet, die einen Entschlüsselungsalgorithmus (Block 82) verwendet, der dem oben beschriebenen Verschlüsselungsalgorithmus entspricht und am Ausgang 84 die ursprünglichen Klartextdaten 72 wiederherstellt.

Da viele der oben genannten kryptographischen Algorithmen allgemein bekannt sind, arbeiten die Algorithmen mit Passwörtern, die in der Kryptographie als "Schlüssel" bezeichnet werden. Schlüssel sind numerische Datensätze, die einen von vielen Werten annehmen können und in Verbindung mit den ansonsten allgemein bekannten Algorithmen dem Kommunikationssystem seine einzigartige Sicherheitsidentität verleihen. Systeme können sowohl Verschlüsselungsals auch Entschlüsselungsschlüssel haben. Figur 6 zeigt einen Verschlüsselungsschlüssel 73 und einen Entschlüsselungsschlüssel 83. Je nach Anwendung kann der Schlüssel "öffentlich", d. h. der Allgemeinheit bekannt, oder "privat", d. h. nur den Beteiligten bekannt, sein. Die Grundvoraussetzung ist, dass die von diesen Standardalgorithmen für die Ver- und Entschlüsselung verwendeten Schlüssel übereinstimmen und die in diesen Normen festgelegten Funktionsweisen für die Verschlüsselung (Block 74) und die Entschlüsselung (Block 82) gleich sein müssen.

Es gibt im Wesentlichen zwei Arten von Algorithmen: Algorithmen mit symmetrischem Schlüssel und Algorithmen mit öffentlichem Schlüssel. Symmetrische Schlüsselalgorithmen sind definiert als Algorithmen, bei denen der Verschlüsselungsschlüssel aus dem Entschlüsselungsschlüssel berechnet werden kann und umgekehrt. Daher werden sowohl der Verschlüsselungs- als auch der Entschlüsselungsschlüssel geheim gehalten, d. h. es handelt sich um private Schlüssel. Bei einem symmetrischen Algorithmus kann ein einziger Schlüssel sowohl als Verschlüsselungsschlüssel als auch als Entschlüsselungsschlüssel dienen. Andererseits werden Algorithmen mit öffentlichem Schlüssel als Algorithmen definiert, bei denen der Entschlüsselungsschlüssel nicht (zumindest nicht innerhalb eines angemessenen Zeitraums) aus dem Verschlüsselungsschlüssel berechnet werden kann. Bei Algorithmen mit öffentlichem Schlüssel ist also ein Schlüssel öffentlich, während der andere privat ist. Normalerweise ist der Verschlüsselungsschlüssel öffentlich, so dass jeder, der den öffentlichen Schlüssel besitzt, Daten verschlüsseln kann, während der Entschlüsselungsschlüssel privat ist, so dass nur diejenigen, die den privaten Schlüssel besitzen, die Daten entschlüsseln können. Es gibt jedoch auch Algorithmen mit öffentlichem Schlüssel, bei denen die Daten mit einem privaten Schlüssel verschlüsselt und mit einem öffentlichen Schlüssel entschlüsselt werden. Diese Art von Algorithmus wird später als digitaler Unterschriftsalgorithmus bezeichnet, da er im Wesentlichen die Person authentifiziert, die die Daten verschlüsselt, da diese Person theoretisch den privaten Schlüssel nicht verwenden würde, wenn sie nicht zur Verwendung berechtigt wäre. Der digitale Unterschriftsalgorithmus kann auch einen Zeitstempel enthalten, wobei das Datum und die Uhrzeit der "Unterschrift" an die Nachricht angehängt (d. h. verkettet) und zusammen mit der Nachricht "unterschrieben" werden.

Darüber hinaus kann eine Datenmanipulationsfunktion, eine so genannte "Hash"-Funktion, als Teil eines symmetrischen Algorithmus oder eines Algorithmus mit öffentlichem Schlüssel zur Authentifizierung von Nachrichten eingesetzt werden. Die Hash-Funktion empfängt eine Eingabedatenfolge und wandelt sie in eine Ausgabefolge fester Größe um, die in der Regel kleiner ist. Eine sehr einfache Hash-Funktion wäre zum Beispiel eine, die eine Eingabezeichenfolge annimmt und ein Byte zurückgibt, das aus dem Exklusiv-ODER aller Eingabebytes besteht. Die Ausgabe der Funktion wird im Allgemeinen als Message Authentication Code (MAC) oder, einfacher, als Hash bezeichnet. Der Zweck der Hash-Funktion besteht darin, einen "Fingerabdruck" der eingegebenen Datenfolge zu erstellen, um einen Wert zu erzeugen, der mit hinreichender Sicherheit anzeigt, dass eine von einem anderen Benutzer des Kommunikationsnetzes empfangene Datenfolge mit der eingegebenen Folge übereinstimmt. Daher sind Hash-Funktionen in der Kryptographie nützlich, da der Empfänger von Daten, der den Hash-Wert der ursprünglich vom Sender übertragenen Daten kennt, beim Empfang einer Datennachricht mit dem entsprechenden Hash-Wert mit hinreichender Sicherheit davon ausgehen kann, dass die ursprüngliche Nachricht während der Übertragung nicht verändert wurde. Der Hash sollte vorzugsweise auch verschlüsselt werden, um Manipulationen zu verhindern.

Zusätzlich zur Verschlüsselung der übermittelten Daten, wie in FIG. 6 beschrieben, ermöglicht die vorliegende Erfindung eine Authentifizierung der übermittelten Daten durch den Absender (z. B. den Benutzer) und eine Überprüfung durch den Empfänger. Dementsprechend wird bei der Authentifizierung von Daten (oder Nachrichten) überprüft, ob die Daten unverändert empfangen wurden, und auch die Identität des Absenders verifiziert. Eine solche Authentifizierung kann beispielsweise mit Hilfe der oben erwähnten Hash-Funktion und digitalen Signaturfunktion erfolgen.

Figur 7 zeigt ein Funktionsblockdiagramm des oben erwähnten Authentifizierungs- und Verifizierungsverfahrens. Die Daten 90 werden über eine Kommunikationsleitung 94 an einen Empfänger 98 übertragen (Block 92). Gleichzeitig können die Daten durch eine Vielzahl von Authentifizierungsalgorithmen authentifiziert werden (Block 100), wie z. B. die oben kurz erörterten, die in der Technik wohlbekannt sind und die alle Nachrichten verarbeiten und eine Authentifizierungsnummer oder eine digitale Signatur erzeugen können, die zusammen mit den Daten übertragen wird, um deren Quelle und Genauigkeit zu verifizieren. Beispiele für diesen Prozess sind ausführlich im American National Standard X9.9, Message Authentication Standard, oder im American National Standard X9.30, Digital Signature Standard, oder in zahlreichen Patenten genannt. Das Ergebnis dieses Authentifizierungsprozesses wird über die Kommunikationsleitung 104 übertragen (Block 102), wo es vom Empfänger 98 empfangen wird (Block 106), der den Verifizierungsprozess durchführt (Block 108), um festzustellen, ob die Daten 90 vor dem Empfang verändert wurden (Block 96). Der Verifizierungsprozess hängt von dem Algorithmus ab, der zur Umsetzung der vorliegenden Erfindung gewählt wurde. Wurde die Authentifizierung z. B. nach dem American National Standard X9.9 durchgeführt, dann besteht der Validierungsprozess darin, die Daten (Block 108) gemäß dem Standard und in der gleichen Weise wie in Block 100 zu verschlüsseln und dann die resultierenden Authentifizierungscodes mit dem Authentifizierungscode zu vergleichen, der über die Leitung 104 empfangen wurde. Wurde die Nachricht während der Übertragung (zwischen Block 92 und Block 96) verändert oder unterscheiden sich die für die Authentifizierung (d. h. Schlüssel 93) und die für die Validierung (d. h. Schlüssel 97) verwendeten Schlüssel, dann werden sich mit hoher Wahrscheinlichkeit auch die Authentifizierungscodes unterscheiden. Werden für die Authentifizierung digitale Signaturen verwendet, so werden für den Authentifizierungsvorgang (Block 100) und den Verifizierungsprozess (Block 108) unterschiedliche Algorithmen verwendet, die in den entsprechenden nationalen oder industriellen Normen im Einzelnen festgelegt sind.

In diesem speziellen Fall bilden der private Schlüssel 93, mit dem die Daten signiert werden, und der öffentliche Schlüssel 97, mit dem sie validiert werden, einen Satz, mit dem die Daten korrekt validiert werden können. Wird zur Validierung der Daten ein anderer privater Schlüssel als der in der Gruppe verwendet, so schlägt die Validierung mit dem öffentlichen Schlüssel der Gruppe fehl. Dementsprechend gibt es in diesem speziellen Fall, in dem ein privater und ein öffentlicher Schlüssel verwendet werden, einen eindeutigen Hinweis darauf, dass der Absender im Besitz des eindeutigen privaten Schlüssels ist und davon ausgegangen wird, dass er der autorisierte Absender ist. In jedem Fall wird das Ergebnis des Verifizierungsprozesses (Block 108) dem Empfänger 98 mitgeteilt, um anzuzeigen, ob die Daten gültig sind oder nicht. Dies kann einfach in Form einer Nachricht geschehen, in der die begleitenden Daten als gültig oder ungültig bezeichnet werden.

Die Geräteauthentifizierung wird durchgeführt, um sicherzustellen, dass ein Benutzer, der Zugang zu Kommunikationseinrichtungen erhalten möchte, ein autorisiertes Gerät besitzt. Die Authentizität des Geräts wird durch das Vorhandensein eines geheimen oder privaten Schlüssels bestimmt, der entweder im Gerät selbst oder auf einer in das Gerät eingeführten Smartcard enthalten ist. Das Gerät dient also als "Token", das verwendet werden muss, um Zugang zu einem Netz, Computer oder einer anderen geschützten Kommunikationseinrichtung zu erhalten. Ist der "Token" ungültig, so wird der Zugang verweigert.

Die Benutzerauthentifizierung wird durchgeführt, um dem Herausforderer zu zeigen, dass der Benutzer des Geräts eine persönliche Identifikationsnummer (PIN) oder ein Passwort kennt, das die Person, die das Gerät besitzt, eindeutig identifiziert. Dies erhöht die Sicherheit des Systems, indem sichergestellt wird, dass z. B. ein gestohlenes Gerät nicht verwendet werden kann. Im Rahmen der vorliegenden Erfindung ist das Verfahren der Benutzerauthentifizierung optional, und wenn diese Option verwendet wird, kann sie vorzugsweise mit dem Verfahren der Geräteauthentifizierung kombiniert werden. Die Benutzer- und die Geräteauthentifizierung können jedoch jeweils mit unterschiedlichen Algorithmen durchgeführt werden.

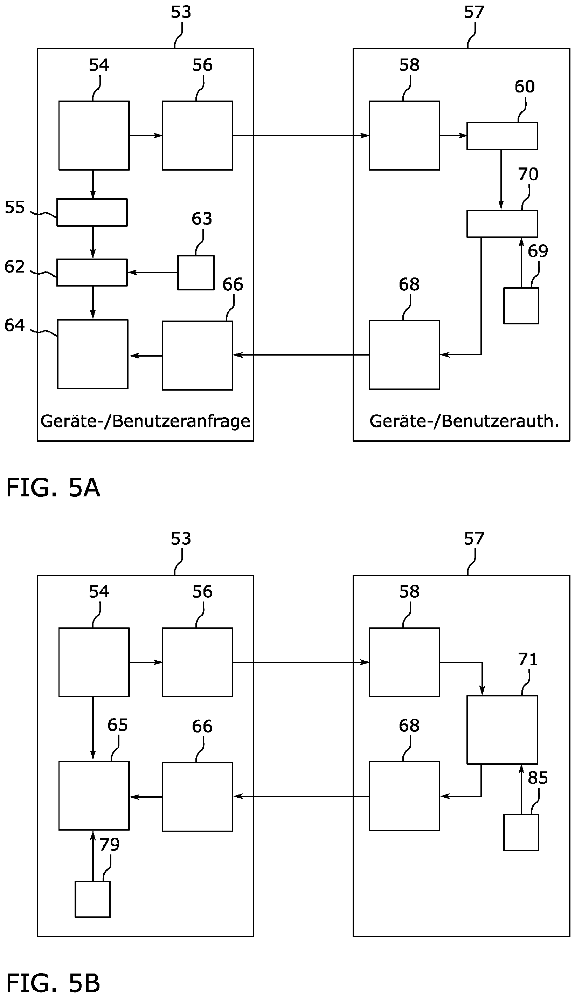

Figur 5A zeigt ein funktionales Blockdiagramm eines beispielhaften Authentifizierungs- und Abfrageverfahrens für Geräte und Benutzer, das gemäß der vorliegenden Erfindung durchgeführt werden kann. Der als Block 53 in FIG. 5A dargestellte Teil des Systems für den Abfragenden ist in der Technik bekannt und kann von verschiedenen Anbietern erworben werden, um eine Reihe von nationalen und industriellen Normen zu erfüllen, wie oben beschrieben. Bei Verwendung mit dem Benutzerteil, d. h. Block 57, bilden diese Komponenten einen Teil der beschriebenen Ausführungsform der vorliegenden Erfindung. Der Prozess der Geräteauthentifizierung ähnelt dem der oben beschriebenen Nachrichtenauthentifizierung (z. B. Hash-Funktion), mit dem Unterschied, dass ein Quantenzufallsgenerator 54 eine zeitlich veränderliche Zufallszahl erzeugt, die anstelle der Kommunikationsdaten authentifiziert wird. Der Quantenzufallsgenerator 54 (vgl. FIG. 18, BZ 1400) kann einen beschriebenen QRNG, bevorzugt einen beschriebenen iQRNG (vgl. FIG. 14-16, BZ 1200) umfassen. Diese Zahl wird an den Empfänger (Block 56) gesendet und von diesem empfangen (Block 58), dessen Bediener optional aufgefordert wird, eine persönliche Identifikationsnummer (PIN) einzugeben, um den Benutzer eindeutig zu identifizieren. Die PIN wird, wenn sie verwendet wird, mit der zeitvariablen Zahl Modulo 2 addiert (d. h. Exklusiv-Oder-Funktion). Das Ergebnis wird mit einem eindeutigen, dem Gerät zugewiesenen Schlüssel 69 verschlüsselt 70. In einer anderen Ausführungsform der vorliegenden Erfindung steckt der Benutzer eine Smartcard ein, die den eindeutigen Schlüssel und den Prozessor (d. h. die Krypto-Engine) enthält, der zur Ausführung der Verschlüsselungsfunktion von Block 70 verwendet wird. In dieser Ausführungsform kann ein entsprechender Quantenzufallsgenerator auf der Smartcard mit integriert oder implementiert sein. Der Quantenzufallsgenerator (vgl. FIG. 18, BZ 1400) kann dann ebenfalls einen beschriebenen QRNG, bevorzugt einen beschriebenen iQRNG (vgl. FIG. 14-16, BZ 1200) umfassen.

Das verschlüsselte Ergebnis wird an den Abfragenden gesendet (Block 68) und in Block 66 empfangen. Gleichzeitig werden die vom Quantenzufallszahlengenerator 54 erzeugte zeitlich variierende Zahl und die PIN des Benutzers in Block 55 Modulo 2 addiert (d. h. Exklusiv-ODER-Funktion) und dann in Block 62 vom Abfragenden mit dem Schlüssel 63 verschlüsselt, der in dieser besonderen Ausführungsform derselbe ist wie der vom Benutzer verwendete Schlüssel. Das Ergebnis von Block 62 wird dann mit der vom Benutzer erhaltenen verschlüsselten Nachricht (Block 64) verglichen. Stimmen die beiden Nachrichten überein, so gilt der Benutzer als ordnungsgemäß authentifiziert. Wenn der Benutzer kein Gerät mit dem richtigen Schlüssel besitzt, wenn die vom Benutzer eingegebene PIN falsch ist, wenn eine zuvor aufgezeichnete Version der von Block 56 gesendeten zeitvariablen Nummer in dieser Transaktion verwendet wird oder wenn eine zuvor aufgezeichnete Version der von Block 70 gesendeten verschlüsselten Antwort in dieser Transaktion verwendet wird, dann schlägt der Vergleich fehl. Das Ergebnis dieses Vergleichs kann vom Abfragenden verwendet werden, um die Kommunikationssitzung zu beenden und einen Sicherheitsbeauftragten zu alarmieren, dass ein nicht autorisiertes Gerät oder eine nicht autorisierte Person versucht, auf die Ausrüstung des Anfragenden zuzugreifen. Es ist zu verstehen, dass ein solcher Geräte-/Benutzer-Authentifizierungs- und Abfrageprozess, wie oben in Bezug auf FIG. 5A beschrieben, ein Beispiel für die Implementierung eines symmetrischen Schlüsselalgorithmus ist, bei dem beide Schlüssel, 63 und 69, gleich sind. Es versteht sich auch, dass eine dem Gerät zugeordnete Seriennummer und eine Sequenznummer, die bei jeder Kommunikationssitzung ansteigt, anstelle der zufälligen oder zeitlich veränderlichen Nummer für Authentifizierungszwecke verwendet werden können.

Digitale Signaturen sind, wie bereits erwähnt, eine Form der Authentifizierung, die sich von der oben beschriebenen symmetrischen Schlüsseltechnologie dadurch unterscheidet, dass der Unterzeichner über einen eindeutigen privaten Schlüssel verfügt und der Verifizierungsprozess einen dazugehörigen öffentlichen Schlüssel verwendet, mit dem die Signatur als gültig verifiziert werden kann. Dies bietet die zusätzliche Eigenschaft, dass der Unterzeichner der einzige Inhaber des privaten Schlüssels ist und daher nicht abstreiten kann, eine verifizierte Unterschrift geleistet zu haben. In dieser bevorzugten Ausführungsform kann das Verfahren zur Geräte- und Benutzerauthentifizierung auch unter Verwendung eines von mehreren bekannten digitalen Signaturalgorithmen durchgeführt werden, wie z. B. American National Standard (ANS) X9.30, Digital Signature Standard and Secure Hash Algorithm, oder ANS X9.31 Digital Signature Algorithm.

Figur 5B zeigt ein funktionales Blockdiagramm eines Beispiels für ein solches Verfahren zur Geräte- und Benutzerauthentifizierung. In diesem Fall enthält der Teil 53 des Systems, der für den Anfragenden bestimmt ist, einen ähnlichen Quantenzufallszahlengenerator 54 wie in FIG. 5A dargestellt. Der Quantenzufallszahlengenerator 54 erzeugt eine zeitlich veränderliche Zahl, d. h. eine Zufallszahl, die an den Benutzerteil 57 des Systems gesendet (Block 56) und dort empfangen wird (Block 58). Die Zufallszahl wird dann mit Hilfe eines digitalen Unterschriftsalgorithmus und des privaten Schlüssels 85 des Nutzers signiert (Block 71) und anschließend an den Anfragendenteil 53 zurückgesendet (Block 68). Gleichzeitig wird im Anfragendenteil 53 die Zufallszahl mit demselben digitalen Signaturalgorithmus signiert, den der Benutzer verwendet hat; in diesem Fall wird die Zufallszahl jedoch mit dem öffentlichen Schlüssel 79 signiert. Der öffentliche Schlüssel 79 kann bei dieser Überprüfung verwendet werden, da bei Algorithmen mit öffentlichem Schlüssel der öffentliche Schlüssel mathematisch mit dem privaten Schlüssel verknüpft ist (d. h. ein mathematisch verknüpftes Schlüsselpaar bildet); der private Schlüssel kann jedoch theoretisch nicht aus dem öffentlichen Schlüssel abgeleitet werden. Es ist zu verstehen, dass die vom Benutzer geleistete Signatur (Block 71) nicht mit der vom Herausforderer geleisteten Signatur (Block 65) übereinstimmt, wenn die Zufallszahl nicht vom Benutzer mit dem privaten Schlüssel 85 signiert wurde. Daher schlägt die Überprüfung der Zufallszahl fehl, wenn der Benutzer nicht über den richtigen privaten Schlüssel (Schlüssel 85) verfügt, der mathematisch mit dem öffentlichen Schlüssel (Schlüssel 79) des Herausforderers verknüpft ist. Dementsprechend ist das Ergebnis des Verifizierungsprozesses (Block 65), wie der Vergleichstest (Block 64 in FIG. 5A), ein einfaches Bestehen oder Nichtbestehen.

In einem Gerät mit einer Smartcard-Schnittstelle kann die Unterschrift des Benutzers auch von der Smartcard geleistet werden, die der Benutzer in das Gerät einführt. In einer solchen Konfiguration würde die Smartcard den privaten Schlüssel und die PIN des Benutzers enthalten, damit der Benutzer ordnungsgemäß authentifiziert werden kann. In einer Ausführungsform mit einer Tastatur kann der Benutzer jedoch aufgefordert werden, seine PIN manuell einzugeben, die dazu dient, den privaten Schlüssel zu entsperren, damit der Schlüssel mit der Signaturfunktion verwendet werden kann. Ein solcher Ansatz bietet eine zusätzliche Sicherheitsstufe, da eine Person, die sich nicht unbefugt im Kommunikationsnetz aufhält, aber im Besitz der Smartcard ist, nur dann Zugang erhält, wenn sie auch die PIN des Benutzers kennt.

Es sollte verstanden werden, dass das kompakte Verschlüsselungs-/Authentifizierungs-Kommunikationsgerät der vorliegenden Erfindung entweder die oben beschriebene Benutzerfunktion oder die Anfragendenfunktion ausführen kann und dass die oben beschriebene Benutzer-/Anfragenden-Kommunikation zwischen zwei separaten, gemäß der vorliegenden Erfindung gebildeten Geräten stattfinden kann. Es sollte auch gewürdigt werden, dass die nationalen Standards, die in den zuvor beschriebenen Ausführungsformen beschrieben sind, Beispiele für gängige Algorithmen sind, die dem Stand der Technik bekannt sind, und nicht die einzigen Mittel zur Durchführung der Verschlüsselungs- oder Authentifizierungsfunktionen der vorliegenden Erfindung sind. Darüber hinaus können analoge und/oder digitale Schaltungen verwendet werden, um die verschiedenen Elemente zu implementieren und die hierin beschriebenen Funktionen der vorliegenden Erfindung auszuführen.

Figur 3 zeigt ein Blockdiagramm der Verbindung zwischen der Vorrichtung 10 der vorliegenden Erfindung und einem Kommunikationsnetz. Die beiden Anschlussports 12 und 14 der Verschlüsselungs-/Authentifizierungs-Kommunikationsvorrichtung 10 sind mit einem Computer oder Terminal 22 bzw. mit einem Netzwerk 20 verbunden. Es wird deutlich, dass eine solche Verbindung zwei grundlegende Betriebsarten ermöglicht: (a) Online-Kommunikation, bei der die von einem authentifizierten Benutzer am Computer 22 übertragenen Daten in einem einzigen Durchgang durch die Vorrichtung 10 geleitet und in verschlüsselter Form über ein Modem oder eine bestimmte Netzwerkschnittstelle, die Teil der Vorrichtung 10 ist, an das Netzwerk 20 gesendet werden; und (b) Offline-Kommunikation, bei der die vom Computer 22 zu übertragenden Daten an die Vorrichtung 10 gesendet und nach erfolgter Authentifizierung und Verschlüsselung an das Anwendungsprogramm des Benutzers, das auf dem Computer 22 läuft, zur anschließenden Übertragung an das Netzwerk 20, möglicherweise als Teil einer anderen Nachricht, zurückgegeben werden. Der Benutzer oder der Computer des Benutzers gibt eine Reihe von Codes oder Signalen aus, um das verschlüsselnde/authentifizierende Kommunikationsgerät anzuweisen, zwischen diesen Betriebsarten zu wechseln. In einer Ausführungsform der vorliegenden Erfindung, bei der eine Tastatur verwendet wird, kann der Benutzer die Betriebsartauswahl durch Eingabe eines Codes auf der Tastatur vornehmen. Alternativ ist zu beachten, dass die von der Vorrichtung 10 aus dem Netz 20 empfangenen Daten in der umgekehrten Reihenfolge verarbeitet werden, wie sie oben für die von der Vorrichtung 10 an das Netz 20 übertragenen Daten beschrieben wurde.

In FIG. 3 ist das Gerät 10 der vorliegenden Erfindung mit einem Netz 20 verbunden, das weitere Geräte enthalten kann, z. B. eine Sammlung handelsüblicher Kommunikationssicherheitskomponenten, die nach kompatiblen Standards aufgebaut sind und die Datenverschlüsselung, Geräteauthentifizierung, Benutzerauthentifizierung und Nachrichtenauthentifizierungsdienste, wie hier definiert, bereitstellen. Der Einfachheit halber werden solche Geräte in FIG. 3 gemeinsam als Kommunikationssicherheitssystem 38 dargestellt. Die über das Netz übertragenen Daten werden vom Modem 30 empfangen und von den einzelnen Komponenten des Kommunikationssicherheitssystems 38 authentifiziert und/oder entschlüsselt und dann an den Computer 36 übertragen. Es versteht sich jedoch von selbst, dass das Kommunikationssicherheitssystem 38 mit all seinen einzelnen Verschlüsselungs- und Authentifizierungsgeräten und das Modem 30 vorteilhaft durch eine einzige tragbare und kompakte Verschlüsselungs-/Authentifizierungs-Kommunikationsvorrichtung gemäß der vorliegenden Erfindung ersetzt werden können. Dadurch können der Computer 36 und der Computer 22 sicher über das Netzwerk 20 miteinander kommunizieren, wobei jeder ein einziges Gerät 10 mit den hier beschriebenen neuen Merkmalen der vorliegenden Erfindung verwendet. Es sollte auch verstanden werden, dass eine beliebige Anzahl von Computern über das Netzwerk 20 betrieben werden kann und vorteilhafterweise eine Verschlüsselungs-/Authentifizierungs-Kommunikationsvorrichtung 10 verwenden kann.

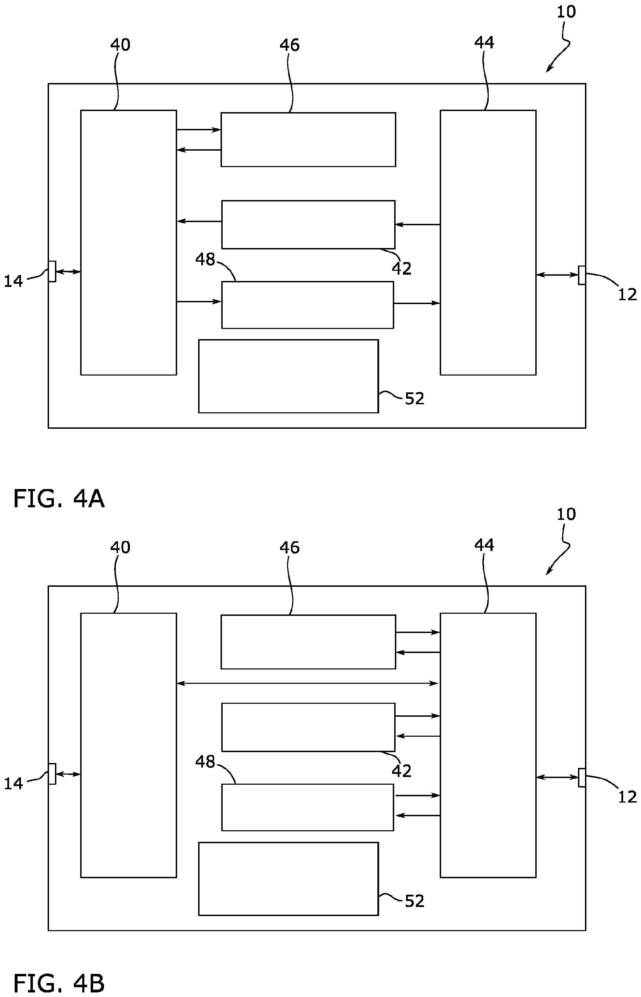

Figur 4A zeigt ein Blockdiagramm des Datenflusses im Online-Modus durch das verschlüsselnde/authentifizierende Kommunikationsgerät 10, das zwischen dem Netzwerk 20 und dem in FIG. 3 dargestellten Computer 22 angeschlossen ist. Zu Beginn einer Sitzung, die entweder vom Benutzer eingeleitet oder durch das Vorhandensein eines Trägers oder Initialisierungssignals an der Modem- oder Netzschnittstelle 40 erkannt wird, wird ein Verfahren zur Geräteauthentifizierung durchgeführt, und optional kann auch ein Verfahren zur Benutzerauthentifizierung durchgeführt werden. Solche Authentifizierungsverfahren können eines der hier beschriebenen beispielhaften Verfahren verwenden. Schlägt das Authentifizierungsverfahren fehl, gibt das Programm den Anruf nicht frei und das Modem trennt die Verbindung (legt auf). Wenn alle Authentifizierungsverfahren erfolgreich sind, wird die Carrier- oder Signal-Detect-Leitung an der Schnittstelle (d. h. Anschlussport 12) zum Computer oder Terminal des Benutzers aktiviert, wodurch die Datenkommunikation freigegeben wird. Solange die Datenübertragung nicht auf diese Weise freigegeben ist, werden keine Daten übertragen.

Wie zuvor ausführlich beschrieben und in den FIG. 5A und 5B veranschaulicht, kann die Geräte- und Benutzerauthentifizierung zwischen dem Gerät 10 der vorliegenden Erfindung und einem anderen Sicherheitssystem (z. B. dem System 38 in FIG. 3) oder einem ähnlichen, mit dem Kommunikationsnetz verbundenen Gerät 10 durchgeführt werden. Wie bereits erwähnt, kann der Authentifizierungsalgorithmus ein beliebiger bekannter Algorithmus sein, z. B. ANS X9.9 Message Authentication Code, ANS X9.30 Digital Signature Algorithm (DSA) oder ANS X9.31 Digital Signature Algorithm (RSA). Es versteht sich, dass das System 38 und das Gerät 10 in Bezug auf die in den FIGs. 5A und 5B dargestellten Authentifizierungsverfahren abwechselnd als Herausforderer und als Benutzer auftreten können.

Sobald die Authentifizierung (Block 46) erfolgreich abgeschlossen wurde, so dass die Identitäten des Geräts und optional des Benutzers festgestellt wurden, kann die Datenverschlüsselung (Block 42) und -entschlüsselung (Block 48) beginnen (siehe FIG. 4A). Im Rahmen der vorliegenden Erfindung werden vorzugsweise keine Daten des Benutzers übertragen, bevor die Authentifizierung erfolgreich abgeschlossen ist, und es werden nur Elemente wie Authentifizierungscodes und automatische Schlüsselverwaltungsmeldungen übertragen, die für den sicheren Verbindungsaufbau erforderlich sind. Die Daten können vom Computer oder Endgerät des Benutzers übertragen und an der Kommunikationsschnittstelle 44 des verschlüsselnden/authentifizierenden Kommunikationsgeräts 10 über den Anschlussport 12 empfangen werden. Die Daten werden verschlüsselt (Block 42) und, falls erforderlich, authentifiziert (z. B. Nachrichtenauthentifizierungsverfahren wie eine Hash-Funktion) und dann an ein Modem oder eine Netzwerkschnittstelle 40 zur Übertragung auf einer Kommunikationsleitung (z. B. DSL, Kabel, Glasfaser, kabellose Übertragungsstrecke etc.) weitergeleitet, die am Anschluss 14 angeschlossen ist. Es versteht sich, dass die Art der Netzwerkschnittstelle 40, die im Rahmen der vorliegenden Erfindung verwendet werden kann, von derart des Netzwerks abhängt, mit dem das Gerät verbunden ist. Daher kann, wie bereits erläutert, die von der Vorrichtung verwendete Netzwerkschnittstelle beispielsweise eine ISDN-Schnittstelle (d. h. ein ISDN-kompatibles Modem), eine LAN-Schnittstelle oder jede andere Schnittstelle sein, die dem Fachmann bekannt ist. Alternativ werden die von der Leitung am Modem 40 empfangenen Daten entschlüsselt (Block 48) und, falls erforderlich, verifiziert (z. B. Überprüfung des Nachrichtenauthentifizierungscodes) und dann an die Kommunikationsschnittstelle 44, dann an den Anschlussport 12 und weiter an den Kommunikationsport des Computers oder Modems des Benutzers gesendet. Der Speicher 52 für die Steuerung und den geheimen oder privaten Schlüssel ist der Ort, an dem der geheime Schlüssel für die Verschlüsselungs- und Authentifizierungsfunktionen gespeichert werden kann und an dem die Schlüsselverwaltung gesteuert werden kann. Der Speicher 52 kann von der Smartcard 19 oder der in FIG. 2 dargestellten Krypto-Engine 170 übernommen werden.

Figur 4B zeigt ein Blockdiagramm des Datenflusses im Offline-Modus in der Verschlüsselungs-/Authentifizierungs-Kommunikationsvorrichtung. Der Datenfluss durch die Verschlüsselungs-/Authentifizierungs-Kommunikationsvorrichtung 10 im Offline-Modus ist derselbe wie der oben für den Online-Modus beschriebene, außer dass die verschlüsselten Daten von Block 42 über die Schnittstelle 44 zur Speicherung oder anschließenden Übertragung durch den Benutzer an den Computer oder das Terminal des Benutzers zurückgegeben werden. Bei der anschließenden Übertragung werden die Daten vom Anschluss 12 zur Schnittstelle 44 direkt an das Modem oder die Netzwerkschnittstelle 40 zur Übertragung über die Datenübertragungsleitung gesendet, wobei die Verschlüsselung umgangen wird. Im Offline-Modus werden die an der Modem- oder Netzwerkschnittstelle 40 empfangenen Daten nicht entschlüsselt, sondern von der Schnittstelle 44 direkt an den Computer des Benutzers gesendet. Der Benutzer kann die Daten anschließend entschlüsseln, indem er sie über die Schnittstelle 44 an den Entschlüsselungsblock 48 weiterleitet, um sie über die Schnittstelle 44 an den Benutzer zurückzusenden.

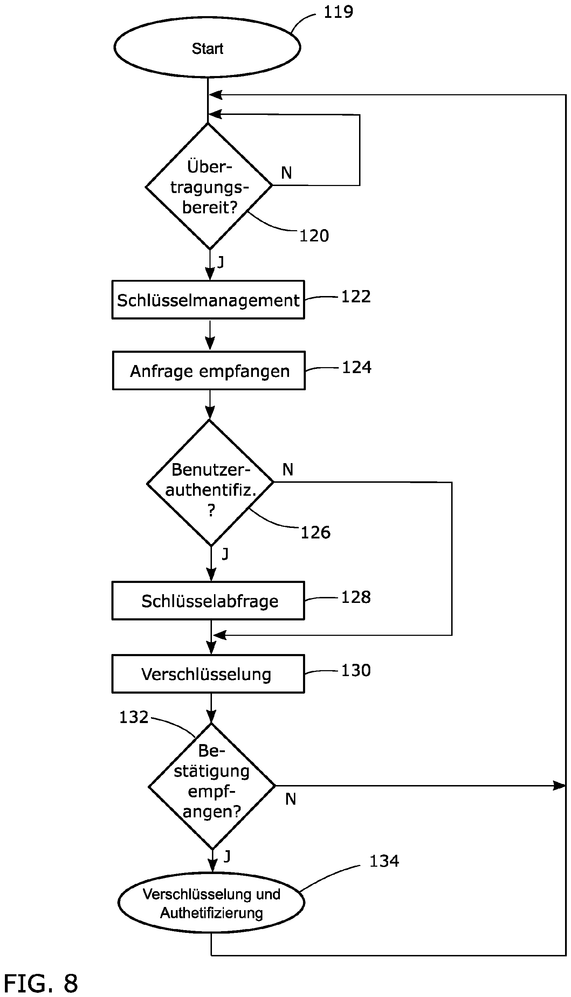

Im Hinblick auf die vorliegende Erfindung wird deutlich, dass das interne Modem oder eine andere Art von Kommunikationsnetzschnittstelle Datenübertragungen einleitet, wenn der Benutzer einen Befehl ausgibt, um mit einer Datenübertragung zu beginnen (siehe FIG. 8). Dieser Befehl kann direkt an die Kommunikationsnetzschnittstelle weitergeleitet werden, solange kein aktive Verbindung zur Datenübertragungsstrecke besteht. Eingehende Kommunikationen beginnen mit dem Auftreten eines Signals auf dem Kommunikationsmedium, was die Kommunikationsnetzschnittstelle veranlasst, ein Verbindungserkennungssignal an den Mikroprozessor des Geräts zu senden (siehe Block 164 von FIG. 2). In beiden Fällen wird anschließend ein Schlüsselaufbau durchgeführt, der zur Einleitung eines Datenaustauschs erforderlich ist (Block 122). Dieser Vorgang kann einfach das manuelle Laden eines Schlüssels in den Speicher des verschlüsselnden/authentifizierenden Kommunikationsgeräts der Vorrichtung sein, oder er kann automatische Schlüsselwechsel vorsehen. Die Auswahl einer Methode zur Schlüsseleingabe und -verwaltung ist für die Beschreibung der vorliegenden Erfindung nicht von Bedeutung, da es mehrere nationale oder industrielle Normen für die Verwaltung kryptografischer Schlüssel gibt, wie z. B. American National Standard X9.17. Das Gerät wartet dann auf eine Abfrage durch das Netz oder eine andere Sicherheitseinrichtung (Block 124). Jede Sicherheitseinrichtung, die z. B. dem American National Standard X9.26 entspricht, funktioniert wie Block 53 in FIG. 5A oder 5B und liefert diese zufällige oder zeitlich veränderliche Aufforderung.

Wenn die Anfrage empfangen wird (Block 124) und das Gerät so konfiguriert ist, dass eine Benutzerauthentifizierung erforderlich ist (Block 126), wird der Benutzer aufgefordert, eine PIN oder eine Smartcard einzugeben (Block 128). Die PIN oder eine andere Identifikationsnummer wird zur Anfrage Modulo zwei addiert (Block 128), eine arithmetische Operation, die auch als logisches Exklusiv-Oder bekannt ist. Dadurch wird sichergestellt, dass das Ergebnis nicht übereinstimmt, wenn die PIN falsch ist. Anschließend wird die Abfrage verschlüsselt, um sowohl die PIN zu verbergen als auch dem Anfragenden zu beweisen, dass das Gerät im Besitz des richtigen Schlüssels ist (Block 130). Das verschlüsselte Ergebnis wird an den Anfragenden zurückgesendet, der es wie zuvor beschrieben überprüfen kann (Block 132). Ist der Überprüfungsvorgang nicht erfolgreich (ACK. FAILS), beendet der Anfragende die Kommunikationssitzung. Ist er erfolgreich (ACK. PASSES), wird eine in den Benutzerauthentifizierungsstandards festgelegte Bestätigung an das Gerät zurückgesendet, und die Kommunikation wird vom Herausforderer freigegeben, so dass das Netz oder der Computer zugänglich ist. Anschließend können die Aufgaben zur Datenverschlüsselung und Nachrichtenauthentifizierung ausgeführt werden (Block 134).

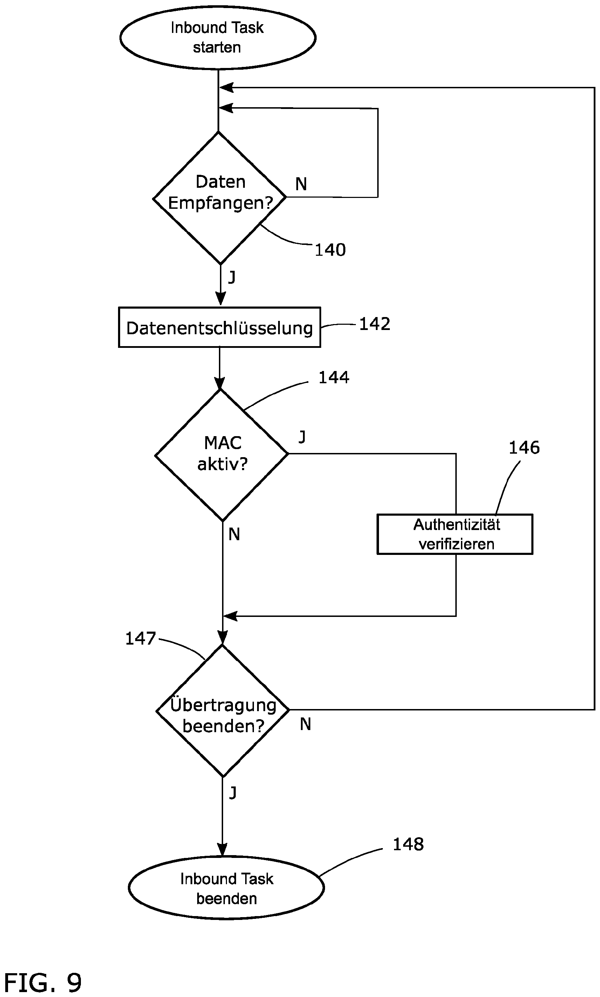

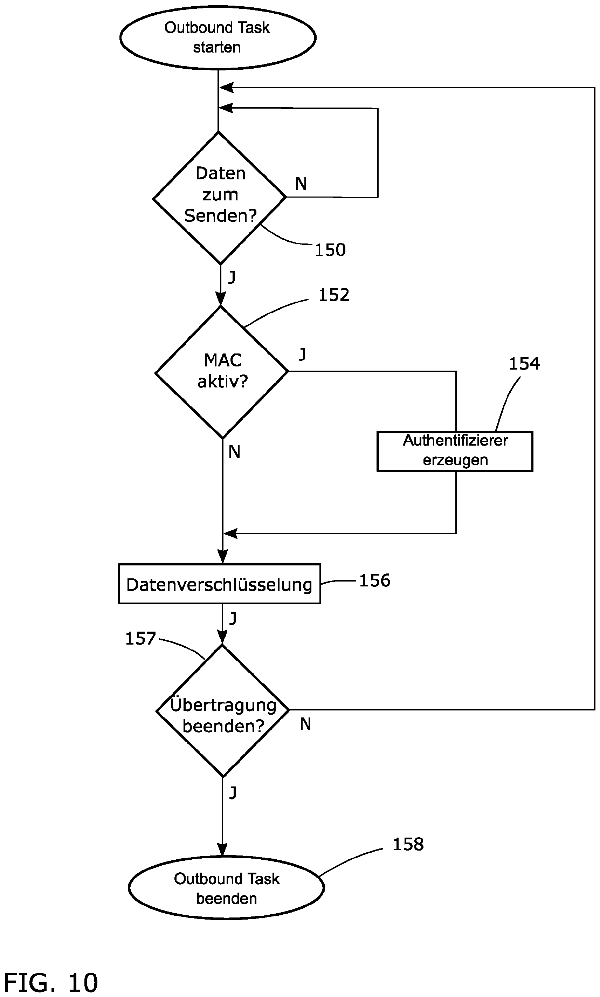

Nachdem der Benutzer wie im vorangegangenen Abschnitt beschrieben erfolgreich authentifiziert wurde, beginnen zwei gleichzeitige Tasks zu arbeiten: der Inbound-Task (siehe FIG. 9), die Daten aus dem Netzwerk verarbeitet, und der Outbound-Task (siehe FIG. 10), die Daten an das Netzwerk verarbeitet. Wie in FIG. 9 dargestellt, empfängt der Inbound-Task Daten (Block 140) über das Modem oder die Netzwerkschnittstelle 40, entschlüsselt (Block 142) die empfangenen Daten und verifiziert (Block 146) die Daten, wenn die Option Message Authentication Code (MAC) aktiviert ist (Block 144). Wenn der Anruf endet und die Verbindung abbricht (Block 147), wird die Aufgabe unterbrochen (Block 148).

Beim Outbound Task, wie in FIG. 10 dargestellt, wird die Reihenfolge der Verarbeitung einfach umgedreht. Wenn Daten vom Computer 22 empfangen werden, um an das Modem oder die Netzwerkschnittstelle 40 gesendet zu werden (Block 150), werden sie zunächst einer Nachrichtenauthentifizierung unterzogen (Block 152), wie zuvor beschrieben, wenn diese Funktion aktiviert ist. Anschließend werden die Daten in einer Schleife verschlüsselt (Block 156), die bis zum Ende des Anrufs andauert (Block 157), woraufhin die ausgehende Aufgabe beendet wird (Block 158).

Figur 11 zeigt eine schematische Darstellung einer ersten Ausführungsform eines iQRNG gemäß Stand der Technik in der Aufsicht. Die Darstellung ist an eine entsprechende Figur der EP 3 529 694 B1 angelehnt und zeigt die Oberfläche O eines zugehörigen Substrates 1110, in welches der QRNG integriert ist. Eine kreisförmige Photonenquelle 1120 mit einem zur Bereitstellung von Photonen eingerichteten p-n-Übergang wird über eine entsprechende Kontaktierung mit Strom versorgt und dabei zur Emission einzelner Photonen 1128 angeregt. Zur Detektion der emittierten Photonen 1128 ist neben der Photonenquelle 1120 ein zugehöriger Einzelphotonendetektor 1130 in Form einer SPAD angeordnet. Es handelt sich bei der Photonenquelle 1120 und dem Einzelphotonendetektor 1130 wie bei herkömmlichen hybriden Ansätzen für photonischer QNRGs allerdings auch weiterhin um strukturell und funktional getrennte Elemente, die zur Integration in einem gemeinsamen Substrat lediglich nebeneinander angeordnet werden.

Ein vom Einzelphotonendetektor 1130 bei der Absorption eines Photons 1128 erzeugter Strompuls kann dann zunächst in einem zugehörigen Mittel zur elektronischen Erfassung 1152 ("electronic sampling means") registriert und ausgewertet werden, insbesondere um eine Bitfolge auf der Grundlage der Anzahl der im Einzelphotonendetektor 1130 erfassten Photonen zu erzeugen. Weiterhin ist ein Mittel zur elektronischen Nachbearbeitung 1154 ("electronic post-processing means") vorgesehen, welches so konfiguriert sein soll, dass es die binären Sequenzen des Mittels zur elektronischen Erfassung 1152 so verarbeiten, dass eine sogenannte "Whitening"-Operation durchgeführt wird. Diese soll eine Vielzahl von Kompressionsoperationen umfassen, die dazu dienen, die statistischen Eigenschaften der erzeugten binären Sequenzen zu verbessern. Der Nachbearbeitungsschritt soll das Entropieniveau des QRNG erhöhen. Dabei muss jedoch sichergestellt sein, dass die verwendeten Kompressionsoperationen nicht wiederrum zu einer prinzipiellen Vorhersagbarkeit der erzeugten Zufallszahlen durch Einführung deterministischer Abhängigkeiten bei der Anwendung führen.

Um die Effizienz der Zufallszahlenerzeugung, d. h. die effektive Entropierate, zu erhöhen, wird der photonische Teil des QRNG an der Oberfläche O des Substrats 1110 von einer lichtblockierenden Schicht 1150 ("light inhibitor filter"), welcher zur Abschattung gegenüber einem äußeren Lichteinfall dient, geschützt. Dabei kann die lichtblockierende Schicht 1150 insbesondere durch eine Metallisierungsschicht, die direkt während des Produktionsprozesses, zum Beispiel durch die CMOS-Technik, als letzte Metallisierungsebene aufgebracht werden kann, bereitgestellt werden. Dadurch soll der Photonendetektor 1130 von externem Licht abgeschirmt werden und ihn nur für solche Photonen empfindlich zu machen, die aufgrund des Übersprechens von der Photonenquelle 1120 durch das Substrat 1110 gelangen. Darüber hinaus soll durch die Metallisierungsschicht auch die optische Kopplung der von Photonenquelle 1120 emittierten Photonen 1128 verbessern, indem diese nach innen reflektiert und so an einem Austritt aus der Oberfläche O des Substrats 1110 behindert werden.

Nachteilig bei einer solchen Anordnung der optischen Komponenten nebeneinander ist der Abstand zwischen den Komponenten, welcher die Kopplungsstärke aufgrund von dem geringen Beleuchtungswinkel und der potentiellen Photonenabsorption in den verschiedenen Materialien reduziert. Zudem besteht trotz der partiell aufgebrachten lichtblockierenden Schicht 1150 potentiell auch weiterhin die Möglichkeit des optischen Zugriffs und damit eines Angriffs von der Oberfläche O des Substrats 1110 oder sogar von der Substratrückseite aus. Über dieses können nämlich beispielsweise zusätzliche Photonen gezielt injiziert oder extrahiert werden, so dass letztlich die Zählstatistik und damit die Entropie der erzeugten Zufallszahlen beeinflusst und kompromittiert werden kann. Weiterhin ist in der Darstellung auch zu erkennen, dass die einzelnen Photonen 1128 isotrop in alle Raumrichtungen verteilt emittiert werden, so dass nur ein Bruchteil der Photonen 1128 vom Photonendetektor 1130 erfasst und somit statistisch ausgewertet werden kann. Dies verringert zum einen erheblich die Effizienz der Zufallszahlenerzeugung und führt anderseits dazu, das eine Vielzahl von Photonen 1128 ungenutzt ins Substrat 1110 emittiert werden, wo diese an anderer Stelle eventuell ebenfalls durch Beobachter bzw. Angreifer extrahiert werden oder zu Störungen führen können.

Figur 12 zeigt eine schematische Darstellung einer zweiten Ausführungsform eines iQRNG gemäß Stand der Technik in einer Seitenansicht. Die Darstellung ist an eine entsprechende Figur aus Khanmohammadi et al. (A. Khanmohammadi, R. Enne, M. Hofbauer and H. Zimmermann, "A Monolithic Silicon Quantum Random Number Generator Based on Measurement of Photon Detection Time," in IEEE Photonics Journal, vol. 7, no. 5, pp. 1-13, Oct. 2015, Art no. 7500113) angelehnt. Auch in diesem Beispiel ist der prinzipielle Aufbau einer Nebeneinanderanordnung einer Photonenquelle 1120 (Si-LED), welche zur Aussendung von einzelnen Photonen 1128 eingerichtet ist, und einem Einzelphotonendetektor 1130 (SPAD) klar zu erkennen. Im Unterschied zur in FIG. 11 gezeigten Anordnung wird die Photonenquelle 1120 hierbei jedoch als kreisförmiges zentrales Element bereitgestellt, welches im Wesentlichen vollständig von einem entsprechend angepassten kreisringförmig ausgebildeten Einzelphotonendetektor 1130 umgeben wird. Die gemeinsame radiale Symmetrieachse R liegt entsprechend im Zentrum des derart ausgebildeten iQRNG. Die Photonenquelle 1120 wird dabei durch eine in einer tiefliegenden n-Wanne ("deep n well") ausgebildeten n-Wanne ("n well") realisiert, die über ein in die Oberfläche O des Substrats 1110 ("p-substrate") zentral um die radiale Symmetrieachse R eingebrachtes n⁺⁺-Gebiet als Kathode 1122 und ein daneben angeordnetes p⁺⁺-Gebiet als Anode 1124 mit Strom versorgt wird. Außerhalb der tiefliegenden n-Wanne wird der Einzelphotonendetektor 1130 ebenfalls an die Oberfläche O über ein eingebrachtes n⁺⁺-Gebiet als Kathode 1132 und ein weiter von der radialen Symmetrieachse R entfernt angeordnetes p⁺⁺-Gebiet als Anode 1134 kontaktiert. An die Kathode 1132 schließt sich unterhalb eine p-Wanne ("p well") an. Unterhalb der Anode 1134 ist hingegen in einer tiefliegenden p-Wanne ("deep p well") ein p-Wanne ("p well") ausgebildet. Die Photonenquelle 1120 wird hierbei als Element innerhalb der Struktur des Photonendetektors 1130 bereitgestellt, so dass im Gegensatz zur FIG. 11 diese eine strukturelle und funktionale Einheit bilden.

Auch bei diesem Beispiel für einen iQRNG gemäß Stand der Technik werden die Photonen 1128 im Wesentlichen allseitig in das Substrat 1110 emittiert, so dass die auch bereits zur Ausführungsform nach FIG. 11 beschrieben Nachteile hinsichtlich der Sicherheit gegenüber Beobachtern bzw. Angreifern und zur verringerten Effizienz ebenfalls zutreffen. Durch den spezifischen Aufbau als kreisringförmige Anordnung und die strukturelle Verknüpfung des Einzelphotonendetektors 1130 mit der Photonenquelle 1120 kann gegenüber FIG. 11 jedoch die Integrationsdichte weiter erhöht werden. Dies beinhaltet neben einem geringeren Flächenverbrauch zur Ausbildung des iQRNG auch eine Erhöhung der Sicherheit gegenüber Angriffen sowie eine gesteigerte Effizienz bei der Zufallszahlenerzeugung bzw. der Entropierate als Vorteile. Dies hängt insbesondere auch damit zusammen, dass durch die Verringerung aller Abstände die Verluste an Photonen 1128 durch auftretende Materialabsorption und ungünstige Emissionsrichtungen geringer werden. Zudem wird dadurch die Fläche für mögliche Angriffe verkleinert. Davon abgesehen besteht auch hierbei prinzipiell jedoch ebenfalls auch weiterhin die Möglichkeit insbesondere an der Oberfläche O sowie auch an anderen Stellen des Substrats 1110 zur Beeinflussung der Zählstatistik durch Angreifer einzelne Photonen 1128 auszukoppeln oder zu injizieren. Eine solche Nebeneinanderanordnung der beiden optischen Komponenten eines QRNG weist daher einige Nachteile auf, die einer besonders sicheren, kompakten und zuverlässigen Zufallszahlenerzeugung für SoC-Anwendungen bisher entgegenstehen.

Figur 13 zeigt eine schematische Darstellung eines mit einem Verfahren zur Bereitstellung tiefliegender p-n-Übergänge 1050 und 1052 in einem BCD-Prozess bereitgestellten BCD-Substrats 1110 und eine TCAD-Darstellung der resultierenden Dotierstoffverteilung. Ein Ausführungsbeispiel eines Verfahrens zur Erzeugung tiefliegender p-n-Übergänge 1050 und 1052 in einem BCD-Prozess umfasst ein Bereitstellen eines Trägersubstrats 1010; ein Einbringen eines ersten Dotierstoffs zur Ausbildung eines ersten Gebiets 1022 (z. B. NBL) vom ersten Leitungstyp (negativ für NBL) in eine Oberfläche S des Trägersubstrats 1010; ein Einbringen eines zweiten Dotierstoffs zur Ausbildung eines zweiten Gebiets 1032 (z. B. PBL) vom zweiten Leitungstyp (positiv für PBL) in die Oberfläche S des Trägersubstrats 1010, wobei sich das erste Gebiet 1022 (NBL) und das zweite Gebiet 1032 (PBL) zumindest teilweise überlagern; ein Aufwachsen einer epitaktischen Schicht 1040 auf die Oberfläche S des Trägersubstrats 1010, wobei sich das erste Gebiet 1022 (NBL) und das zweite Gebiet 1032 (PBL) durch Diffusion des ersten Dotierstoffs und des zweiten Dotierstoffs in der epitaktischen Schicht 1040 ausbreiten und dadurch einen in der epitaktischen Schicht liegenden p-n-Übergang 1050 ausbilden.

In der Darstellung handelt es sich bei dem ersten Gebiet 1022 um eine tiefliegende NBL-Schicht und bei dem zweiten Gebiet 1032 um eine tiefliegende PBL-Schicht. Die Reihenfolge ist jedoch vertauschbar, so dass es sich bei dem ersten Gebiet 1022 auch um eine tiefliegende PBL-Schicht und bei dem zweiten Gebiet 1032 um eine tiefliegende NBL-Schicht handeln kann. Über eine entsprechende Anpassung der Diffusionslängen der einzelnen Dotierstoffe kann auch die Schichtfolge der p-n-Übergänge 1050 und 1052 umgekehrt werden, z. B. könnten in FIG. 13 auch die NBL- und PBL-Schichten am p-n-Übergang 1050 und 1052 vertauscht werden.

Das beschriebene Verfahren unterscheidet sich von den herkömmlichen Verfahren zur Bereitstellung von BCD-Substraten 1110 gemäß Stand der Technik insbesondere dadurch, dass sich das erste Gebiet 1022 (NBL) und das zweite Gebiet 1032 (PBL) zumindest teilweise überlagern. Insbesondere kann unmittelbar nach dem Einbringen des zweiten Dotierstoffs in einer Aufsicht auf die Oberfläche S des Trägersubstrats 1010 das erste Gebiet 1022 oder das zweite Gebiet 1032 vollständig das jeweils anderen Gebiet (1032, 1022) überlagern. Daher liegt bei der gezeigten Ausführungsform unmittelbar nach dem Einbringen des zweiten Dotierstoffs zur Ausbildung des zweiten Gebiets 1032 (PBL) dieses in einer Aufsicht auf die Oberfläche S des Trägersubstrats 1010 vollständig im ersten Gebiet 1022 (NBL). Um dabei einen in der epitaktischen Schicht liegenden p-n-Übergang 1050 auszubilden, weisen der erste und der zweite Dotierstoff vorzugsweise unterschiedliche Diffusionseigenschaften im Trägersubstrat 1010 und/oder in der epitaktischen Schicht 1040 auf. Insbesondere kann der zweite Dotierstoff im zweiten Gebiet 1032 (PBL) wie gezeigt eine höhere Diffusions-Beweglichkeit (und damit Diffusionslänge) im Trägersubstrat 1010 und in der epitaktischen Schicht 1040 als der erste Dotierstoff im ersten Gebiet 1022 (NBL) aufweisen.

Zur Verstärkung der Diffusion kann nach dem Einbringen des ersten Dotierstoffs und/oder des zweiten Dotierstoffs eine Erwärmung des Trägersubstrats 1010 erfolgt. Weiterhin kann nach dem Aufwachsen der epitaktischen Schicht 1040 eine Erwärmung des Trägersubstrats 1010 zur Verstärkung der Dotierstoffdiffusion erfolgen. Ein Einbringen des ersten Dotierstoffs und/oder des zweiten Dotierstoffs kann beim vorgestellten Verfahren sowohl maskenlos oder über ein Maskenverfahren erfolgen. Bei dem gezeigten BCD-Wafer kann eine vollständige Überlagerung des ersten Gebiets 1022 (NBL) mit einem einzelnen zweiten Gebiet 1032 (PBL) angenommen werden. Herkömmlicherweise werden die ersten und zweiten Gebiete 1022 und 1032 jedoch räumlich getrennt voneinander ausgebildet. Insbesondere ist deren Abstand dabei im Allgemeinen mindestens so groß gewählt, dass auch nach dem Ausdiffundieren der einzelnen Dotierstoffe keine sich überlagernden Gebiete erzeugt werden.

Die unterhalb der schematischen Darstellung angegebene TCAD-Darstellung (engl. "Technology Computer-Aided Design, TCAD") zeigt die Dotierstoffverteilung innerhalb des kontaktierten BCD-Substrats 1110 zur Simulation einer entsprechenden integrierten Diodenstruktur. Aufgrund der in dieser Ausführungsform gezeigten Doppelstruktur mit einem oberen p-n-Übergang 1050 in der epitaktischen Schicht 1040 und einem unteren p-n-Übergang 1052 in dem Trägersubstrat 1010 ergibt sich in der gezeigten Seitenansicht eine effektive Einschnürung des im Bereich der p-n-Übergänge 1050 und 1052 eingeschlossenen n-Gebiets NBL durch die beiden dieses n-Gebiet NBL umgebenden p-Gebiete PBL. Beide p-n-Übergänge 1050 und 1052 können zur Bereitstellung voneinander unabhängiger SPADs mit einer zur Erzeugung eines Lawineneffekts geeigneten Dotierungsdichte und Feldstärkeverteilung ausgebildet werden.

Mittels entsprechender BCD-Substrate 1110 zur weiteren Verwendung in BCD-Technologien lassen sich somit besonders tiefliegende SPADs ("deepSPADs") erzeugen. Insbesondere bleibt oberhalb der bereitgestellten SPADs dabei noch genügend Bauraum zur Integration weiterer optoelektronischer Komponenten. Es kann daher insbesondere eine oberhalb der tiefliegenden SPAD ausgebildete Zener-avLED dazu genutzt, einen besonders kompakten, vertikal aufgebauten iQRNG zu realisieren, bei dem einzelne Photonen 1128 durch die Zener-avLED vorzugsweise in Richtung des oberen p-n-Übergangs 1050 emittiert werden und somit für eine Detektion durch eine unmittelbar unterhalb der Zener-avLED am oberen p-n-Übergang 1050 ausgebildeten SPAD als Einzelphotonendetektor bereitgestellt werden (siehe FIG. 14 mit zugehöriger Figurenbeschreibung).

Figur 14 zeigt eine schematische Darstellung einer beispielhaften ersten Ausführungsform eines beschriebenen iQRNG 1200. Insbesondere kann der oben angegebene Quantenzufallsgenerator einen solchen iQRNG 1200 umfassen. Der gezeigte integrierte QRNG 1200 umfasst eine Photonenquelle 1120 und einen Einzelphotonendetektor 1130, wobei die Photonenquelle 1120 und der Einzelphotonendetektor 1130 in vertikaler Richtung übereinander in einem gemeinsamen Substrat aus einem Halbleitermaterial angeordnet sind. Vorzugsweise handelt es sich bei der Photonenquelle 1120 um eine Einzelphotonenquelle (SPS), dazu eingerichtet, zeitgleich nur einzelne oder einige wenige Photonen 1128 bereitzustellen. Vorzugsweise handelt es sich bei der Photonenquelle 1120 um eine an einem Arbeitspunkt unterhalb oder nahe der Durchbruchspannung betriebene lichtemittierende Avalanche Zener-Diode (Zener-avLED). Vorzugsweise handelt es sich bei dem Einzelphotonendetektor 1130 um eine Einzelphotonen-Lawinendiode (SPAD).

Der iQRNG 1200 ist vorzugsweise in einem BCD-Substrat 1110 in BCD-Technologie ausgebildet. Vorzugsweise umfasst das BCD-Substrat 1110 ein Trägersubstrat 1010; und eine auf dem Trägersubstrat 1010 aufgewachsene epitaktische Schicht 1040, wobei zwischen dem Trägersubstrat 1010 und der epitaktischen Schicht 1040 durch eine Diffusion von in eine Oberfläche S des Trägersubstrats 1010 unterhalb der epitaktischen Schicht 1040 eingebrachten Dotierstoffen ein in der epitaktischen Schicht liegender tiefliegender p-n-Übergang 1050 erzeugt wurde (siehe FIG. 13). Vorzugsweise bildet der Einzelphotonendetektor 1130 in einem Bereich um den tiefliegenden p-n-Übergang 1050 ein Lawinengebiet aus und umfasst ein Absorptionsgebiet PW/HPW mit einer Hochvolt-p-Wanne HPW (engl. "high-voltage p-type well") und eine p-Wanne PW (engl. "p-type well") zur Umwandlung von Photonen in Elektronen-Lochpaare, wobei sich das Absorptionsgebiet PW/HPW unmittelbar an die den tiefliegenden p-n-Übergang 1050 ausbildenden Gebiete NBL und PBL anschließt. Die vollständig ausgeprägte Hochvolt-p-Wanne HPW ermöglicht dabei einen optimalen Anschluss des tiefliegenden p-n-Übergang 1050 von der Anode her.

Bevorzugt ist, dass der tiefliegende p-n-Übergang 1050 zumindest teilweise zwischen einer tiefliegenden n-Schicht NBL als Kathode 1132 und einer sich unmittelbar an die tiefliegende n-Schicht NBL anschließenden tiefliegenden p-Schicht PBL ausgebildet ist, das Absorptionsgebiet PW/HPW sich unmittelbar an die tiefliegende p-Schicht PBL anschließt und im Wesentlichen als p-Gebiet (optional ein intrinsisches Gebiet umfassend) ausgebildet ist, und eine als p+-Gebiet ausgebildete Anode 1134 sich unmittelbar an das Absorptionsgebiet PW/HPW anschließt.

Im gezeigten Ausführungsbeispiel sind die jeweiligen Anoden 1124 und 1134 der Photonenquelle 1120 und des Einzelphotonendetektors 1130 zusammengelegt. Diese können dann beispielsweise über eine gemeinsame zweite Metallisierung MET2 an der Oberfläche S des BCD-Substrats 1110 elektrisch kontaktiert werden. Durch eine gemeinsame und durchgehende zweite Metallisierung MET2 kann auch eine Abschattung zur Abschirmung des gesamten Bauraums darunter erreicht werden. Die gemeinsamen Anoden 1124, 1134 der Photonenquelle 1120 und des Einzelphotonendetektors 1130 sind einerseits über die die p-Wanne PW mit der Hochvolt-p-Wanne HPW und der tiefliegenden p-Schicht PBL zur Kontaktierung des ersten p-n-Übergangs 1050, und andererseits mit dem p-dotierter Bereich (engl. "p-type body") PBODY zur Kontaktierung des p-n-Übergangs 1121 der Photonenquelle 1120 verbunden. Die zugehörigen Kathoden 1122 und 1132 sind beispielhaft jeweils einzeln ausgeführt und können über eine erste zugehörige erste Metallisierung MET1 elektrisch kontaktiert werden und liegen bevorzugt auf dem Bezugspotenzial GND. Der beschriebene iQRNG kann als kreisförmige Struktur ausgebildet sein (entspricht einer räumlichen Rotation der gezeigten Darstellungsebene um eine gedachte zentrale Achse in vertikaler Richtung). Es sind jedoch auch andere Ausbildungen der gezeigten Struktur möglich.

Zur Spannungsversorgung kann die Kathode 1132 des Einzelphotonendetektors 1130 beispielsweise über einen Arbeitswiderstand R₂ mit einer vorzugsweise überwachten zweiten positiven Versorgungsspannung auf einer zweiten Versorgungspannungsleitung V_{ENT2} verbunden sein. Bei einer Detektion eines Photons, fließt ein elektrischer Strom durch den in Sperrrichtung gepolten p-n-Übergang 1050 des Einzelphotonendetektors 1130. Dadurch kommt es beispielsweise zu einem Spannungsabfall über den Arbeitswiderstand R₂ in Form eines typischerweise schnell ansteigenden und dann exponentiell abfallenden Spannungssignal 1405 am Ausgang der Entropiequelle (zur weiteren möglichen Verarbeitung wird auf die beispielhafte elektronische Schaltung eines Quantenzufallsgenerators 1400 nach FIG. 18 verwiesen). Beispielsweise kann ein Analog-zu-Digital-Wandler (engl. "Analog-to-Digital Converter, ADC") (1403 in FIG. 18) anschließend dieses Entropieausgangssignal auswerten. Der ADC (1403) kann auch Verstärker und/oder Filter zur Aufbereitung des Spannungssignals (1405) umfassen. Der Arbeitswiderstand R₂ begrenzt darüber hinaus den Strom durch den Einzelphotonendetektor 1130.

Die Kathode 1122 des Einzelphotonendetektors 1130 kann beispielsweise über einen ersten Arbeitswiderstand R₁ mit einer vorzugsweise überwachten ersten positiven Versorgungsspannung auf einer ersten Versorgungspannungsleitung V_{ENT1} verbunden sein. Der erste Arbeitswiderstand R₁ begrenzt den Strom durch die Photonenquelle 1120. Bei Emission eines Photons zeigt der Sperrstrom des in Sperrrichtung gepolten p-n-Übergangs 1121 der Photonenquelle 1120 typischerweise einen Spike-förmigen Anstieg. Dieser Sperrstromanstieg führt zu einem Spannungspuls über den ersten Arbeitswiderstand R₁. Dieser Spannungspuls kann ausgewertet werden. Beispielsweise kann der ADC (1403) mittels einer ADC-internen Korrelationsvorrichtung dazu eingerichtet sein, nur solche Pulse auf dem Spannungssignal 1405 am Ausgang der Entropiequelle auszuwerten, die mit einem Spannungspuls am ersten Arbeitswiderstand R₁, beispielsweise auf einem optionalen Korrelationssignal 1430 korrelieren. Nur solche Pulse auf dem Spannungssignal 1405 werden dann als Pulse des Einzelphotonendetektors 1130 gewertet, die mit einer Emission eines Photons durch die Photonenquelle 1120 korrelieren. Dies steigert die Qualität der Entropie der bereitgestellten Quantenzufallszahlen.

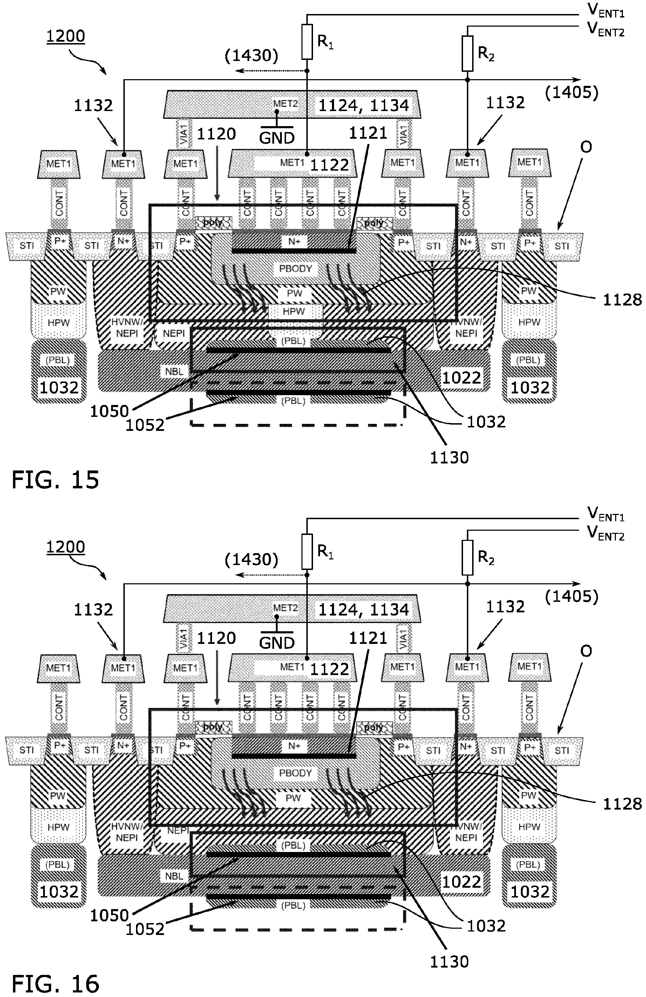

Figur 15 zeigt eine schematische Darstellung einer beispielhaften zweiten Ausführungsform eines beschriebenen iQRNG. Die gezeigte Ausführungsform entspricht weitgehend der in der FIG. 14 gezeigten ersten Ausführungsform. Die Bezugszeichen und deren jeweilige Zuordnung zu einzelnen Merkmalen gelten daher entsprechend. Im Vergleich zur FIG. 14 wurde die Hochvolt-p-Wanne HPW jedoch strukturell durch eine verjüngte Hochvolt-p-Wanne HPW und ein schwach n-dotiertes bzw. intrinsisches epitaktisches Gebiet NEPI ersetzt. Dabei bildet die Hochvolt-p-Wanne HPW des Absorptionsgebiets PW/HPW lediglich einen engen Kanal zwischen der auch in FIG. 12 gezeigten obenliegenden p-Wanne PW und der tiefliegenden p-Schicht PBL des tiefliegende p-n-Übergang 1050 aus. Die Umgebung des Kanals wird durch das schwach n-dotierte bzw. intrinsische epitaktische Gebiet NEPI definiert. Durch den Kanal kann wird der tiefliegenden p-n-Übergang 1050 ohne einem zusätzlichen Durchgriff/Punch durch das schwach n-dotierte bzw. intrinsisches epitaktisches Gebiet NEPI von der Anode her angeschlossen.

Figur 16 zeigt eine schematische Darstellung einer beispielhaften dritten Ausführungsform eines beschriebenen iQRNG. Die gezeigte Ausführungsform entspricht weitgehend der in der

FIG. 15 gezeigten ersten Ausführungsform. Die Bezugszeichen und deren jeweilige Zuordnung zu einzelnen Merkmalen gelten daher entsprechend. Im Vergleich zur FIG. 14 wurde auf die kanalförmig ausgebildete Hochvolt-p-Wanne HPW im Absorptionsgebiet PW/HPW verzichtet und das schwach n-dotierte bzw. intrinsische epitaktische Gebiet NEPI erstreckt sich über den gesamten unteren Bereich. Insofern wurde im Vergleich zur FIG. 14 die Hochvolt-p-Wanne HPW strukturell durch ein schwach n-dotierte bzw. intrinsisches epitaktisches Gebiet NEPI ersetzt. Der tiefliegende p-n-Übergang 1050 wird somit erst nach einem zusätzlichen Durchgriff/Punch durch das schwach n-dotierte bzw. intrinsisches epitaktisches Gebiet NEPI von der Anode her angeschlossen, was eine Entkopplung von möglicherweise mehreren nebeneinander parallel angeordneten Zellen bewirkt.

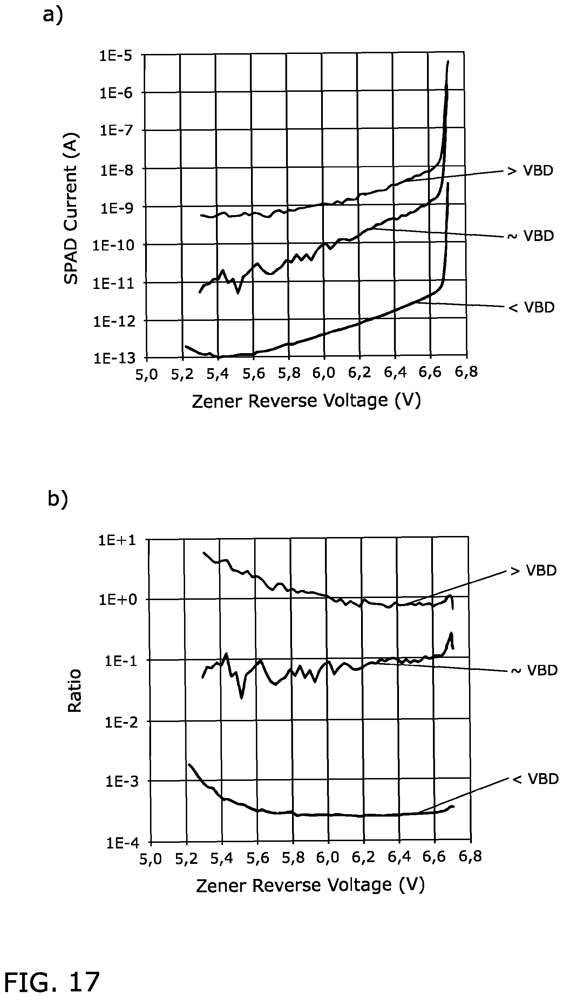

Figur 17 zeigt eine graphische Darstellung der Abhängigkeit des a) SPAD-Stroms und b) des Verhältnisses zwischen SPAD-Strom und Zener-Strom in Abhängigkeit von der Zener-Sperrspannung bei verschiedenen SPAD-Sperrspannungen (kleiner, gleich, größer der Durchbruchspannung) innerhalb eines beschriebenen iQRNGs. Die unter a) gezeigte Abhängigkeit zeigt dabei deutlich, dass der SPAD-Strom mit der Zener-Sperrspannung im Bereich von 5,6 V bis 6,6 V exponentiell ansteigt. Dies gilt für alle Betriebsmodi der SPAD, d. h. unterhalb dessen eigener Durchbruchspannung (< VBD, linearer Bereich), nahe der Durchbruchspannung (~ VBD, Avalanche-Bereich) sowie auch oberhalb der Durchbruchspannung (> VBD) und somit auch im Geiger-Betrieb.

Der unter b) gezeigte untere Kurvenverlauf (< VBD) zeigt, dass das gemessene Stromverhältnis zwischen dem SPAD-Strom und dem Zener-Strom für verschiedene Zener-Sperrspannungen im Bereich 5,8 bis 6,6 V etwa 1:4000 beträgt. Im Bereich der Durchbruchspannung (~ VBD) der SPAD steigt das Verhältnis auf Werte um 1:10. Dies ist im sog. Multiplikationsfaktor der SPAD begründet, welcher im Bereich der Durchbruchspannung den linearen Bereich verlässt. Der obere Kurvenverlauf gibt schließlich das entsprechende Verhältnis bei der oberhalb der zugehörigen Durchbruchspannung (> VBD) betriebenen SPAD an (etwa 1:1). Dies bedeutet, dass bei einer oberhalb der zugehörigen Durchbruchspannung (> VBD) betriebenen SPAD der erzeugte Photostrom und der Zener-Strom der Zener-avLED in etwa gleich groß sind und ein deutliches Messsignal mittels der Kopplung von Photonen auf der SPAD gemessen werden kann.

Figur 18 zeigt eine schematische Darstellung einer beispielhaften elektronischen Schaltung eines Quantenzufallsgenerators 1400 zur Generierung und Ausgabe einer digitalen Zufallszahlenfolge. Bei der gezeigten Entropiequelle 1401 kann es sich insbesondere um eine Photonenquelle 1120 und einen Einzelphotonendetektor 1130 eines beschriebenen iQRNG 1200 handeln, wobei der iQRNG 1200 (bzw. dessen Entropiequelle) über eine erste Versorgungsspannungsleitung V_{ENT1} und eine zweite Versorgungsspannungsleitung V_{ENT2}, welche an einen Spannungswandler 1408 angeschlossen ist, gegenüber einem Bezugspotential auf einer Bezugspotentialleitung GND beispielsweise mit unterschiedlichen Versorgungsspannungen versorgt wird. Es ist zu beachten, dass ein allgemeiner (und insbesondere der hier beispielhaft gezeigte) Quantenzufallsgenerator 1400 in einigen Ausführungsformen einem erfindungsgemäßen iQRNG 1200, wie er als Halbleiterstruktur beispielsweise in den FIG. 14 bis 16 gezeigt ist, unter Hinzunahme weiter Schaltungskomponenten unmittelbar entsprechen kann. Insbesondere können eine Photonenquelle 1120 und einen Einzelphotonendetektor 1130 eines erfindungsgemäßen iQRNG 1200 zusammen als Entropiequelle 1401 des gezeigten Quantenzufallsgenerators 1400 angesehen werden, d. h. auch bei einem erfindungsgemäßen iQRNG 1200 kann die Kombination aus einer Photonenquelle 1120 und einem Einzelphotonendetektor 1130 als Entropiequelle bezeichnet werden. Ein von der Entropiequelle 1401 erzeugtes Spannungssignal 1405 wird in einem Analog-zu-Digital-Wandler (engl. "Analog-to-Digital Converter, ADC") 1403, welcher über eine Referenzspannungsleitung V_{REF} versorgt wird, zunächst digitalisiert und als digitales Ausgangssignal 1407 an eine Pulsverlängerungsschaltung 1406 übergeben. Die Versorgungsspannungsleitung V_{ENT} und die Referenzspannungsleitung V_{REF} werden über einen Spannungsmonitor 1413 überwacht, wobei sowohl der Spannungswandler 1408 als auch der Spannungsmonitor 1413 über eine positive Versorgungsspannungsleitung VDD gegenüber dem Bezugspotential auf der Bezugspotentialleitung GND mit Spannung versorgt werden. Der Spannungswandler 1408 ist mit dem Spannungsmonitor 1413 über eine Spannungswandlerleitung 1421 verbunden.

Bei der Pulsverlängerungsschaltung 1406 kann es sich insbesondere um eine monostabile Kippstufe (Monoflop, MF) handeln. Das Monoflop kann dazu genutzt werden, einen Puls auf der Leitung des digitalen Ausgangssignals 1407 des ADC 1403 in Abhängigkeit von einem bestimmten vorgegebenen Systemtakt, beispielsweise auf eine zeitliche Länge von mindestens einer Taktperiode des Systemtakts, zu verlängern.

Von der Pulsverlängerungsschaltung 1406 wird dann ein einsynchronisiertes Spannungssignal 1415, d. h. beispielsweise ein Puls mit einer bestimmten Mindestlänge, ausgegeben und an einen Zeit-zu-Pseudozufallszahl-Wandler (engl. "Time-to-Pseudo-Random-Number Converter, TPRC") 1404.3 übergeben. Dieser kann ein- oder mehrstufig zusammengesetzt sein. Beispielsweise kann der TPRC 1404.3 ein analoges Instrument, einen Zeit-zu-Analog-Wandler (engl. "Time-to-Analog Converter, TAC"), und/oder einen Analog-zu-Pseudozufallszahl-Wandler (engl. "Analog-to-Pseudo-Random-Number Converter, APRC") umfassen, die zusammen ebenfalls einen TPRC 1404.3 bereitstellen können. Der Pseudozufallszahlengenerator des TPRC 1404.3 kann ein rückgekoppeltes Schieberegister umfassen, dass je nach Konstruktion mit jedem Takt des Systemtakts seine Werte um eine Stelle nach links oder rechts verschiebt und in das freiwerdende Bit den Rückkoppelwert eines vorgegebenen Rückkoppelpolynoms zurückspeist. Bei dem Rückkoppelpolynom kann es sich bevorzugt um ein einfach-primitives Rückkoppelpolynom handeln. Der TPRC 1404.3 kann unmittelbar mit einem internen Datenbus 1419 verbunden sein. Das Ausgangssignal 1410 des TPRC 1404.3 kann weiterhin einer Entropieextraktion 1404.4 zugeführt werden.

Beginnend mit einem Startwert des Pseudozufallszahlengenerators (einem sogenannten Seed-Wert) kann hierzu jedem Takt des Systemtakts ab einer fallenden Flanke des einsynchronisierten Spannungssignals 1415 genau eine Pseudozufallszahl des Pseudozufallszahlengenerators bijektiv zugeordnet werden, d. h. aus dem Wert der Pseudozufallszahl kann dann auf die zeitliche Position des betreffenden Takts des Systemtaktes nach der fallenden Flanke des einsynchronisierten Spannungssignals 1415 geschlossen werden.

Anstatt eines üblichen Digitalzählers wie im Stand der Technik kann somit ein Pseudozufallszahlengenerator verwendet werden. Der Vorteil ist, dass selbst bei einer durch einen Angreifer erfolgreich durchgeführten Einprägung einer Störung in das einsynchronisierte Spannungssignal 1415 die Zufälligkeit des Quantenzufallsbits am Ausgang 1411 der Entropieextraktion 1404.4 nur marginal gestört wird, da der Angreifer das zugehörige Rückkoppelpolynom kennen müsste. Vorzugsweise kann dieses zufällig aus einer Vielzahl an Möglichkeiten ausgewählt werden. Gleiches gilt für den Seed-Wert des Pseudozufallszahlengenerators, welchen ein Angreifer dann ebenfalls ermitteln müsste. Ein weiterer Vorteil eines Pseudozufallszahlengenerators an Stelle eines einfachen Digitalzählers ist der geringere Flächenbedarf der Rückkoppellogik mittels eines einfach-primitiven Rückkoppelpolynoms gegenüber einem Binärzähler. Ist das linear rückgekoppelte Schieberegister des Pseudozufallszahlengenerators lang genug, so ist jedem Takt zwischen zwei Pulsen des von der Entropiequelle 1401 erzeugten Spannungssignals 1405 typischerweise eine eindeutige Pseudozufallszahl zugeordnet.

Die Entropieextraktion 1404.4 kann dazu genutzt werden, einen Fehler (d. h. einen nicht gewünschten Zustand) im Ausgangssignal 1410 des TPRC 1404.3 zu ermitteln. Hierzu kann die Entropieextraktion 1404.4 insbesondere zwei über einen Komparator miteinander vergleichbare linear rückgekoppelte Schieberegister aufweisen. Auch an dieser Stelle kann somit auf herkömmliche Binärzähler verzichtet werden. Eine Rückkopplung kann abhängig vom der Registertiefe ebenfalls über einfach-primitive Polynome als Rückkoppelpolynome erfolgen. Die Länge der linear rückgekoppelten Schieberegister kann dabei frei einstellbar sein. Lange Schieberegister weisen im Allgemeinen eine schlechtere Datenrate und eine verbesserte Zufallsstatistik auf. Kürzere Schiebregister erlauben demgegenüber zwar eine höhere Datenrate, zeigen jedoch eine schlechtere Zufallsverteilung. Die Verwendung von Schieberegistern an dieser Stelle hat den Vorteil, dass weniger Gatter als im Stand der Technik benötigt werden, die logische Tiefe der Schaltungen kleiner ist und somit die Taktrate höher sein kann. Dadurch wird die Wahrscheinlichkeit für das Vorkommen von zwei gleichen Zahlen geringer und die Zufallsbitrate wird höher.

Ein entsprechendes Verfahren zur Entropieextraktion kann vorsehen, dass zunächst zwei Werte des Ausgangssignals 1410 des TPRC 404.3 ermittelt und in Schieberegister der Entropieextraktion 1404.4 gespeichert werden. Sind zwei Werte im Schieberegister der Entropieextraktion 1404.4 gespeichert, kann die Entropieextraktion 1404.4 diese beiden Werte vergleichen. Die Werte in den Schieberegistern der Entropieextraktion 1404.4 umfassen somit einen ersten Wert und einen zweiten Wert, die beide der TPRC 1404.3 ermittelt hat. Anschließend kann die Entropieextraktion 1404.4 die beiden Werte bewerten. Ist der erste Wert kleiner als der zweite Wert und die Differenz zwischen dem ersten Wert und dem zweiten Wert größer als eine Mindestdifferenz ε, so kann die Entropieextraktion 1404.4 den Wert ihres Ausgang 1411, auf einen ersten logischen Wert setzen. Ist der erste Wert größer als der zweite Wert und die Differenz zwischen dem ersten Wert und dem zweiten Wert größer als die Mindestdifferent ε, so kann die Entropieextraktion 1404.4 ihren Ausgang 1411, auf einen zweiten logischen Wert, der vom ersten logischen Wert verschieden ist, setzen. Ist die Differenz zwischen dem ersten Wert und dem zweiten Wert kleiner als die Mindestdifferenz ε, so kann die Entropieextraktion 1404.4 den ersten Wert und den zweiten Wert verwerfen.

Bevorzugt veranlasst die Entropieextraktion 1404.4 einen sogenannten Watchdog 1404.5 in einem solchen Fall einen Fehlerzähler um eine erste Fehlerzählerschrittweite zu erhöhen. Die erste Fehlerzählerschrittweite kann negativ sein. Umgekehrt kann die Entropieextraktion 1404.4 den Fehlerzähler des Watchdogs 1404.5 um eine zweite Fehlerzählerschrittweite erniedrigen, wenn die Differenz zwischen dem ersten Wert und dem zweiten Wert größer als die Mindestdifferenz ε ist. Die zweite Fehlerzählerschrittweite kann gleich der ersten Fehlerzählerschrittweite sein.

Der Watchdog 1404.5 ist weiterhin mit dem interne Datenbus 1419 verbunden. Zusätzlich kann der Watchdog 1404.5 über ein oder mehrere, vorzugsweise digitale Ein-Ausgabe-Signalleitungen 1414 mit dem Spannungsmonitor 1413 verbunden sein. Bevorzugt überwacht der Watchdog 1404.5 die Spannungswerte, die der Spannungsmonitor 1413 ermittelt. Es hat sich bewährt, wenn der Spannungsmonitor 1413 nicht nur die Spannungen im Quantenzufallszahlengenerator 1400 ermittelt und überwacht, sondern auch andere Spannungen innerhalb der jeweiligen Anwendungsschaltung. Bei dem Spannungsmonitor 1413 kann es sich beispielsweise um einen ADC handeln.

Die eigentliche Aufgabe des Watchdog 1404.5 ist jedoch eine Überwachung der Quantenzufallszahl RN am Ausgang 1411 der Entropieextraktion 1404.4. Der Watchdog 1404.5 kann dabei vorzugsweise zumindest drei definierte Fehlerfälle erfassen. Der Watchdog 1404.5 kann valide Quantenzufallsbits 1411 unter Erzeugung eines Seed-Werts S 1412 an eines optionales weiteres linear rückgekoppeltes Schieberegister als Backup-Pseudo-Zufallszahlengeneratoren (engl. "Pseudo Random Number Generator, PRNG") 1404.6 weitergeben. Vorzugsweise verhindert der Watchdog 1404.5 die Verwendung der validen Quantenzufallsbits durch eine Finite-State-Machine 1404.8. Sofern ein Fehler auftritt, kann der Watchdog 1404.5 bestimmte Fehlerbits zur weiteren Auswertung setzen.

Hat der Watchdog 1404.5 beispielswiese einen Fehler des Quantenzufallsgenerators 1400 detektiert, so kann er vorzugsweise den Quantenzufallszahlengenerator 1400 in einen Notlaufzustand versetzen. Hierzu setzt der Watchdog 1404.5 vorzugsweise ein Selektionssignal 1416 eines der Zufallszahlenerzeugung nachgeordneten Signalmultiplexers 1404.7, sodass der Signalmultiplexer 1404.7 anstatt der Zufallszahlen RN am Ausgang 1411 der Entropieextraktion 1404.4 die Pseudozufallszahl PRN des optionalen PRNG 1404.6 in Form eines Stroms von Pseudozufallsbits über eine Pseudozufallssignalleitung 1417 als Ersatz für die zumindest potenziell fehlerhafte Zufallszahl RN des Ausgangs 1411 der Entropieextraktion 1404.4 an den Eingang der Finite-State-Machine 1404.8 legt.

Das optionale weitere linear rückgekoppelte Schieberegister des PRNG 1404.6 kann dazu ausgebildet sein, Pseudozufallszahlen PRN zu generieren. Der Seed-Wert S 1412 weist bevorzugt die letzten gerade noch gültigen Quantenzufallsbits des Ausgangs 1411 der Entropieextraktion 1404.4 auf. Der Watchdog 1404.5 legt dann bevorzugt diese letzten gültigen Quantenzufallsbits 1411 an den Eingang des optionalen PRNG 1404.6 an. Der Seed-Wert S kann somit als zufälliger sicherer Startwert für ein Generatorpolynom der Rückkopplung des optionalen weiteren linear rückgekoppelten Schieberegisters des PRNG 1404.6 für die Generierung der Pseudozufallszahl PRN und deren Signalisierung über die Pseudozufallssignalleitung 1417 genutzt werden. Das Generatorpolynom sowie der Grad des Generatorpolynoms sind dabei bevorzugt frei wählbar. Durch den optionalen Backup-Pseudo-Zufallszahlengenerator kann im Fehlerfall zumindest übergangsweise die Bereitstellung von sicheren Zufallszahlen ermöglicht werden.

Die Finite-State-Machine 1404.8 hat die Aufgabe, die Zufallszahl RN bzw. die Pseudozufallszahl PRN am Ausgang des Signalmultiplexers 1404.7 entgegenzunehmen und entsprechende Quantenzufallsdatenwörter 1418 über eine Pseudozufallssignalleitung 1417 in einen flüchtigen Speicher (RAM) bzw. einen FIFO-Speicher (First In - First Out) 1404.9 zu schreiben. Ist der Schreibvorgang erfolgreich, kann die Finite-State-Machine 1404.8 ein Finish-Flag 1404.10 über den internen Datenbus 1419 setzen. Daraufhin kann ein Prozessor beispielsweise auf den flüchtigen Speicher (RAM) bzw. einen FIFO-Speicher (First In - First Out) 1404.9 zugreifen und die Zufallszahl auslesen und beispielsweise zur Verschlüsselung benutzen.

Der Quantenzufallsgenerator 1400 kann weiterhin einen Temperatursensor oder andere Sensoren umfassen kann, mit denen der Watchdog 1404.5 oder ein anderer Vorrichtungsteil des Quantenzufallsgenerators 1400, ggf. mittels des ADC 1403 oder eines anderen Analog-zu-Digital-Wandlers und/oder anderer Vorrichtungsteile wie Sensorverstärker und/oder Filter, physikalische Parameter der Umgebung des Quantenzufallsgenerators 1400 wie beispielsweise die Temperatur überwacht und Gegenmaßnahmen einleitet, wenn ein Wert eines solchen physikalischen Parameters außerhalb eines vorbestimmten Wertebereichs liegt. Solche Gegenmaßnahmen können Signalisierungen an andere Vorrichtungen, beispielsweise über den internen Datenbus 1419 oder ein Notlaufbetrieb, z. B. unter Nutzung des PRGNG 1404.6 und des Multiplexers 1404.7 und/oder das Ändern interner Betriebsparameter, wie die Spannungspegel der interner Versorgungsspannungen, z. B. mittels des Spannungswandlers 1408 und/oder das Abschalten der Zufallszahlengenerierung etc. sein. Hierdurch werden Side-Channels zur Beeinflussung des Quantenzufallsgenerators 1400 geschlossen.

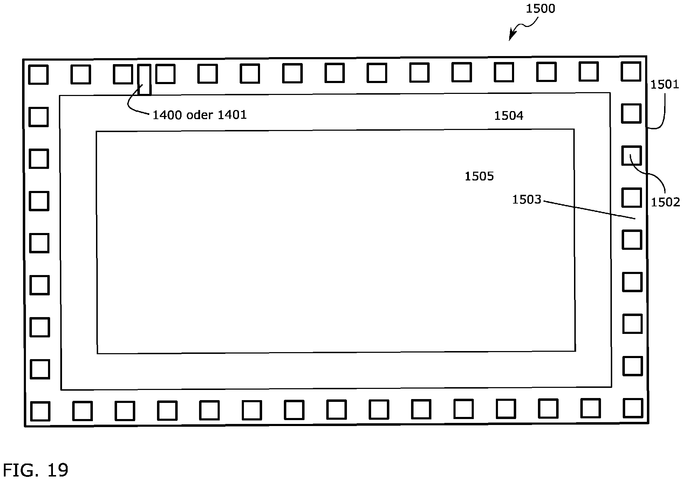

Figur 19 zeigt eine schematische Darstellung eines beispielhaften Layouts einer integrierten elektronischen Schaltung 1500 mit einem beschriebenen iQRNG 1200 im Pad-Rahmen 1503 in der Aufsicht. Die integrierte elektronische Schaltung 1500, beispielsweise ein Mikrocontroller, weist einen inneren Bereich 1505 auf, in dem sich die wesentlichen Unterschaltkreise der integrierten elektronischen Schaltung 1500 befinden. Typischerweise ist der innere Bereich 1505 von einem Verdrahtungsbereich 1504 umgeben, in dem vor allem Versorgungsspannungsleitungen, Datenbusleitungen und andere Leitungen geführt werden können.

Der Verdrahtungsbereich 1504 und der innere Bereich 1505 der integrierten elektronischen Schaltung 1500 sind typischerweise von dem Pad-Rahmen 1503 (auch als Pad-Rand bezeichnet) umgeben, der die Anschluss-Pads 1502 (Anschlussflächen) für die elektrischen Bondverbindungen oder anderen elektrischen Anschlussverbindungen umfasst.

Vorzugsweise kann ein beschriebener iQRNG 1200 bzw. ein entsprechender Quantenzufallsgenerator 1400, wie er beispielsweise in der Figur 18 gezeigt ist, ganz oder zumindest in wesentlichen Teilen im Pad-Rahmen 1503 platziert werden, da die Lücken zwischen den einzelnen Anschluss-Pads 1502 oft nicht mit elektronischen Schaltungsteilen gefüllt sind. Diese Lücken müssen bei der Herstellung der integrierten elektronischen Schaltung 1500 jedoch dennoch mitprozessiert werden und verursachen daher unnötige Herstellungskosten. Eine Platzierung von beschriebenen iQRNG 1200 bzw. entsprechenden Quantenzufallsgeneratoren 1400 ganz oder zumindest in wesentlichen Teilen im Pad-Rahmen 1503 reduziert daher die Zusatzkosten für deren Bereitstellung signifikant.

Insbesondere können bevorzugt zumindest die Photonenquelle 1120 und der Einzelphotonendetektor 1130 (Entropiequelle 1401) im Pad-Rahmen 1503 zwischen zwei Anschluss-Pads 1502 platziert werden. Weiterhin können ein ADC 1403, ein Spannungswandler 1408 zur Energieversorgung der Entropiequelle 1403, ein Pulsverlängerungsschaltung 1406 und/oder Analogteile eines beschriebenen Quantenzufallsgenerators 1400 (z. B. ein Verstärker) ebenfalls im Pad-Rahmen 1503 zwischen zwei Anschluss-Pads 1502 platziert werden.

### Bezugszeichenliste (auszugsweise)

- 1010: Trägersubstrat
- 1022: erstes Gebiet (z. B. NBL)
- 1032: zweites Gebiet (z. B. PBL)
- 1040: epitaktische Schicht
- 1050: erster p-n-Übergang (z. B. oberer p-n-Übergang einer Doppelstruktur)
- 1052: zweiter p-n-Übergang (z. B. unterer p-n-Übergang einer Doppelstruktur)
- 1110: Substrat
- 1120: Photonenquelle (z. B. Einzelphotonenquelle, SPS)
- 1122: Kathode (n⁺, Photonenquelle)
- 1124: Anode (p⁺, Photonenquelle)
- 1128: Photonen
- 1130: Einzelphotonendetektor (z. B. Einzelphotonen-Lawinendiode, SPAD)
- 1132: Kathode (n⁺, Einzelphotonendetektor)
- 1134: Anode (p⁺, Einzelphotonendetektor)
- 1150: lichtblockierende Schicht (engl. "light blocking layer")
- 1152: Mittel zur elektronischen Erfassung
- 1154: Mittel zur elektronischen Nachbearbeitung
- 1200: iQRNG
- 1400: Quantenzufallsgenerator (z. B auf einem iQRNG basierend)
- 1401: Entropiequelle (z. B. iQRNG)
- 1403: Analog-zu-Digital-Wandler (engl. "Analog-to-Digital Converter, ADC")
- 1404.3: Zeit-zu-Pseudozufallszahl-Wandler (engl. "Time-to-Pseudo-Random-Number Converter, TPRC")
- 1404.4: Entropieextraktion
- 1404.5: Watchdog
- 1404.6: Pseudo-Zufallszahlengenerator (engl. "Pseudo-Random-Number-Generator, PRNG", z. B. linear rückgekoppeltes Schieberegister)
- 1404.7: Signal-Multiplexer
- 1404.8: Finite-State-Machine (FSM)
- 1404.9: flüchtiger Speicher (RAM) / FIFO-Speicher (First In - First Out)
- 1404.10: Finish-Flag
- 1405: Spannungssignal (Entropiequelle)
- 1406: Pulsverlängerungsschaltung (z. B. Monoflop, MF)
- 1407: Ausgangssignal (ADC)
- 1408: Spannungswandler
- 1410: Ausgangssignal (TPRC)
- 1411: Ausgang (Entropieextraktion)
- 1412: Seed-Wert S
- 1413: Spannungsmonitor
- 1414: digitale Ein-Ausgabe-Signalleitung(en)
- 1415: einsynchronisiertes Spannungssignal (z. B. Puls mit einer Mindestlänge)
- 1416: Selektionssignal
- 1417: Pseudozufallssignalleitung
- 1418: Quantenzufallsdatenwörter
- 1419: interner Datenbus
- 1420: Interrupt-Signal
- 1421: Spannungswandlerleitung
- 1430: Korrelationssignal (optional)

- 1500: elektronische Schaltung (engl. "Integrated Circuit, IC")
- 1501: Halbleiter-Die
- 1502: Anschluss-Pads (Anschlussflächen)
- 1503: Pad-Rahmen
- 1504: Verdrahtungsbereich
- 1505: innerer Bereich

- NBL: tiefliegende n-Schicht (engl. "n-type buried layer")
- PBL: tiefliegende p-Schicht (engl. "p-type buried layer")
- H(V)PW: Hochvolt-p-Wanne (engl. "high-voltage p-type well")
- H(V)NW: Hochvolt-n-Wanne (engl. "high-voltage n-type well")
- PW: p-Wanne (engl. "p-type well")
- PBODY: p-dotierter Bereich (engl. "p-type body")
- NEPI: schwach n-dotiertes bzw. (annähernd) intrinsisches epitaktisches Gebiet
- MET1, MET2: Metallisierung
- CONT: Kontakt
- STI: Isolationsgebiet (engl. "shallow trench isolation")
- poly: Polysilizium-Schicht
- P⁺: p⁺-Gebiet
- N⁺: n⁺-Gebiet

- VDD: positive Versorgungsspannungsleitung
- GND: Bezugspotentialleitung
- V_{ENT1}: erste Versorgungsspannungsleitung (Entropiequelle)
- V_{ENT2}: zweite Versorgungsspannungsleitung (Entropiequelle)
- V_{REF}: Referenzspannungsleitung (ADC)
- RN: Zufallszahl (z. B. 1-bit Zufallszahl)
- PRN: Pseudozufallszahl

- S: Oberfläche (Trägersubstrat, z. B. eines BCD-Substrats)
- O: Oberfläche (Substrat, z. B. ein BCD-Substrat)
- R: radiale Symmetrieachse

## Patentansprüche

1. Verschlüsselungs- und Authentifizierungs-Kommunikationsvorrichtung zum Herstellen einer sicheren Kommunikationsverbindung für Daten, die über ein Kommunikationsnetz zwischen einem von mehreren entfernten Rechnersystemen und einem Rechnersystem eines Benutzers ausgetauscht werden, wobei die Vorrichtung umfasst:
Computerverarbeitungsmittel, wobei die Computerverarbeitungsmittel den Aufbau der sicheren Kommunikationsverbindung steuern;
eine Verschlüsselungseinrichtung, wobei die Verschlüsselungseinrichtung elektrisch mit der Computerverarbeitungseinrichtung verbunden ist, wobei die Verschlüsselungseinrichtung Daten mittels Zufallszahlen eines Quantenzufallsgenerators verschlüsselt, die von dem Computersystem des Benutzers an eines der mehreren entfernten Computersysteme übertragen werden, und Daten entschlüsselt, die von einem der mehreren entfernten Computersysteme durch das Computersystem des Benutzers empfangen werden;
Authentifizierungsmittel, wobei die Authentifizierungsmittel elektrisch mit den Computerverarbeitungsmitteln verbunden sind und die Authentifizierungsmittel gegenüber einem der mehreren entfernten Computersysteme bestätigen, dass das Gerät autorisiert ist;
Netzwerkschnittstellenmittel, wobei die Netzwerkschnittstellenmittel elektrisch mit den Computerverarbeitungsmitteln verbunden sind, wobei die Netzwerkschnittstellenmittel eine mit dem Kommunikationsnetz kompatible Datenschnittstelle einrichten, um der Vorrichtung zu ermöglichen, Daten über das Kommunikationsnetz zu senden und zu empfangen,
**dadurch gekennzeichnet, dass**
der Quantenzufallsgenerator eine Entropiequelle umfasst,
die Entropiequelle monolithisch in einem Halbleitersubstrat mit einer Oberfläche ausgeführt ist,
die Entropiequelle eine Photonenquelle umfasst, die dazu eingerichtet ist, bei Bestromung Photonen auszusenden,
die Entropiequelle einen Einzelphotonendetektor umfasst, der dazu eingerichtet ist, die Photonen der Photonenquelle zu detektieren und ein Entropiequellenausgangssignal zu erzeugen,
die Photonenquelle zwischen der Oberfläche des Halbleitersubstrats und dem Einzelphotonendetektor angeordnet ist oder der Einzelphotonendetektor zwischen der Oberfläche des Halbleitersubstrats und der Photonenquelle angeordnet ist,
die Photonenquelle und der Einzelphotonendetektor der monolithischen Entropiequelle vertikal übereinander angeordnet sind, und
der Quantenzufallsgenerator Mittel zur Erzeugung einer oder mehrerer Quantenzufallszahlen in Abhängigkeit von dem Entropiequellenausgangssignal aufweist.

2. Vorrichtung nach Anspruch 1, wobei die Authentifizierungsmittel ferner Mittel zur Authentifizierung des Benutzers gegenüber einem der mehreren entfernten Computersysteme umfassen.

3. Vorrichtung nach Anspruch 2, ferner Dateneingabemittel umfassend, wobei die Dateneingabemittel elektrisch mit den Computerverarbeitungsmitteln verbunden sind, wobei die Dateneingabemittel es dem Benutzer ermöglichen, einen Identifikationsindikator in die Vorrichtung einzugeben, wobei die Benutzerauthentifizierungsmittel elektrisch mit dem Identifikationsindikator verbunden sind und den Benutzer damit entsprechend zu einem der entfernten Computersysteme autorisieren..

4. Vorrichtung nach Anspruch 3, wobei das Dateneingabemittel ein Tastenfeld umfasst, über das der Benutzer den Identifikationsindikator manuell eingibt, wobei das Tastenfeld vorzugweise in das kompakte Gehäuse der Vorrichtung integriert ist.

5. Vorrichtung nach Anspruch 3, wobei das Dateneingabemittel eine Smartcard und eine Smartcard-Schnittstelle umfasst und das Gehäuse der Vorrichtung eine Smartcard-Aufnahme enthält, wobei der Benutzer die Smartcard in die Smartcard-Aufnahme einführt und der Identifikationsindikator automatisch von der Smartcard gelesen und der Vorrichtung über die Smartcard-Schnittstelle, die operativ mit dem Computerverarbeitungsmittel verbunden ist, präsentiert wird.

6. Vorrichtung nach Anspruch einem der Ansprüche 3 bis 5, ferner eine Anzeigeeinrichtung umfassend, wobei die Anzeigeeinrichtung betriebsmäßig mit der Computerverarbeitungseinrichtung gekoppelt ist und die Anzeigeeinrichtung den Benutzer auffordert, den Identifikationsindikator über die Dateneingabeeinrichtung einzugeben.

7. Vorrichtung nach Anspruch 6, wobei die Anzeigeeinrichtung eine Flüssigkristallmatrixanzeige umfasst, wobei die Flüssigkristallmatrixanzeige vorzugsweise integral an dem kompakten Gehäuse der Vorrichtung angebracht ist.

8. Vorrichtung nach einem der vorhergehenden Ansprüche, wobei die Authentifizierungsmittel ferner Mittel zur Authentifizierung bzw. Verifizierung der Integrität der über das Kommunikationsnetz übertragenen und empfangenen Daten umfassen.

9. Vorrichtung nach einem der vorhergehenden Ansprüche, wobei das Kommunikationsnetz ein Datenprotokoll nach IEEE 802 Standard für die Datenkommunikation von über das Kommunikationsnetz gesendete und empfangene Daten einrichtet, wobei das Kommunikationsnetz vorzugsweise ein lokales Netz (LAN) ist und die Netzschnittstelle eine LAN-kompatible Datenschnittstelle für von über das Kommunikationsnetz übertragene und empfangene Daten einrichtet.

10. Vorrichtung nach einem der vorhergehenden Ansprüche, wobei die Verschlüsselungseinrichtung und die Authentifizierungseinrichtung ferner eine Smartcard und eine Smartcard-Schnittstelle umfassen und das Gehäuse der Vorrichtung eine Smartcard-Aufnahme enthält, wobei die Smartcard-Schnittstelle elektrisch mit der Computerverarbeitungseinrichtung verbunden ist und die Smartcard in die Smartcard-Aufnahme eingeführt wird, wobei die Smartcard einen von mehreren Verschlüsselungs- und Authentifizierungsalgorithmen enthält und die Verschlüsselungs- und Authentifizierungsfunktionen in operativer Zusammenarbeit mit der Computerverarbeitungseinrichtung ausführt.

11. Vorrichtung nach Anspruch 10, wobei die Smartcard den Quantenzufallsgenerator umfasst.

12. Vorrichtung nach einem der vorhergehenden Ansprüche, wobei die Netzwerkschnittstellenmittel mindestens einen ersten und einen zweiten Anschluss umfassen, wobei der erste Anschluss elektrisch mit dem Kommunikationsnetz und der zweite Anschluss elektrisch mit dem Computersystem des Benutzers verbunden ist.

13. Vorrichtung nach Anspruch einem der vorhergehenden Ansprüche, die ferner mindestens einen ersten und einen zweiten Anzeiger umfasst, wobei der erste und der zweite Anzeiger elektrisch mit den Computerverarbeitungsmitteln verbunden sind und den Betriebszustand der Vorrichtung anzeigen.

14. Vorrichtung nach Anspruch 13, wobei die Netzwerkschnittstellenmittel mindestens einen Verbinder umfassen, der über ein Kabel mit der Vorrichtung verbunden ist, und das Gehäuse ferner einen Schlitz umfasst, der in mindestens einer Seite des Gehäuses ausgebildet ist, wobei der Schlitz so ausgebildet ist, dass er gegenüberliegende Seiten umfasst, wobei mindestens eine der gegenüberliegenden Seiten eine Vielzahl von Vorsprüngen umfasst, wobei das Kabel in den Schlitz gefaltet ist und durch die Vielzahl von Vorsprüngen in dem Schlitz gehalten wird, wenn die Vorrichtung nicht in Gebrauch ist.

15. Vorrichtung nach einem der vorhergehenden Ansprüche, wobei das Computerverarbeitungsmittel selektiv den Betrieb der Vorrichtung in einem Online-Modus oder einem Offline-Modus ermöglicht, wobei der Online-Modus es ermöglicht, dass die Daten von dem Computersystem des Benutzers, sobald sie über das Verschlüsselungsmittel verschlüsselt sind, zu dem Netzwerkschnittstellenmittel zur Übertragung auf dem Kommunikationsnetzwerk übertragen werden, und wobei der Online-Modus es auch ermöglicht, dass die Daten von einem der mehreren entfernten Computersysteme, sobald sie über das Verschlüsselungsmittel entschlüsselt sind, zu dem Computersystem des Benutzers übertragen werden, zu dem Computersystem des Benutzers übertragen werden, wobei die Offline-Betriebsart ermöglicht, dass die Daten von dem Computersystem des Benutzers, nachdem sie über die Verschlüsselungsmittel verschlüsselt wurden, zu dem Computersystem des Benutzers zur Speicherung und anschließenden Übertragung über das Kommunikationsnetz zurückgeführt werden, und wobei die Offline-Betriebsart auch ermöglicht, dass die Daten von einem der mehreren entfernten Computersysteme direkt zu dem Computersystem des Benutzers zur Speicherung und anschließenden Entschlüsselung über die Verschlüsselungsmittel übertragen werden.
